(19) Europäisches Patentamt
European Patent Office
Office européen des brevets

(11) **EP 4 336 765 A1**

(12) **EUROPEAN PATENT APPLICATION**
published in accordance with Art. 153(4) EPC

(43) Date of publication:
**13.03.2024 Bulletin 2024/11**

(21) Application number: **22831746.7**

(22) Date of filing: **17.06.2022**

(51) International Patent Classification (IPC):
**H04L 5/00** (2006.01)　　　**H04W 72/04** (2023.01)

(52) Cooperative Patent Classification (CPC):
**H04L 5/00; H04W 72/04**

(86) International application number:
**PCT/CN2022/099639**

(87) International publication number:
**WO 2023/273928 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021　CN 202110745712
03.11.2021　CN 202111296615**

(71) Applicant: **Huawei Technologies Co., Ltd.
Longgang
Shenzhen, Guangdong 518129 (CN)**

(72) Inventors:
• **LIU, Rongkuan
Shenzhen, Guangdong 518129 (CN)**
• **ZHANG, Jiayin
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS, AND COMPUTER READABLE STORAGE MEDIUM**

(57)　This application provides a communication method and apparatus, and a computer-readable storage medium. The communication method includes: receiving first indication information from a network device, where the first indication information is used to determine a frequency-domain position to which a physical uplink control channel PUCCH resource is mapped; and sending information to the network device in first duration by using the PUCCH resource, where frequency-domain positions to which the PUCCH resource is mapped in at least two consecutive time units in the first duration are different. According to the technical solutions provided in this application, a limitation of a frequency-hopping gain of the PUCCH resource can be reduced, and coverage can be enhanced.

```
┌──────────────┐                              ┌───────────────┐
│Network device│                              │Terminal device│
└──────────────┘                              └───────────────┘
        │  S601: First indication information used to determine a │
        │         frequency-domain position to which a PUCCH      │
        │                    resource is mapped                   │
        │ ──────────────────────────────────────────────────────►│
        │                                                         │
        │  S602: Send information in first duration by using the  │
        │  PUCCH resource, where frequency-domain positions to    │
        │  which the PUCCH resource is mapped in at least two      │
        │  consecutive time units in the first duration are different │
        │ ◄────────────────────────────────────────────────────── │
        │                                                         │
```

FIG. 6

**Description**

This application claims priority to Chinese Patent Application No. 202110745712.6, filed with the China National Intellectual Property Administration on June 30, 2021 and entitled "COMMUNICATION METHOD AND APPARATUS, AND COMPUTER-READABLE STORAGE MEDIUM", and to Chinese Patent Application No. 202111296615.X, filed with the China National Intellectual Property Administration on November 3, 2021 and entitled "COMMUNICATION METHOD AND APPARATUS, AND COMPUTER-READABLE STORAGE MEDIUM", which are incorporated herein by reference in their entireties.

**TECHNICAL FIELD**

This application relates to the field of wireless communication technologies, and in particular, to a communication method and apparatus, and a computer-readable storage medium.

**BACKGROUND**

A physical uplink control channel (physical uplink control channel, PUCCH) is an uplink physical channel in a new radio (new radio, NR) system, and is used to carry uplink control information (uplink control information, UCI).

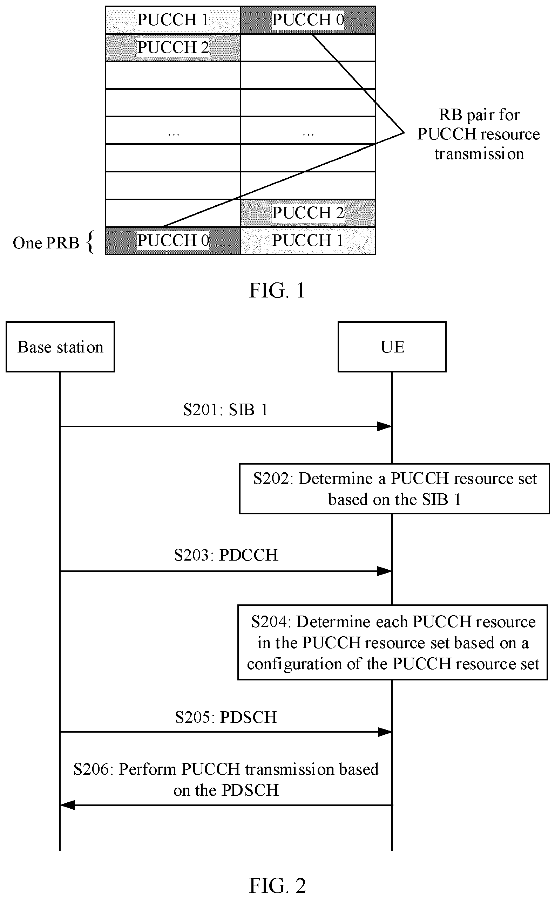

In an uplink subframe, to maximize frequency diversity of control signaling, PUCCHs are located on both high and low sides of a bandwidth part (bandwidth part, BWP), or are located at edges of a frequency band. The PUCCH uses a physical resource block (physical resource block, PRB) pair as a basic unit, that is, two PRBs of the PRB pair are located at the edges of the frequency band. For example, FIG. 1 is a schematic diagram of positions of a PRB pair according to an embodiment of this application. As shown in FIG. 1, two PRBs corresponding to each of a PUCCH 0 resource, a PUCCH 1 resource, and a PUCCH 2 resource are respectively located at edges of the BWP.

Before a radio resource control (radio resource control, RRC) layer is established, a base station cannot configure a dedicated PUCCH resource for UE by using signaling, and the PUCCH resource is predefined in a protocol. A specific manner is as follows: The base station configures, by using a system information block 1 (system information block 1, SIB 1), a common PUCCH resource set for all UEs before RRC establishment, and a PUCCH resource in the PUCCH resource set needs to carry only acknowledgment information of one or two bits (bits), that is, include only a PUCCH format 0 and a PUCCH format 1. Therefore, transmission of each PUCCH resource occupies one physical resource block (physical resource block, PRB). As shown in FIG. 1, frequency-domain frequency-hopping distances of some PUCCH resources are different. For example, a frequency-domain frequency-hopping distance of the PUCCH 0 is greater than a frequency-domain frequency-hopping distance of the PUCCH 2. A PUCCH resource whose frequency-domain position is farther away from the edge of the BWP has a shorter frequency-domain frequency-hopping distance, which indicates a smaller frequency-hopping gain. As a result, coverage deterioration occurs to some extent. Therefore, how to reduce a limitation of a frequency-hopping gain of a PUCCH resource and enhance coverage is a problem to be urgently resolved.

**SUMMARY**

Embodiments of this application provide a communication method and apparatus, and a computer-readable storage medium, to reduce a limitation of a frequency-hopping gain of a PUCCH resource and enhance coverage.

According to a first aspect, this application provides a communication method. The communication method may be applied to a terminal device, or may be applied to a module (for example, a chip) in the terminal device. An example in which the communication method is applied to a terminal is used below for description. The method may include: receiving first indication information from a network device, where the first indication information is used to determine a frequency-domain position to which a physical uplink control channel PUCCH resource is mapped; and sending information to the network device in first duration by using the PUCCH resource, where frequency-domain positions to which the PUCCH resource is mapped in at least two consecutive time units in the first duration are different.

In the solution provided in this application, in a specific continuous time period when the terminal device transmits information by using a PUCCH, the frequency-domain position to which the PUCCH resource is mapped changes with time. This is different from that in the conventional technology, in which the frequency-domain position to which the PUCCH resource is mapped remains unchanged in each slot of PUCCH transmission. In this embodiment of this application, the frequency-domain position to which the PUCCH resource is mapped changes, so that frequency-domain frequency-hopping distances of all PUCCH resources can be the same on average in a time dimension. In this way, frequency-hopping gains are the same on average in the time dimension. This can reduce a limitation of a frequency-hopping gain of the PUCCH resource and enhance coverage.

In a possible implementation, if the network device does not configure, for the terminal device, a frequency-domain position to which a dedicated PUCCH resource is mapped, the frequency-domain position to which the PUCCH resource is mapped is determined based on a PRB offset and a set of initial cyclic shift indexes.

In the solution provided in this application, when the terminal device accesses a network, the network device may configure the dedicated PUCCH resource for the terminal device by using dedicated (dedicated) RRC signaling. However, before RRC establishment, the network device cannot configure the dedicated PUCCH resource for the terminal device by using the dedicated RRC signaling, and the PUCCH resource is predefined in a protocol. Specifically, the network device configures, by using a SIB 1, a common PUCCH resource set for all terminal devices before RRC establishment. The terminal device may determine, based on the PRB offset and the set of initial cyclic shift indexes that are in the resource set, the frequency-domain position to which the PUCCH resource is mapped. In a specific continuous time period during PUCCH transmission of the terminal device, a frequency-domain position to which a PUCCH resource for use is mapped changes with time, so that frequency-domain frequency-hopping distances of all PUCCH resources can be the same on average in the time dimension. In this way, frequency-hopping gains are the same on average in the time dimension. This can reduce the limitation of the frequency-hopping gain of the PUCCH resource and enhance coverage.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes: if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, the start PRB index of the PUCCH resource in the second mapping position is $N_{BWP}^{size} - (RB_{BWP}^{offset} + \lfloor r_{PUCCH}/N_{CS} \rfloor + 1) \cdot N$, and the initial cyclic shift index of the PUCCH resource is $r_{\text{PUCCH}}$mod $N_{CS}$; or if $\lfloor r_{\text{PUCCH}}/8 \rfloor = 1$, the start PRB index of the PUCCH resource in the first mapping position is $N_{BWP}^{size} - (RB_{BWP}^{offset} + \lfloor (r_{\text{PUCCH}} - 8)/N_{CS} \rfloor + 1) \cdot N$, the start PRB index of the PUCCH resource in the second mapping position is $(RB_{BWP}^{offset} + \lfloor (r_{\text{PUCCH}} - 8)/N_{CS} \rfloor) \cdot N$, and the initial cyclic shift index of the PUCCH resource is $(r_{\text{PUCCH}} - 8) \bmod N_{CS}$. $RB_{BWP}^{offset}$ is the PRB offset, $r_{PUCCH}$ is an index of the PUCCH resource,

$N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

Before RRC establishment, the network device cannot configure the dedicated PUCCH resource for UE by using signaling, and the PUCCH resource is predefined in a protocol. A specific manner is as follows: The network device configures, by using the SIB 1, the common PUCCH resource set for all terminal devices before RRC establishment, and a PUCCH resource in the PUCCH resource set needs to carry only acknowledgment information of one or two bits (bits), that is, include only a PUCCH format 0 and a PUCCH format 1. Therefore, transmission of each PUCCH resource occupies one PRB. In the solution provided in this application, transmission of each PUCCH resource may occupy one or a plurality of PRBs, and a first possible determining manner in which the terminal device determines the frequency-domain position to which the PUCCH resource is mapped is: determining the start PRB index of the PUCCH resource in the first mapping position, the start PRB index of the PUCCH resource in the second mapping position, and the initial cyclic shift index of the PUCCH resource according to the foregoing formula that is different from that in the conventional technology and based on frequency division multiplexing. In this manner of determining a frequency-hopping pattern, a possibility that different PUCCH resources overlap in frequency domain may be reduced. Because transmission of each PUCCH resource occupies a plurality of PRBs, transmission coverage of the PUCCH can be improved when a maximum transmit power and a power spectral density constraint are met.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is

$$\left(RB_{BWP}^{offset} \cdot N\right) mod\ N_{BWP}^{size} + \lfloor r_{PUCCH}/N_{CS}\rfloor \cdot N$$ , the start PRB index of the PUCCH resource in the second mapping position is $N_{BWP}^{size} - \left(RB_{BWP}^{offset} \cdot N\right) mod\ N_{BWP}^{size} - \left(\lfloor r_{PUCCH}/N_{CS}\rfloor + 1\right) \cdot N$ , and the

initial cyclic shift index of the PUCCH resource is $r_{PUCCH}$ mod $N_{CS}$; or

if $\lfloor r_{PUCCH}/8\rfloor = 1$ , the start PRB index of the PUCCH resource in the first mapping position is

$N_{BWP}^{size} - \left(RB_{BWP}^{offset} \cdot N\right) mod\ N_{BWP}^{size} - \left(\lfloor (r_{PUCCH} - 8)/N_{CS}\rfloor + 1\right) \cdot N$ , the start PRB index of the PUCCH resource in the second mapping position is $\left(RB_{BWP}^{offset} \cdot N\right) mod\ N_{BWP}^{size} +$

$\left(\lfloor (r_{PUCCH} - 8)/N_{CS}\rfloor\right) \cdot N$ , and the initial cyclic shift index of the PUCCH resource is $(r_{PUCCH}$ - 8) mod $N_{CS}$,

where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In the solution provided in this application, transmission of each PUCCH resource may occupy one or a plurality of PRBs, and the first possible determining manner in which the terminal device determines the frequency-domain position to which the PUCCH resource is mapped may alternatively be: determining the start PRB index of the PUCCH resource in the first mapping position, the start PRB index of the PUCCH resource in the second mapping position, and the initial cyclic shift index of the PUCCH resource according to a formula that is different from that in the conventional technology. According to $\left(RB_{BWP}^{offset} \cdot N\right) mod\ N_{BWP}^{size}$ , a modulo operation is performed on a result of N times of an RB offset, so that a PUCCH frequency-domain resource index does not exceed a BWP range due to an excessively large RB offset of the PUCCH resource. This can alleviate an RB shortage problem. In addition, more configuration combinations of a PUCCH resource set and N may be added. Because transmission of each PUCCH resource occupies a plurality of PRBs, transmission coverage of the PUCCH can be improved when a maximum transmit power value and a power spectral density constraint are met.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH}/8\rfloor = 0$ , the start PRB index of the PUCCH resource in the first mapping position is $\left(\left(RB_{BWP}^{offset} + \lfloor r_{PUCCH}/N_{CS}\rfloor\right) \cdot N\right) mod\ N_{BWP}^{size}$ , the start PRB index of the PUCCH resource in the second mapping position is $N_{BWP}^{size} - \left(\left(RB_{BWP}^{offset} + \lfloor r_{PUCCH}/N_{CS}\rfloor + 1\right) \cdot N\right) mod\ N_{BWP}^{size}$ , and the initial cyclic shift index of the PUCCH resource is $r_{PUCCH}$ mod $N_{CS}$; or

if $\lfloor r_{PUCCH}/8\rfloor = 1$ , the start PRB index of the PUCCH resource in the first mapping position is

$N_{BWP}^{size} - \left(\left(RB_{BWP}^{offset} + \lfloor (r_{PUCCH} - 8)/N_{CS}\rfloor + 1\right) \cdot N\right) mod\ N_{BWP}^{size}$ , the start PRB index of the PUCCH resource in the second mapping position is $\left(\left(RB_{BWP}^{offset} + \lfloor (r_{PUCCH} - 8)/N_{CS}\rfloor\right) \cdot N\right) mod\ N_{BWP}^{size}$ , and the initial cyclic shift index of the PUCCH resource is $(r_{PUCCH}$ - 8) mod $N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In the solution provided in this application, transmission of each PUCCH resource may occupy one or a plurality of PRBs, and the first possible determining manner in which the terminal device determines the frequency-domain position to which the PUCCH resource is mapped may alternatively be: determining the start PRB index of the PUCCH resource in the first mapping position, the start PRB index of the PUCCH resource in the second mapping position, and the initial cyclic shift index of the PUCCH resource according to the foregoing formula. A modulo position of the calculation formula is adjusted, so that an initial RB position of the PUCCH resource does not exceed the BWP range. This can alleviate an RB shortage problem. In addition, more configuration combinations of a PUCCH resource set and N may be added. Because transmission of each PUCCH resource occupies a plurality of PRBs, transmission coverage of the PUCCH can be improved when a maximum transmit power and a power spectral density constraint are met.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH}/8 \rfloor = 0$, the start PRB index of the PUCCH resource in the first mapping position is

$$\left(\left(RB_{BWP}^{offset} + \lfloor r_{PUCCH}/N_{CS} \rfloor\right) \cdot N\right) \bmod N_{BWP}^{size}$$, the start PRB index of the PUCCH resource in the second mapping position is $\left(N_{BWP}^{size} - \left(RB_{BWP}^{offset} + \lfloor r_{PUCCH}/N_{CS} \rfloor + 1\right) \cdot N\right) \bmod N_{BWP}^{size}$, and the initial cyclic shift index of the PUCCH resource is $r_{PUCCH} \bmod N_{CS}$; or

if $\lfloor r_{PUCCH}/8 \rfloor = 1$, the start PRB index of the PUCCH resource in the first mapping position is

$(N_{BWP}^{size} - (RB_{BWP}^{offset} + \lfloor (r_{PUCCH} - 8)/N_{CS} \rfloor + 1) \cdot N) \bmod N_{BWP}^{size}$, the start PRB index of the PUCCH resource in the second mapping position is $\left(\left(RB_{BWP}^{offset} + \lfloor (r_{PUCCH} - 8)/N_{CS} \rfloor\right) \cdot N\right) \bmod N_{BWP}^{size}$, and the initial cyclic shift index of the PUCCH resource is $(r_{PUCCH} - 8) \bmod N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In the solution provided in this application, transmission of each PUCCH resource may occupy one or a plurality of PRBs, and the first possible determining manner in which the terminal device determines the frequency-domain position to which the PUCCH resource is mapped may alternatively be: determining the start PRB index of the PUCCH resource in the first mapping position, the start PRB index of the PUCCH resource in the second mapping position, and the initial cyclic shift index of the PUCCH resource according to the foregoing formula. A modulo position of the calculation formula is adjusted, so that an initial RB position of the PUCCH resource does not exceed the BWP range. This can alleviate an RB shortage problem. In addition, more configuration combinations of a PUCCH resource set and N may be added. Because transmission of each PUCCH resource occupies a plurality of PRBs, transmission coverage of the PUCCH can be improved when a maximum transmit power and a power spectral density constraint are met.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH}/8 \rfloor = 0$, the start PRB index of the PUCCH resource in the first mapping position is

$RB_{BWP}^{offset} \cdot X + \lfloor r_{PUCCH}/N_{CS} \rfloor \cdot N$ , the start PRB index of the PUCCH resource in the second mapping position is $N_{BWP}^{size} - RB_{BWP}^{offset} \cdot X - (\lfloor r_{PUCCH}/N_{CS} \rfloor + 1) \cdot N$ , and the initial cyclic shift index of the PUCCH resource is $r_{PUCCH}$ mod $N_{CS}$; or

if $\lfloor r_{PUCCH}/8 \rfloor = 1$ , the start PRB index of the PUCCH resource in the first mapping position is $N_{BWP}^{size} - RB_{BWP}^{offset} \cdot X - (\lfloor (r_{PUCCH} - 8)/N_{CS} \rfloor + 1) \cdot N$ , the start PRB index of the PUCCH resource in the second mapping position is $RB_{BWP}^{offset} \cdot X + (\lfloor (r_{PUCCH} - 8)/N_{CS} \rfloor) \cdot N$ , and the initial cyclic shift index of the PUCCH resource is $(r_{PUCCH} - 8)$ mod $N_{CS}$ where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, N is a positive integer greater than or equal to 1, $X = \lfloor \sqrt[q]{N} \rfloor - p$ or $X = \lfloor \sqrt[q]{N} - p \rfloor$ , and p and q are real numbers, or p and q are integers.

In the solution provided in this application, transmission of each PUCCH resource may occupy one or a plurality of PRBs, and the first possible determining manner in which the terminal device determines the frequency-domain position to which the PUCCH resource is mapped may alternatively be: determining the start PRB index of the PUCCH resource in the first mapping position, the start PRB index of the PUCCH resource in the second mapping position, and the initial cyclic shift index of the PUCCH resource according to the foregoing formula. In $RB_{BWP}^{offset} \cdot X, X = \sqrt[q]{N} - p$ . Because a maximum value of N is 16, a scaling degree of the RB offset is restricted by using a formula, and the RB offset does not increase linearly with an increase of N. This can alleviate an RB shortage problem. In addition, more configuration combinations of a PUCCH resource set and N may be added. $\sqrt[q]{N}$ or $\sqrt[q]{N} - p$ may alternatively be an irrational number. When q is an integer greater than or equal to 2, as N increases, a change rate of increase of $\sqrt[q]{N}$ or $\sqrt[q]{N} - p$ decreases, and a change rate of scaling of the PRB offset decreases, so that the RB shortage problem can be alleviated. Because transmission of each PUCCH resource occupies a plurality of PRBs, transmission coverage of the PUCCH can be improved when a maximum transmit power and a power spectral density constraint are met.

In a possible implementation, X is any one of the following: $X = \lfloor \sqrt[2]{N} \rfloor$ , $X = \lfloor \sqrt[3]{N} \rfloor$ , ..., and $X = \lfloor \sqrt[n-1]{N} \rfloor$ .

In a possible implementation, X is any one of the following: $X = \lfloor \sqrt[2]{N} \rfloor - 1$ , $X = \lfloor \sqrt[3]{N} \rfloor - 1$ , ..., and $X = \lfloor \sqrt[n-1]{N} \rfloor - 1$ .

In a possible implementation, X is any one of the following: $X = \lfloor \sqrt[2]{N} - 1 \rfloor$ , $X = \lfloor \sqrt[3]{N} - 1 \rfloor$ , ..., and $X = \lfloor \sqrt[n-1]{N} - 1 \rfloor$ .

In a possible implementation, $X = \lfloor \frac{N}{4} \rfloor$ .

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH1}/8 \rfloor = 0$ and $r_{PUCCH1} < \lceil 8/N_{CS} \rceil$ , a start PRB index of a first PUCCH resource in a first mapping position is $(RB_{BWP}^{offset} + \lfloor r_{PUCCH1}/N_{CS} \rfloor) \cdot N$, a start PRB index of the first PUCCH resource in a second mapping position is $N_{BWP}^{size} - (RB_{BWP}^{offset} + \lfloor r_{PUCCH1}/N_{CS} \rfloor + 1) \cdot N$, and an initial cyclic shift index of the first PUCCH resource is $r_{PUCCH1}$ mod $N_{CS}$, where the first PUCCH resource is a PUCCH resource closest to edges on both sides of a bandwidth part BWP; or

if $\lfloor r_{PUCCH1}/8 \rfloor = 1$ and $r_{PUCCH1}$ $r_{PUCCH1} - 8 < \lceil 8/N_{CS} \rceil$, a start PRB index of a first PUCCH resource in a first mapping position is $N_{BWP}^{size} - (RB_{BWP}^{offset} + \lfloor (r_{PUCCH1} - 8)/N_{CS} \rfloor + 1) \cdot N$, a start PRB index of the first PUCCH resource in a second mapping position is ( $RB_{BWP}^{offset} + \lfloor (r_{PUCCH1} - 8)/N_{CS} \rfloor) \cdot N$, and an initial cyclic shift index of the first PUCCH resource is $(r_{PUCCH1} - 8)$ mod $N_{CS}$; and

if $\lfloor r_{PUCCH2}/8 \rfloor = 0$ and $r_{PUCCH2} \geq \lceil 8/N_{CS} \rceil$, a start PRB index of a second PUCCH resource in a first mapping position is $(RB_{BWP}^{offset} + \lfloor r_{PUCCH2}/N_{CS} \rfloor) \cdot N$, a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$, and an initial cyclic shift index of the second PUCCH resource is $r_{PUCCH2}$ mod $N_{CS}$, where the second PUCCH resource is a PUCCH resource other than the first PUCCH resource in a PUCCH resource set, each PUCCH resource in the second PUCCH resource has a same frequency-domain frequency-hopping distance, and the PUCCH resource set includes a plurality of PUCCH resources; or

if $\lfloor r_{PUCCH2}/8 \rfloor = 1$ and $r_{PUCCH2} - 8 \geq \lceil 8/N_{CS} \rceil$, a start PRB index of a second PUCCH resource in a first mapping position is $N_{BWP}^{size} - (RB_{BWP}^{offset} + \lfloor (r_{PUCCH2} - 8)/N_{CS} \rfloor + 1) \cdot N$, a start PRB index of the second PUCCH resource in a second mapping position is ( $RB_{BWP}^{offset} + 6 - N_{CS} - \lfloor (r_{PUCCH2} - 8)/N_{CS} \rfloor) \cdot N$, and an initial cyclic shift index of the second PUCCH resource is $(r_{PUCCH2} - 8)$ mod $N_{CS}$, where $RB_{BWP}^{offset}$ is the PRB offset, $r_{PUCCH1}$ is an index of the first PUCCH resource, $N_{CS}$ is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than or equal to 1.

Before RRC establishment, the network device cannot configure the dedicated PUCCH resource for UE by using signaling, and the PUCCH resource is predefined in a protocol. A specific manner is as follows: The network device configures, by using the SIB 1, the common PUCCH resource set for all terminal devices before RRC establishment, and a PUCCH resource in the PUCCH resource set needs to carry only acknowledgment information of one or two bits (bits), that is, include only a PUCCH format 0 and a PUCCH format 1. Therefore, transmission of each PUCCH resource occupies one PRB. In the solution provided in this application, transmission of each PUCCH resource may occupy one or a plurality of PRBs, and a second possible determining manner in which the terminal device determines the frequency-domain position to which the PUCCH resource is mapped is: determining the start PRB index of the PUCCH resource in the first mapping position, the start PRB index of the PUCCH resource in the second mapping position, and the initial cyclic shift index of the PUCCH resource according to the foregoing formula. Because transmission of each PUCCH resource occupies a plurality of PRBs, transmission coverage of the PUCCH can be improved when a maximum transmit power and a power spectral density constraint are met. In addition, the first PUCCH resource is closest to edges on both sides of the BWP, so that a maximum coverage capability is ensured. Each PUCCH resource of the second PUCCH resource has a same frequency-domain position distance, so that each PUCCH resource of the second PUCCH resource has a same frequency-hopping gain. This can reduce coverage degradation.

In a possible implementation, that frequency-domain positions to which the PUCCH resource is mapped in at least two consecutive time units in the first duration are different includes: In the at least two consecutive time units, if

$\lfloor r_{\text{PUCCH}}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{\text{PUCCH}}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes. Alternatively, in the at least two consecutive time units, if $\lfloor r_{\text{PUCCH}}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{\text{PUCCH}}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

In the solution provided in this application, after the frequency-domain position to which the PUCCH resource is mapped is determined in the first manner in which the terminal device determines the frequency-domain position to which the PUCCH resource is mapped, the terminal device may send information to the network device within specific duration by using the PUCCH resource. In at least two consecutive time units in the duration, the frequency-domain position to which the PUCCH resource is mapped may change with a time unit. The start PRB index of the PUCCH resource in the first mapping position and the start PRB index of the PUCCH resource in the second mapping position may be cyclically shifted by N PRBs from both sides of the BWP to the middle of the BWP, or may be cyclically shifted by N PRBs from the middle of the BWP to both sides of the BWP. The frequency-domain position to which the PUCCH resource is mapped changes, so that the frequency-domain frequency-hopping distances of all PUCCH resources can be the same on average in the time dimension. In this way, the frequency-hopping gains are the same on average in the time dimension. This can reduce the limitation of the frequency-hopping gain of the PUCCH resource and enhance coverage.

In a possible implementation, that frequency-domain positions to which the PUCCH resource is mapped in at least two consecutive time units in the first duration are different includes: In an M$^{th}$ time unit in the at least two consecutive time units, if $\lfloor r_{\text{PUCCH}}/8 \rfloor = 0$, the start PRB index of the PUCCH resource in the first mapping position is

$(RB_{BWP}^{offset} + \lfloor r_{PUCCH}/N_{CS} \rfloor + ((M - 1 + K)\, mod\, \lceil 8/N_{CS} \rceil)) \cdot N$, and the start PRB index of the PUCCH resource in the second mapping position is

$N_{BWP}^{size} - \left(RB_{BWP}^{offset} + \lfloor r_{PUCCH}/N_{CS} \rfloor + 1 + ((M - 1 + K)\, mod\, \lceil 8/N_{CS} \rceil)\right) \cdot$ N; or if

$\lfloor r_{\text{PUCCH}}/8 \rfloor = 1$, the start PRB index of the PUCCH resource in the first mapping position is

$N_{BWP}^{size} - (RB_{BWP}^{offset} + \lfloor (r_{PUCCH} - 8)/N_{CS} \rfloor + 1 + ((M - 1 + K)\, mod\, \lceil 8/N_{CS} \rceil)) \cdot N$, and the start PRB index of the PUCCH resource in the second mapping position is ( $RB_{BWP}^{offset} +$

$\lfloor (r_{PUCCH} - 8)/N_{CS} \rfloor + ((M - 1 + K)\, mod\, \lceil 8/N_{CS} \rceil)) \cdot N$, where K is a fixed time-domain cyclic offset, and M is an integer greater than or equal to 1.

In the solution provided in this application, after the frequency-domain position to which the PUCCH resource is mapped is determined in the first manner in which the terminal device determines the frequency-domain position to which the PUCCH resource is mapped, the terminal device may send information to the network device within specific duration by using the PUCCH resource. In at least two consecutive time units in the duration, the frequency-domain position to which the PUCCH resource is mapped may change with a time unit. The start PRB index of the PUCCH resource in the first mapping position and the start PRB index of the PUCCH resource in the second mapping position may be cyclically shifted by N PRBs from both sides of the BWP to the middle of the BWP, or may be cyclically shifted by N PRBs from the middle of the BWP to both sides of the BWP. The frequency-domain position to which the PUCCH resource is mapped changes, so that the frequency-domain frequency-hopping distances of all PUCCH resources can be the same on average in the time dimension. In this way, the frequency-hopping gains are the same on average in the time dimension. This can reduce the limitation of the frequency-hopping gain of the PUCCH resource and enhance coverage.

In a possible implementation, that frequency-domain positions to which the PUCCH resource is mapped in at least two consecutive time units in the first duration are different includes: In the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes.

Alternatively, in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes. $r_{PUCCH1}$ is the index of the first PUCCH resource, and $r_{PUCCH2}$ is an index of the second PUCCH resource.

In the solution provided in this application, after the frequency-domain position to which the PUCCH resource is mapped is determined in the second manner in which the terminal device determines the frequency-domain position to which the PUCCH resource is mapped, the terminal device may send information to the network device within specific duration by using the PUCCH resource. In at least two consecutive time units in the duration, the frequency-domain position to which the PUCCH resource is mapped may change with a time unit. Start PRB indexes of all PUCCH resources in the first mapping position and the start PRB index of the second PUCCH resource in the second mapping position may be cyclically shifted by N PRBs from both sides of the BWP to the middle of the BWP, or may be cyclically shifted by N PRBs from the middle of the BWP to both sides of the BWP. The frequency-domain position to which the PUCCH resource is mapped changes, so that the frequency-domain frequency-hopping distances of all the PUCCH resources can be the same on average in the time dimension. In this way, the frequency-hopping gains are the same on average in the time dimension. This can reduce the limitation of the frequency-hopping gain of the PUCCH resource and enhance coverage.

In a possible implementation, that frequency-domain positions to which the PUCCH resource is mapped in at least two consecutive time units in the first duration are different includes:

In an $M^{\text{th}}$ time unit in the at least two consecutive time units, if $\lfloor r_{\text{PUCCH1}}/8 \rfloor = 0$, the start PRB index of the first PUCCH resource in the first mapping position is ( $RB_{BWP}^{offset} + \lfloor r_{PUCCH1}/N_{CS} \rfloor + ((M - 1 + K) \bmod \lceil 8/N_{CS} \rceil)) \cdot N$, and the start PRB index of the first PUCCH resource in the second mapping position is $N_{BWP}^{size} - \left( RB_{BWP}^{offset} + \lfloor r_{PUCCH1}/N_{CS} \rfloor + 1 + ((M - 1 + K) \bmod \lceil 8/N_{CS} \rceil) \right) \cdot N$; or if $\lfloor r_{\text{PUCCH1}}/8 \rfloor = 1$, the start PRB index of the first PUCCH resource in the first mapping position is $N_{\text{BWP}}^{\text{size}} - (RB_{\text{BWP}}^{\text{offset}} + \lfloor (r_{\text{PUCCH1}} - 8)/N_{\text{CS}} \rfloor + 1 + ((M - 1 + K) \bmod \lceil 8/N_{\text{CS}} \rceil)) \cdot N$, and the start PRB index of the first PUCCH resource in the second mapping position is $(RB_{\text{BWP}}^{\text{offset}} + \lfloor (r_{\text{PUCCH1}} - 8)/N_{\text{CS}} \rfloor + ((M - 1 + K) \bmod \lceil 8/N_{\text{CS}} \rceil)) \cdot N$; and

if $\lfloor r_{PUCCH2}/8 \rfloor = 0$, the start PRB index of the second PUCCH resource in the first mapping position is

$$\left( RB_{BWP}^{offset} + \lfloor r_{PUCCH2}/N_{CS} \rfloor + ((M - 1 + K)mod \left\lceil \frac{8}{N_{CS}} \right\rceil) \right) \cdot N$$, and the start PRB index of the second PUCCH resource in the second mapping position is $N_{BWP}^{size} - (RB_{BWP}^{offset} +$

$7 - N_{CS} - \lfloor r_{PUCCH2}/N_{CS} \rfloor + ((M - 1 + K) \bmod \lceil 8/N_{CS} \rceil)) \cdot N$; or if $\lfloor r_{PUCCH2}/8 \rfloor = 1$, the start PRB index of the second PUCCH resource in the first mapping position is $N_{BWP}^{size} - (RB_{BWP}^{offset} +$

$\lfloor (r_{PUCCH2} - 8)/N_{CS} \rfloor + 1 + ((M - 1 + K) \bmod \lceil 8/N_{CS} \rceil)) \cdot N$, and the start PRB index of the second PUCCH resource in the second mapping position is ($RB_{BWP}^{offset} + 6 - N_{CS} -$

$\lfloor (r_{PUCCH2} - 8)/N_{CS} \rfloor + ((M - 1 + K) \bmod \lceil 8/N_{CS} \rceil)) \cdot N$, where K is a fixed time-domain cyclic offset, and M is an integer greater than or equal to 1.

In the solution provided in this application, after the frequency-domain position to which the PUCCH resource is mapped is determined in the second manner in which the terminal device determines the frequency-domain position to which the PUCCH resource is mapped, the terminal device may send information to the network device within specific duration by using the PUCCH resource. In at least two consecutive time units in the duration, the frequency-domain position to which the PUCCH resource is mapped may change with a time unit. Start PRB indexes of all PUCCH resources in the first mapping position and the start PRB index of the second PUCCH resource in the second mapping position may be cyclically shifted by N PRBs from both sides of the BWP to the middle of the BWP, or may be cyclically shifted by N PRBs from the middle of the BWP to both sides of the BWP. The frequency-domain position to which the PUCCH resource is mapped changes, so that the frequency-domain frequency-hopping distances of all the PUCCH resources can be the same on average in the time dimension. In this way, the frequency-hopping gains are the same on average in the time dimension. This can reduce the limitation of the frequency-hopping gain of the PUCCH resource and enhance coverage.

In a possible implementation, that frequency-domain positions to which the PUCCH resource is mapped in at least two consecutive time units in the first duration are different includes: In the at least two consecutive time units, if

$\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

Alternatively, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if

$\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes. $r_{PUCCH1}$ is the index of the first PUCCH resource, and $r_{PUCCH2}$ is an index of the second PUCCH resource.

In the solution provided in this application, after the frequency-domain position to which the PUCCH resource is mapped is determined in the second manner in which the terminal device determines the frequency-domain position to which the PUCCH resource is mapped, the terminal device may send information to the network device within specific duration by using the PUCCH resource. In at least two consecutive time units in the duration, the frequency-domain position to which the PUCCH resource is mapped may change with a time unit. Start PRB indexes of all PUCCH resources in the first mapping position are cyclically shifted by N PRBs from both sides of the BWP to the middle of the BWP, and start PRB indexes in the second mapping position are cyclically shifted by N PRBs from the middle of the BWP to both sides of the BWP; or start PRB indexes of all PUCCH resources in the first mapping position are cyclically shifted by N PRBs from the middle of the BWP to both sides of the BWP, and start PRB indexes in the second mapping position are cyclically shifted by N PRBs from both sides of the BWP to the middle of the BWP. The frequency-domain position to which the PUCCH resource is mapped changes, so that the frequency-domain frequency-hopping distances of all the PUCCH resources can be the same on average in the time dimension. In this way, the frequency-hopping gains are the same on average in the time dimension. This can reduce the limitation of the frequency-hopping gain of the PUCCH resource and enhance coverage.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes: In the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In the solution provided in this application, when the terminal device accesses a network, the network device may configure the dedicated PUCCH resource for the terminal device by using dedicated RRC signaling. In a specific continuous time period during transmission of the configured dedicated PUCCH of the terminal device, a frequency-domain position to which a used dedicated PUCCH resource is mapped changes with time, so that frequency-domain frequency-hopping distances of all dedicated PUCCH resources can be the same on average in the time dimension. In this way, frequency-hopping gains are the same on average in the time dimension. This can reduce the limitation of the frequency-hopping gain of the PUCCH resource and enhance coverage.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes: In the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

In the solution provided in this application, when the terminal device accesses a network, the network device may configure the dedicated PUCCH resource for the terminal device by using dedicated RRC signaling. In a specific continuous time period during transmission of the configured dedicated PUCCH of the terminal device, a frequency-domain position to which a used dedicated PUCCH resource is mapped changes with time, so that frequency-domain frequency-hopping distances of all dedicated PUCCH resources can be the same on average in the time dimension. In this way, frequency-hopping gains are the same on average in the time dimension. This can reduce the limitation of the frequency-hopping gain of the PUCCH resource and enhance coverage.

In a possible implementation, the first offset is configured by the network device by using a dedicated radio resource control RRC layer.

In a possible implementation, the second offset is configured by the network device by using a dedicated radio resource control RRC layer.

In a possible implementation, the method further includes: receiving second indication information from the network device, where the second indication information indicates that a start time unit of the at least two consecutive time units is a time unit in which the terminal device uses the PUCCH resource for the first time.

In the solution provided in this application, the network device may indicate the start time unit by using indication information, and the frequency-domain position to which the PUCCH resource is mapped varies starting from the start time unit.

In a possible implementation, the method further includes: receiving second indication information from the network device, where the second indication information includes a time period offset, and the second indication information indicates that a start time unit of the at least two consecutive time units is a time unit obtained by adding the time period offset to a time unit in which the terminal device receives the second indication information.

In a possible implementation, the method further includes: receiving second indication information from the network device, where the second indication information includes a time unit index value, and the second indication information indicates that a start time unit of the at least two consecutive time units is a time unit corresponding to the time unit index value.

According to a second aspect, this application provides a communication method. The method may be applied to a network device, or may be applied to a module (for example, a chip) in the network device. An example in which the method is applied to a network device is used below for description. The method may include: sending first indication information to a terminal device, where the first indication information is used to determine a frequency-domain position to which a physical uplink control channel PUCCH resource is mapped; and receiving information from the terminal device in first duration, where frequency-domain positions to which the PUCCH resource is mapped in at least two consecutive time units in the first duration are different.

In the solution provided in this application, in a specific continuous time period when the network device receives information transmitted by the terminal device by using a PUCCH, the frequency-domain position to which the PUCCH resource is mapped changes with time. Different from that in the conventional technology, the frequency-domain position to which the PUCCH resource is mapped remains unchanged in each slot of PUCCH transmission. In this embodiment of this application, the frequency-domain position to which the PUCCH resource is mapped changes, so that frequency-domain frequency-hopping distances of all PUCCH resources can be the same on average in a time dimension. In this way, frequency-hopping gains are the same on average in the time dimension. This can reduce a limitation of a frequency-hopping gain of the PUCCH resource and enhance coverage.

It should be understood that the second aspect is performed by the network device, and specific content of the second aspect corresponds to the content of the first aspect. For corresponding features of the second aspect and beneficial effects achieved in the second aspect, refer to the descriptions of the first aspect. To avoid repetition, detailed descriptions are appropriately omitted herein.

In a possible implementation, if the network device does not configure, for the terminal device, a frequency-domain position to which a dedicated PUCCH resource is mapped, the frequency-domain position to which the PUCCH resource is mapped is determined based on a PRB offset and a set of initial cyclic shift indexes. A specific implementation in which the frequency-domain position to which the PUCCH resource is mapped is determined based on the PRB offset and the set of initial cyclic shift indexes corresponds to a specific implementation of the first aspect. For details, refer to the description of the first aspect. To avoid repetition, detailed description is appropriately omitted herein.

In a possible implementation, that frequency-domain positions to which the PUCCH resource is mapped in at least two consecutive time units in the first duration are different includes: In the at least two consecutive time units, if $\lfloor r_{\text{PUCCH}}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{\text{PUCCH}}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes. Alternatively, in the at least two consecutive time units, if $\lfloor r_{\text{PUCCH}}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{\text{PUCCH}}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $\left( RB_{BWP}^{offset} \cdot N \right) mod\ N_{BWP}^{size} + \lfloor r_{PUCCH}/N_{CS} \rfloor \cdot N$, the start PRB index of the PUCCH resource in the second mapping position is $N_{BWP}^{size} - \left( RB_{BWP}^{offset} \cdot N \right) mod\ N_{BWP}^{size} - \left( \lfloor r_{PUCCH}/N_{CS} \rfloor + 1 \right) \cdot N$, and the initial cyclic shift index of the PUCCH resource is $r_{\text{PUCCH}}\ mod\ N_{CS}$; or

if $\lfloor r_{\text{PUCCH}}/8\rfloor = 1$, the start PRB index of the PUCCH resource in the first mapping position is $N_{\text{BWP}}^{\text{size}} - \left(\text{RB}_{\text{BWP}}^{\text{offset}} \cdot N\right)\bmod N_{BWP}^{size} - \left(\lfloor(r_{\text{PUCCH}} - 8)/N_{\text{CS}}\rfloor + 1\right)\cdot N$, the start PRB index of the PUCCH resource in the second mapping position is $\left(\text{RB}_{\text{BWP}}^{\text{offset}}\cdot N\right)\bmod N_{BWP}^{size} + \left(\lfloor(r_{\text{PUCCH}} - 8)/N_{\text{CS}}\rfloor\right)\cdot N$, and the initial cyclic shift index of the PUCCH resource is $(r_{\text{PUCCH}} - 8)\bmod N_{\text{CS}}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8\rfloor = 0$, the start PRB index of the PUCCH resource in the first mapping position is $\left(\left(RB_{BWP}^{offset} + \lfloor r_{PUCCH}/N_{CS}\rfloor\right)\cdot N\right)\bmod N_{BWP}^{size}$, the start PRB index of the PUCCH resource in the second mapping position is $N_{BWP}^{size} - \left(\left(RB_{BWP}^{offset} + \lfloor r_{PUCCH}/N_{CS}\rfloor + 1\right)\cdot N\right)\bmod N_{BWP}^{size}$, and the initial cyclic shift index of the PUCCH resource is $r_{\text{PUCCH}}\bmod N_{\text{CS}}$; or

if $\lfloor r_{\text{PUCCH}}/8\rfloor = 1$, the start PRB index of the PUCCH resource in the first mapping position is $N_{\text{BWP}}^{\text{size}} - \left(\left(\text{RB}_{\text{BWP}}^{\text{offset}} + \lfloor(r_{\text{PUCCH}} - 8)/N_{\text{CS}}\rfloor + 1\right)\cdot N\right)\bmod N_{BWP}^{size}$, the start PRB index of the PUCCH resource in the second mapping position is $\left(\left(\text{RB}_{\text{BWP}}^{\text{offset}} + \lfloor(r_{\text{PUCCH}} - 8)/N_{\text{CS}}\rfloor\right)\cdot N\right)\bmod N_{BWP}^{size}$, and the initial cyclic shift index of the PUCCH resource is $(r_{\text{PUCCH}} - 8)\bmod N_{\text{CS}}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8\rfloor = 0$, the start PRB index of the PUCCH resource in the first mapping position is $\left(\left(RB_{BWP}^{offset} + \lfloor r_{PUCCH}/N_{CS}\rfloor\right)\cdot N\right)\bmod N_{BWP}^{size}$, the start PRB index of the PUCCH resource in the second mapping position is $\left(N_{BWP}^{size} - \left(RB_{BWP}^{offset} + \lfloor r_{PUCCH}/N_{CS}\rfloor + 1\right)\cdot N\right)\bmod N_{BWP}^{size}$, and the initial cyclic shift index of the PUCCH resource is $r_{\text{PUCCH}}\bmod N_{\text{CS}}$; or

if $\lfloor r_{\text{PUCCH}}/8 \rfloor = 1$, the start PRB index of the PUCCH resource in the first mapping position is

$(N_{\text{BWP}}^{\text{size}} - (RB_{\text{BWP}}^{\text{offset}} + \lfloor (r_{\text{PUCCH}} - 8)/N_{\text{CS}} \rfloor + 1) \cdot N) \bmod N_{BWP}^{size}$, the start PRB index of the PUCCH resource in the second mapping position is $\left( \left( RB_{\text{BWP}}^{\text{offset}} + \lfloor (r_{\text{PUCCH}} - 8)/N_{\text{CS}} \rfloor \right) \cdot N \right) mod\ N_{BWP}^{size}$, and the initial cyclic shift index of the PUCCH resource is ($r_{\text{PUCCH}}$ - 8) mod $N_{\text{CS}}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is

$RB_{BWP}^{offset} \cdot X + \lfloor r_{PUCCH}/N_{CS} \rfloor \cdot N$, the start PRB index of the PUCCH resource in the second mapping position is $N_{BWP}^{size} - RB_{BWP}^{offset} \cdot X - (\lfloor r_{PUCCH}/N_{CS} \rfloor + 1) \cdot N$, and the initial cyclic shift index of the PUCCH resource is $r_{\text{PUCCH}}$ mod $N_{\text{CS}}$; or

if $\lfloor r_{\text{PUCCH}}/8 \rfloor = 1$, the start PRB index of the PUCCH resource in the first mapping position is

$N_{\text{BWP}}^{\text{size}} - RB_{\text{BWP}}^{\text{offset}} \cdot X - (\lfloor (r_{\text{PUCCH}} - 8)/N_{\text{CS}} \rfloor + 1) \cdot N$, the start PRB index of the PUCCH resource in the second mapping position is $RB_{\text{BWP}}^{\text{offset}} \cdot X + (\lfloor (r_{\text{PUCCH}} - 8)/N_{\text{CS}} \rfloor) \cdot N$, and the initial cyclic shift index of the PUCCH resource is ($r_{\text{PUCCH}}$ - 8) mod $N_{\text{CS}}$ where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, N is a positive integer greater than or equal to 1, $X = \lfloor \sqrt[q]{N} \rfloor - p$ or $X = \lfloor \sqrt[q]{N} - p \rfloor$, and p and q are real numbers, or p and q are integers.

In a possible implementation, X is any one of the following: $X = \lfloor \sqrt[2]{N} \rfloor$, $X = \lfloor \sqrt[3]{N} \rfloor$, ..., and $X = \lfloor \sqrt[n-1]{N} \rfloor$.

In a possible implementation, X is any one of the following: $X = \lfloor \sqrt[2]{N} \rfloor - 1$, $X = \lfloor \sqrt[3]{N} \rfloor - 1$, ..., and $X = \lfloor \sqrt[n-1]{N} \rfloor - 1$.

In a possible implementation, X is any one of the following: $X = \lfloor \sqrt[2]{N} - 1 \rfloor$, $X = \lfloor \sqrt[3]{N} - 1 \rfloor$, ..., and $X = \lfloor \sqrt[n-1]{N} - 1 \rfloor$.

In a possible implementation, $X = \lfloor \frac{N}{4} \rfloor$.

In a possible implementation, that frequency-domain positions to which the PUCCH resource is mapped in at least two consecutive time units in the first duration are different includes: In an $M^{th}$ time unit in the at least two consecutive time units, if $\lfloor r_{\text{PUCCH}}/8 \rfloor = 0$, the start PRB index of the PUCCH resource in the first mapping position is

$$(RB_{BWP}^{offset} + \lfloor r_{PUCCH}/N_{CS} \rfloor + ((M-1+K) \bmod \lceil 8/N_{CS} \rceil)) \cdot N$$, and the start PRB index of the PUCCH resource in the second mapping position is

$$N_{BWP}^{size} - \left( RB_{BWP}^{offset} + \lfloor r_{PUCCH}/N_{CS} \rfloor + 1 + ((M-1+K) \bmod \lceil 8/N_{CS} \rceil) \right) \cdot N;$$ or if

$\lfloor r_{\text{PUCCH}}/8 \rfloor = 1$, the start PRB index of the PUCCH resource in the first mapping position is

$$N_{BWP}^{size} - (RB_{BWP}^{offset} + \lfloor (r_{PUCCH} - 8)/N_{CS} \rfloor + 1 + ((M-1+K) \bmod \lceil 8/N_{CS} \rceil)) \cdot N$$, and the start PRB index of the PUCCH resource in the second mapping position is ( $RB_{BWP}^{offset} +$

$$\lfloor (r_{PUCCH} - 8)/N_{CS} \rfloor + ((M-1+K) \bmod \lceil 8/N_{CS} \rceil)) \cdot N$$, where K is a fixed time-domain cyclic offset, and M is an integer greater than or equal to 1.

In a possible implementation, that frequency-domain positions to which the PUCCH resource is mapped in at least two consecutive time units in the first duration are different includes: In the at least two consecutive time units, if

$\lfloor r_{\text{PUCCH1}}/8 \rfloor = 0$ and $\lfloor r_{\text{PUCCH2}}/8 \rfloor = 0$, a start PRB index of a first PUCCH resource in a first mapping position and a start PRB index of a second PUCCH resource in a first mapping position are cyclically shifted by N PRBs in ascending order of PRB indexes, and a start PRB index of the first PUCCH resource in a second mapping position and a start PRB index of the second PUCCH resource in a second mapping position are cyclically shifted by N PRBs in descending order of the PRB indexes; or if $\lfloor r_{\text{PUCCH1}}/8 \rfloor = 1$ and $\lfloor r_{\text{PUCCH2}}/8 \rfloor = 1$, a start PRB index of a first PUCCH resource in a first mapping position and a start PRB index of a second PUCCH resource in a first mapping position are cyclically shifted by N PRBs in descending order of PRB indexes, and a start PRB index of the first PUCCH resource in a second mapping position and a start PRB index of the second PUCCH resource in a second mapping position are cyclically shifted by N PRBs in ascending order of the PRB indexes. Alternatively, in the at least two consecutive time units, if $\lfloor r_{\text{PUCCH1}}/8 \rfloor = 0$ and $\lfloor r_{\text{PUCCH2}}/8 \rfloor = 0$, a start PRB index of a first PUCCH resource in a first mapping position and a start PRB index of a second PUCCH resource in a first mapping position are cyclically shifted by N PRBs in descending order of PRB indexes, and a start PRB index of the first PUCCH resource in a second mapping position and a start PRB index of the second PUCCH resource in a second mapping position are cyclically shifted by N PRBs in ascending order of the PRB indexes; or if $\lfloor r_{\text{PUCCH1}}/8 \rfloor = 1$ and $\lfloor r_{\text{PUCCH2}}/8 \rfloor = 1$, a start PRB index of a first PUCCH resource in a first mapping position and a start PRB index of a second PUCCH resource in a first mapping position are cyclically shifted by N PRBs in ascending order of PRB indexes, and a start PRB index of the first PUCCH resource in a second mapping position and a start PRB index of the second PUCCH resource in a second mapping position are cyclically shifted by N PRBs in descending order of the PRB indexes. $r_{PUCCH1}$ is an index of the first PUCCH resource, and $r_{PUCCH2}$ is an index of the second PUCCH resource.

In a possible implementation, that frequency-domain positions to which the PUCCH resource is mapped in at least two consecutive time units in the first duration are different includes: In an $M^{th}$ time unit in the at least two consecutive time units, if $\lfloor r_{\text{PUCCH1}}/8 \rfloor = 0$, the start PRB index of the first PUCCH resource in the first mapping position is (

$$RB_{BWP}^{offset} + \lfloor r_{PUCCH1}/N_{CS} \rfloor + ((M-1+K) \bmod \lceil 8/N_{CS} \rceil)) \cdot N$$, and the start PRB index of the first PUCCH resource in the second mapping position is

$$N_{BWP}^{size} - \left( RB_{BWP}^{offset} + \lfloor r_{PUCCH1}/N_{CS} \rfloor + 1 + ((M-1+K) \bmod \lceil 8/N_{CS} \rceil) \right) \cdot N;$$ or if

$\lfloor r_{\text{PUCCH1}}/8 \rfloor = 1$, the start PRB index of the first PUCCH resource in the first mapping position is

$$N_{BWP}^{size} - (RB_{BWP}^{offset} + \lfloor (r_{PUCCH1} - 8)/N_{CS} \rfloor + 1 + ((M-1+K) \bmod \lceil 8/N_{CS} \rceil)) \cdot N$$, and the start PRB index of the PUCCH resource in the second mapping position is

$$(RB_{BWP}^{offset} + \lfloor(r_{PUCCH1} - 8)/N_{CS}\rfloor + ((M - 1 + K) \bmod \lceil 8/N_{CS}\rceil)) \cdot N$$

; and if $\lfloor r_{PUCCH2}/8\rfloor = 0$, the start PRB index of the second PUCCH resource in the first mapping position is

$$\left(RB_{BWP}^{offset} + \lfloor r_{PUCCH2}/N_{CS}\rfloor + ((M - 1 + K) \bmod \lceil \frac{8}{N_{CS}}\rceil)\right) \cdot N$$

, and the start PRB index of the second PUCCH resource in the second mapping position is $N_{BWP}^{size} - (RB_{BWP}^{offset} + 7 - N_{CS} -$

$$\lfloor r_{PUCCH2}/N_{CS}\rfloor + ((M - 1 + K) \bmod \lceil 8/N_{CS}\rceil)) \cdot N$$

; or if $\lfloor r_{PUCCH2}/8\rfloor = 1$, the start PRB index of the second PUCCH resource in the first mapping position is $N_{BWP}^{size} - (RB_{BWP}^{offset} +$

$$\lfloor(r_{PUCCH2} - 8)/N_{CS}\rfloor + 1 + ((M - 1 + K) \bmod \lceil 8/N_{CS}\rceil)) \cdot N$$

, and the start PRB index of the second PUCCH resource in the second mapping position is ( $RB_{BWP}^{offset} + 6 - N_{CS} -$

$$\lfloor(r_{PUCCH2} - 8)/N_{CS}\rfloor + ((M - 1 + K) \bmod \lceil 8/N_{CS}\rceil)) \cdot N$$

, where K is a fixed time-domain cyclic offset, and M is an integer greater than or equal to 1.

In a possible implementation, that frequency-domain positions to which the PUCCH resource is mapped in at least two consecutive time units in the first duration are different includes: In the at least two consecutive time units, if $\lfloor r_{PUCCH1}/8\rfloor = 0$ and $\lfloor r_{PUCCH2}/8\rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8\rfloor = 1$ and $\lfloor r_{PUCCH2}/8\rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

Alternatively, in the at least two consecutive time units, if $\lfloor r_{PUCCH1}/8\rfloor = 0$ and $\lfloor r_{PUCCH2}/8\rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8\rfloor = 1$ and $\lfloor r_{PUCCH2}/8\rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes. $r_{PUCCH1}$ is an index of the first PUCCH resource, and $r_{PUCCH2}$ is an index of the second PUCCH resource.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes: In the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes: In the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

In a possible implementation, the first offset is configured by the network device by using a dedicated radio resource control RRC layer.

In a possible implementation, the second offset is configured by the network device by using a dedicated radio resource control RRC layer.

In a possible implementation, the method further includes: sending second indication information to the terminal device, where the second indication information indicates that a start time unit of the at least two consecutive time units is a time unit in which the terminal device uses the PUCCH resource for the first time.

In a possible implementation, the method further includes: sending second indication information to the terminal device, where the second indication information includes a time period offset, and the second indication information indicates that a start time unit of the at least two consecutive time units is a time unit obtained by adding the time period offset to a time unit in which the terminal device receives the second indication information.

In a possible implementation, the method further includes: sending second indication information to the terminal device, where the second indication information includes a time unit index value, and the second indication information indicates that a start time unit of the at least two consecutive time units is a time unit corresponding to the time unit index value.

According to a third aspect, an embodiment of this application provides a communication apparatus.

For beneficial effects, refer to the descriptions of the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function.

In a possible implementation, the communication apparatus includes:

a receiving unit, configured to receive first indication information from a network device, where the first indication information is used to determine a frequency-domain position to which a physical uplink control channel PUCCH resource is mapped; and
a sending unit, configured to send information to the network device in first duration by using the PUCCH resource, where frequency-domain positions to which the PUCCH resource is mapped in at least two consecutive time units in the first duration are different.

In a possible implementation, if the network device does not configure, for a terminal device, a frequency-domain position to which a dedicated PUCCH resource is mapped, the frequency-domain position to which the PUCCH resource is mapped is determined based on a PRB offset and a set of initial cyclic shift indexes.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, the start PRB index of the PUCCH resource in the second mapping position is $N_{BWP}^{size} - (RB_{BWP}^{offset} + \lfloor r_{PUCCH}/N_{CS} \rfloor + 1) \cdot N$, and the initial cyclic shift index of the PUCCH resource is $r_{\text{PUCCH}} \bmod N_{CS}$; or

if $\lfloor r_{\text{PUCCH}}/8 \rfloor = 1$, the start PRB index of the PUCCH resource in the first mapping position is $N_{BWP}^{size} - (RB_{BWP}^{offset} + \lfloor (r_{\text{PUCCH}} - 8)/N_{CS} \rfloor + 1) \cdot N$, the start PRB index of the PUCCH resource in the second mapping position is $(RB_{BWP}^{offset} + \lfloor (r_{\text{PUCCH}} - 8)/N_{CS} \rfloor) \cdot N$, and the initial cyclic shift index of the PUCCH resource is $(r_{\text{PUCCH}} - 8) \bmod N_{CS}$ where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$ , the start PRB index of the PUCCH resource in the first mapping position is $\left(RB_{BWP}^{offset} \cdot N\right) mod\ N_{BWP}^{size} + \lfloor r_{PUCCH}/N_{CS} \rfloor \cdot N$ , the start PRB index of the PUCCH resource in the second mapping position is $N_{BWP}^{size} - \left(RB_{BWP}^{offset} \cdot N\right) mod\ N_{BWP}^{size} - \left(\lfloor r_{PUCCH}/N_{CS} \rfloor + 1\right) \cdot N$ , and the initial cyclic shift index of the PUCCH resource is $r_{\text{PUCCH}}\ mod\ N_{CS}$; or

if $\lfloor r_{\text{PUCCH}}/8 \rfloor = 1$ , the start PRB index of the PUCCH resource in the first mapping position is $N_{BWP}^{size} - \left(RB_{BWP}^{offset} \cdot N\right) mod\ N_{BWP}^{size} - \left(\lfloor (r_{\text{PUCCH}} - 8)/N_{CS} \rfloor + 1\right) \cdot N$ , the start PRB index of the PUCCH resource in the second mapping position is $\left(RB_{BWP}^{offset} \cdot N\right) mod\ N_{BWP}^{size} + \left(\lfloor (r_{\text{PUCCH}} - 8)/N_{CS} \rfloor\right) \cdot N$ , and the initial cyclic shift index of the PUCCH resource is $(r_{\text{PUCCH}} - 8)\ mod\ N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$ , the start PRB index of the PUCCH resource in the first mapping position is $\left(\left(RB_{BWP}^{offset} + \lfloor r_{PUCCH}/N_{CS} \rfloor\right) \cdot N\right) mod\ N_{BWP}^{size}$ , the start PRB index of the PUCCH resource in the second mapping position is $N_{BWP}^{size} - \left(\left(RB_{BWP}^{offset} + \lfloor r_{PUCCH}/N_{CS} \rfloor + 1\right) \cdot N\right) mod\ N_{BWP}^{size}$ , and the initial cyclic shift index of the PUCCH resource is $r_{\text{PUCCH}}\ mod\ N_{CS}$; or

if $\lfloor r_{\text{PUCCH}}/8 \rfloor = 1$ , the start PRB index of the PUCCH resource in the first mapping position is $N_{BWP}^{size} - \left(\left(RB_{BWP}^{offset} + \lfloor (r_{\text{PUCCH}} - 8)/N_{CS} \rfloor + 1\right) \cdot N\right) mod\ N_{BWP}^{size}$ , the start PRB index of the PUCCH resource in the second mapping position is $\left(\left(RB_{BWP}^{offset} + \lfloor (r_{\text{PUCCH}} - 8)/N_{CS} \rfloor\right) \cdot N\right) mod\ N_{BWP}^{size}$ , and the initial cyclic shift index of the PUCCH resource is $(r_{\text{PUCCH}} - 8)\ mod\ N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $\left( \left( RB_{BWP}^{offset} + \lfloor r_{PUCCH}/N_{CS} \rfloor \right) \cdot N \right) \mod N_{BWP}^{size}$, the start PRB index of the PUCCH resource in the second mapping position is $\left( N_{BWP}^{size} - \left( RB_{BWP}^{offset} + \lfloor r_{PUCCH}/N_{CS} \rfloor + 1 \right) \cdot N \right) \mod N_{BWP}^{size}$, and the initial cyclic shift index of the PUCCH resource is $r_{\text{PUCCH}} \mod N_{CS}$; or

if $\lfloor r_{\text{PUCCH}}/8 \rfloor = 1$, the start PRB index of the PUCCH resource in the first mapping position is

$(N_{BWP}^{size} - (RB_{BWP}^{offset} + \lfloor (r_{PUCCH} - 8)/N_{CS} \rfloor + 1) \cdot N) \mod N_{BWP}^{size}$, the start PRB index of the PUCCH resource in the second mapping position is $\left( \left( RB_{BWP}^{offset} + \lfloor (r_{PUCCH} - 8)/N_{CS} \rfloor \right) \cdot N \right) \mod N_{BWP}^{size}$, and the initial cyclic shift index of the PUCCH resource is $(r_{\text{PUCCH}} - 8) \mod N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is

$RB_{BWP}^{offset} \cdot X + \lfloor r_{PUCCH}/N_{CS} \rfloor \cdot N$, the start PRB index of the PUCCH resource in the second mapping position is $N_{BWP}^{size} - RB_{BWP}^{offset} \cdot X - (\lfloor r_{PUCCH}/N_{CS} \rfloor + 1) \cdot N$, and the initial cyclic shift index of the PUCCH resource is $r_{\text{PUCCH}} \mod N_{CS}$; or

if $\lfloor r_{\text{PUCCH}}/8 \rfloor = 1$, the start PRB index of the PUCCH resource in the first mapping position is

$N_{BWP}^{size} - RB_{BWP}^{offset} \cdot X - (\lfloor (r_{PUCCH} - 8)/N_{CS} \rfloor + 1) \cdot N$, the start PRB index of the PUCCH resource in the second mapping position is $RB_{BWP}^{offset} \cdot X + (\lfloor (r_{PUCCH} - 8)/N_{CS} \rfloor) \cdot N$, and the initial cyclic shift index of the PUCCH resource is $(r_{\text{PUCCH1}} - 8) \mod N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, N is a positive integer greater than or equal to 1, $X = \lfloor \sqrt[q]{N} \rfloor - p$ or $X = \lfloor \sqrt[q]{N} - p \rfloor$, and p and q are real numbers, or p and q are integers.

In a possible implementation, $X$ is any one of the following: $X = \left\lfloor \sqrt[2]{N} \right\rfloor$, $X = \left\lfloor \sqrt[3]{N} \right\rfloor$, ..., and $X = \left\lfloor \sqrt[n-1]{N} \right\rfloor$.

In a possible implementation, $X$ is any one of the following: $X = \left\lfloor \sqrt[2]{N} \right\rfloor - 1$, $X = \left\lfloor \sqrt[3]{N} \right\rfloor - 1$, ..., and $X = \left\lfloor \sqrt[n-1]{N} \right\rfloor - 1$.

In a possible implementation, $X$ is any one of the following: $X = \left\lfloor \sqrt[2]{N} - 1 \right\rfloor$, $X = \left\lfloor \sqrt[3]{N} - 1 \right\rfloor$, ..., and $X = \left\lfloor \sqrt[n-1]{N} - 1 \right\rfloor$.

In a possible implementation, $X = \left\lfloor \frac{N}{4} \right\rfloor$.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH1}/8 \rfloor = 0$ and $r_{PUCCH1} < \lceil 8/N_{CS} \rceil$, a start PRB index of a first PUCCH resource in a first mapping position is $(RB_{BWP}^{offset} + \lfloor r_{PUCCH1}/N_{CS} \rfloor) \cdot N$, a start PRB index of the first PUCCH resource in a second mapping position is $N_{BWP}^{size} - (RB_{BWP}^{offset} + \lfloor r_{PUCCH1}/N_{CS} \rfloor + 1) \cdot N$, and an initial cyclic shift index of the first PUCCH resource is $r_{PUCCH1}$ mod $N_{CS}$, where the first PUCCH resource is a PUCCH resource closest to edges on both sides of a bandwidth part BWP; or

if $\lfloor r_{PUCCH1}/8 \rfloor = 1$ and $r_{PUCCH1} - 8 < \lceil 8/N_{CS} \rceil$, a start PRB index of a first PUCCH resource in a first mapping position is $N_{BWP}^{size} - (RB_{BWP}^{offset} + \lfloor (r_{PUCCH1} - 8)/N_{CS} \rfloor + 1) \cdot N$, a start PRB index of the first PUCCH resource in a second mapping position is $(RB_{BWP}^{offset} + \lfloor (r_{PUCCH1} - 8)/N_{CS} \rfloor) \cdot N$, and an initial cyclic shift index of the first PUCCH resource is $(r_{PUCCH1} - 8)$ mod $N_{CS}$; and

if $\lfloor r_{PUCCH2}/8 \rfloor = 0$ and $r_{PUCCH2} \geq \lceil 8/N_{CS} \rceil$, a start PRB index of a second PUCCH resource in a first mapping position is $(RB_{BWP}^{offset} + \lfloor r_{PUCCH2}/N_{CS} \rfloor) \cdot N$, a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$, and an initial cyclic shift index of the second PUCCH resource is $r_{PUCCH2}$ mod $N_{CS}$, where the second PUCCH resource is a PUCCH resource other than the first PUCCH resource in a PUCCH resource set, each PUCCH resource in the second PUCCH resource has a same frequency-domain frequency-hopping distance, and the PUCCH resource set includes a plurality of PUCCH resources; or

if $\lfloor r_{PUCCH2}/8 \rfloor = 1$ and $r_{PUCCH2} - 8 \geq \lceil 8/N_{CS} \rceil$, a start PRB index of a second PUCCH resource in a first mapping position is $N_{BWP}^{size} - (RB_{BWP}^{offset} + \lfloor (r_{PUCCH2} - 8)/N_{CS} \rfloor + 1) \cdot N$, a start PRB index of the second PUCCH resource in a second mapping position is $(RB_{BWP}^{offset} + 6 - N_{CS} - \lfloor (r_{PUCCH2} - 8)/N_{CS} \rfloor) \cdot N$, and an initial cyclic shift index of the second PUCCH resource is $(r_{PUCCH2} - 8)$ mod $N_{CS}$, where $RB_{BWP}^{offset}$ is the PRB offset, $r_{PUCCH1}$ is an index of the first PUCCH resource, $N_{CS}$

is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than or equal to 1.

In a possible implementation, that frequency-domain positions to which the PUCCH resource is mapped in at least two consecutive time units in the first duration are different includes:

In the at least two consecutive time units, if $\lfloor r_{PUCCH}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{PUCCH}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes.

Alternatively, in the at least two consecutive time units, if $\lfloor r_{PUCCH}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{PUCCH}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

In a possible implementation, that frequency-domain positions to which the PUCCH resource is mapped in at least two consecutive time units in the first duration are different includes:

In an M\textsuperscript{th} time unit in the at least two consecutive time units, if $\lfloor r_{PUCCH}/8 \rfloor = 0$, the start PRB index of the PUCCH resource in the first mapping position is $RB_{BWP}^{offset} + \lfloor r_{PUCCH}/N_{CS} \rfloor + ((M - 1 + K) \bmod \lceil 8/N_{CS} \rceil)) \cdot N$, and the start PRB index of the PUCCH resource in the second mapping position is

$$N_{BWP}^{size} - \left( RB_{BWP}^{offset} + \lfloor r_{PUCCH}/N_{CS} \rfloor + 1 + ((M - 1 + K) \bmod \lceil 8/N_{CS} \rceil) \right) \cdot N$$ ; or if

$\lfloor r_{PUCCH}/8 \rfloor = 1$, the start PRB index of the PUCCH resource in the first mapping position is

$N_{BWP}^{size} - (RB_{BWP}^{offset} + \lfloor (r_{PUCCH} - 8)/N_{CS} \rfloor + 1 + ((M - 1 + K) \bmod \lceil 8/N_{CS} \rceil)) \cdot N$, and the start PRB index of the PUCCH resource in the second mapping position is

$(RB_{BWP}^{offset} + \lfloor (r_{PUCCH} - 8)/N_{CS} \rfloor + ((M - 1 + K) \bmod \lceil 8/N_{CS} \rceil)) \cdot N$, where K is a fixed time-domain cyclic offset, and M is an integer greater than or equal to 1.

In a possible implementation, that frequency-domain positions to which the PUCCH resource is mapped in at least two consecutive time units in the first duration are different includes:

In the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if

$\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes.

Alternatively, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if

$\lfloor r_{\text{PUCCH1}}/8\rfloor = 1$ and $\lfloor r_{\text{PUCCH2}}/8\rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes, where $r_{PUCCH1}$ is the index of the first PUCCH resource, and $r_{PUCCH2}$ is an index of the second PUCCH resource.

In a possible implementation, that frequency-domain positions to which the PUCCH resource is mapped in at least two consecutive time units in the first duration are different includes:

In an $M^{\text{th}}$ time unit in the at least two consecutive time units, if $\lfloor r_{\text{PUCCH1}}/8\rfloor = 0$, the start PRB index of the first PUCCH resource in the first mapping position is $(RB_{BWP}^{offset} + \lfloor r_{PUCCH1}/N_{CS}\rfloor + ((M-1+K)\, mod\, \lceil 8/N_{CS}\rceil))\cdot N$, and the start PRB index of the first PUCCH resource in the second mapping position is $N_{BWP}^{size} - \left(RB_{BWP}^{offset} + \lfloor r_{PUCCH1}/N_{CS}\rfloor + 1 + ((M-1+K)\, mod\, \lceil 8/N_{CS}\rceil)\right)\cdot N$; or if $\lfloor r_{\text{PUCCH1}}/8\rfloor = 1$, the start PRB index of the first PUCCH resource in the first mapping position is $N_{BWP}^{size} - (RB_{BWP}^{offset} + \lfloor (r_{\text{PUCCH1}} - 8)/N_{CS}\rfloor + 1 + ((M-1+K)\, mod\, \lceil 8/N_{CS}\rceil))\cdot N$, and the start PRB index of the first PUCCH resource in the second mapping position is $(RB_{BWP}^{offset} + \lfloor (r_{\text{PUCCH1}} - 8)/N_{CS}\rfloor + ((M-1+K)\, mod\, \lceil 8/N_{CS}\rceil))\cdot N$; and

if $\lfloor r_{PUCCH2}/8\rfloor = 0$, the start PRB index of the second PUCCH resource in the first mapping position is $\left(RB_{BWP}^{offset} + \lfloor r_{PUCCH2}/N_{CS}\rfloor + ((M-1+K)\, mod\, \lceil \frac{8}{N_{CS}}\rceil)\right)\cdot N$, and the start PRB index of the second PUCCH resource in the second mapping position is $N_{BWP}^{size} - (RB_{BWP}^{offset} + 7 - N_{CS} - \lfloor r_{PUCCH2}/N_{CS}\rfloor + ((M-1+K)\, mod\, \lceil 8/N_{CS}\rceil))\cdot N$; or if $\lfloor r_{PUCCH2}/8\rfloor = 1$, the start PRB index of the second PUCCH resource in the first mapping position is $N_{BWP}^{size} - (RB_{BWP}^{offset} + \lfloor (r_{PUCCH2} - 8)/N_{CS}\rfloor + 1 + ((M-1+K)\, mod\, \lceil 8/N_{CS}\rceil))\cdot N$, and the start PRB index of the second PUCCH resource in the second mapping position is $(RB_{BWP}^{offset} + 6 - N_{CS} - \lfloor (r_{PUCCH2} - 8)/N_{CS}\rfloor + ((M-1+K)\, mod\, \lceil 8/N_{CS}\rceil))\cdot N$, where K is a fixed time-domain cyclic offset, and M is an integer greater than or equal to 1.

In a possible implementation, that frequency-domain positions to which the PUCCH resource is mapped in at least two consecutive time units in the first duration are different includes:

In the at least two consecutive time units, if $\lfloor r_{\text{PUCCH1}}/8\rfloor = 0$ and $\lfloor r_{\text{PUCCH2}}/8\rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

Alternatively, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, where $r_{PUCCH1}$ is the index of the first PUCCH resource, and $r_{PUCCH2}$ is an index of the second PUCCH resource.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

In a possible implementation, the first offset is configured by the network device by using a dedicated radio resource control RRC layer.

In a possible implementation, the second offset is configured by the network device by using a dedicated radio resource control RRC layer.

In a possible implementation, the receiving unit is further configured to receive second indication information from the network device, where the second indication information indicates that a start time unit of the at least two consecutive time units is a time unit in which the terminal device uses the PUCCH resource for the first time.

In a possible implementation, the receiving unit is further configured to receive second indication information from the network device, where the second indication information includes a time period offset, and the second indication information indicates that a start time unit of the at least two consecutive time units is a time unit obtained by adding the time period offset to a time unit in which the terminal device receives the second indication information.

In a possible implementation, the receiving unit is further configured to receive second indication information from the network device, where the second indication information includes a time unit index value, and the second indication information indicates that a start time unit of the at least two consecutive time units is a time unit corresponding to the time unit index value.

According to a fourth aspect, an embodiment of this application provides a communication apparatus.

For beneficial effects, refer to the descriptions of the second aspect. Details are not described herein again. The communication apparatus has a function of implementing behavior in the method example in the second aspect. The function may be implemented by hardware, or may be implemented by hardware executing corresponding software. The hardware or the software includes one or more modules corresponding to the foregoing function.

In a possible implementation, the communication apparatus includes:

a sending unit, configured to send first indication information to a terminal device, where the first indication information is used to determine a frequency-domain position to which a physical uplink control channel PUCCH resource is mapped; and

a receiving unit, configured to receive information from the terminal device in first duration, where frequency-domain positions to which the PUCCH resource is mapped in at least two consecutive time units in the first duration are different.

In a possible implementation, if the network device does not configure, for the terminal device, a frequency-domain position to which a dedicated PUCCH resource is mapped, the frequency-domain position to which the PUCCH resource is mapped is determined based on a PRB offset and a set of initial cyclic shift indexes.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, the start PRB index of the PUCCH resource in the second mapping position is $N_{BWP}^{size} - (RB_{BWP}^{offset} + \lfloor r_{PUCCH}/N_{CS} \rfloor + 1) \cdot N$, and the initial cyclic shift index of the PUCCH resource is $r_{\text{PUCCH}} \bmod N_{\text{CS}}$; or

if $\lfloor r_{\text{PUCCH}}/8 \rfloor = 1$, the start PRB index of the PUCCH resource in the first mapping position is $N_{\text{BWP}}^{\text{size}} - (RB_{\text{BWP}}^{\text{offset}} + \lfloor (r_{\text{PUCCH}} - 8)/N_{\text{CS}} \rfloor + 1) \cdot N$, the start PRB index of the PUCCH resource in the second mapping position is $(RB_{\text{BWP}}^{\text{offset}} + \lfloor (r_{\text{PUCCH}} - 8)/N_{\text{CS}} \rfloor) \cdot N$, and the initial cyclic shift index of the PUCCH resource is ($r_{\text{PUCCH}}$ - 8 mod $N_{\text{CS}}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $\left( RB_{BWP}^{offset} \cdot N \right) mod\ N_{BWP}^{size} + \lfloor r_{PUCCH}/N_{CS} \rfloor \cdot N$, the start PRB index of the PUCCH resource in the second mapping position is $N_{BWP}^{size} - \left( RB_{BWP}^{offset} \cdot N \right) mod\ N_{BWP}^{size} - \left( \lfloor r_{PUCCH}/N_{CS} \rfloor + 1 \right) \cdot N$, and the initial cyclic shift index of the PUCCH resource is $r_{\text{PUCCH}}$ mod $N_{\text{CS}}$; or

if $\lfloor r_{\text{PUCCH}}/8 \rfloor = 1$, the start PRB index of the PUCCH resource in the first mapping position is $N_{\text{BWP}}^{\text{size}} - \left( RB_{\text{BWP}}^{\text{offset}} \cdot N \right) mod\ N_{BWP}^{size} - (\lfloor (r_{\text{PUCCH}} - 8)/N_{\text{CS}} \rfloor + 1) \cdot N$, the start PRB index of the PUCCH resource in the second mapping position is $\left( RB_{\text{BWP}}^{\text{offset}} \cdot N \right) mod\ N_{BWP}^{size} + (\lfloor (r_{\text{PUCCH}} - 8)/N_{\text{CS}} \rfloor) \cdot N$, and the initial cyclic shift index of the PUCCH resource is ($r_{\text{PUCCH}}$ - 8) mod $N_{\text{CS}}$,

where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH}/8 \rfloor = 0$, the start PRB index of the PUCCH resource in the first mapping position is

$$\left( \left( RB_{BWP}^{offset} + \lfloor r_{PUCCH}/N_{CS} \rfloor \right) \cdot N \right) \bmod N_{BWP}^{size}$$, the start PRB index of the PUCCH resource in the second mapping position is $N_{BWP}^{size} - \left( \left( RB_{BWP}^{offset} + \lfloor r_{PUCCH}/N_{CS} \rfloor + 1 \right) \cdot N \right) \bmod N_{BWP}^{size}$, and the initial cyclic shift index of the PUCCH resource is $r_{PUCCH}$ mod $N_{CS}$; or

if $\lfloor r_{PUCCH}/8 \rfloor = 1$, the start PRB index of the PUCCH resource in the first mapping position is

$N_{BWP}^{size} - ((RB_{BWP}^{offset} + \lfloor (r_{PUCCH} - 8)/N_{CS} \rfloor + 1) \cdot N) \bmod N_{BWP}^{size}$, the start PRB index of the PUCCH resource in the second mapping position is $\left( \left( RB_{BWP}^{offset} + \lfloor (r_{PUCCH} - 8)/N_{CS} \rfloor \right) \cdot N \right) \bmod N_{BWP}^{size}$, and the initial cyclic shift index of the PUCCH resource is ($r_{PUCCH}$ - 8) mod $N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{PUCCH}/8 \rfloor = 0$, the start PRB index of the PUCCH resource in the first mapping position is

$$\left( \left( RB_{BWP}^{offset} + \lfloor r_{PUCCH}/N_{CS} \rfloor \right) \cdot N \right) \bmod N_{BWP}^{size}$$, the start PRB index of the PUCCH resource in the second mapping position is $\left( N_{BWP}^{size} - \left( RB_{BWP}^{offset} + \lfloor r_{PUCCH}/N_{CS} \rfloor + 1 \right) \cdot N \right) \bmod N_{BWP}^{size}$, and the initial cyclic shift index of the PUCCH resource is $r_{PUCCH}$ mod $N_{CS}$; or

if $\lfloor r_{PUCCH}/8 \rfloor = 1$, the start PRB index of the PUCCH resource in the first mapping position is

$(N_{BWP}^{size} - (RB_{BWP}^{offset} + \lfloor (r_{PUCCH} - 8)/N_{CS} \rfloor + 1) \cdot N) \bmod N_{BWP}^{size}$, the start PRB index of the PUCCH resource in the second mapping position is $\left( \left( RB_{BWP}^{offset} + \lfloor (r_{PUCCH} - 8)/N_{CS} \rfloor \right) \cdot N \right) \bmod N_{BWP}^{size}$, and the initial cyclic shift index of the PUCCH resource is ($r_{PUCCH}$ - 8) mod $N_{CS}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $RB_{BWP}^{offset} \cdot X + \lfloor r_{PUCCH}/N_{CS} \rfloor \cdot N$, the start PRB index of the PUCCH resource in the second mapping position is $N_{BWP}^{size} - RB_{BWP}^{offset} \cdot X - (\lfloor r_{PUCCH}/N_{CS} \rfloor + 1) \cdot N$, and the initial cyclic shift index of the PUCCH resource is $r_{\text{PUCCH}} \bmod N_{\text{CS}}$; or

if $\lfloor r_{\text{PUCCH}}/8 \rfloor = 1$, the start PRB index of the PUCCH resource in the first mapping position is $N_{\text{BWP}}^{\text{size}} - RB_{\text{BWP}}^{\text{offset}} \cdot X - (\lfloor (r_{\text{PUCCH}} - 8)/N_{\text{CS}} \rfloor + 1) \cdot N$, the start PRB index of the PUCCH resource in the second mapping position is $RB_{\text{BWP}}^{\text{offset}} \cdot X + (\lfloor (r_{\text{PUCCH}} - 8)/N_{\text{CS}} \rfloor) \cdot N$, and the initial cyclic shift index of the PUCCH resource is ($r_{\text{PUCCH}}$ - 8 mod $N_{\text{CS}}$, where $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, N is a positive integer greater than or equal to 1, $X = \lfloor \sqrt[q]{N} \rfloor - p$ or $X = \lfloor \sqrt[q]{N} - p \rfloor$, and p and q are real numbers, or p and q are integers.

In a possible implementation, $X$ is any one of the following: $X = \lfloor \sqrt[2]{N} \rfloor$, $X = \lfloor \sqrt[3]{N} \rfloor$, ..., and $X = \lfloor \sqrt[n-1]{N} \rfloor$.

In a possible implementation, $X$ is any one of the following: $X = \lfloor \sqrt[2]{N} \rfloor - 1$, $X = \lfloor \sqrt[3]{N} \rfloor - 1$, ..., and $X = \lfloor \sqrt[n-1]{N} \rfloor - 1$.

In a possible implementation, $X$ is any one of the following: $X = \lfloor \sqrt[2]{N} - 1 \rfloor$, $X = \lfloor \sqrt[3]{N} - 1 \rfloor$, ..., and $X = \lfloor \sqrt[n-1]{N} - 1 \rfloor$.

In a possible implementation, $X = \lfloor \frac{N}{4} \rfloor$.

In a possible implementation, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH1}}/8 \rfloor = 0$ and $r_{\text{PUCCH1}} < \lceil 8/N_{CS} \rceil$, a start PRB index of a first PUCCH resource in a first mapping position is $(RB_{BWP}^{offset} + \lfloor r_{PUCCH1}/N_{CS} \rfloor) \cdot N$, a start PRB index of the first PUCCH resource in a second mapping position is $N_{BWP}^{size} - (RB_{BWP}^{offset} + \lfloor r_{PUCCH1}/N_{CS} \rfloor + 1) \cdot N$, and an initial cyclic shift index of the first PUCCH resource is $r_{PUCCH1} \bmod N_{CS}$, where the first PUCCH resource is a PUCCH resource closest to edges on both sides of a bandwidth part BWP; or

if $\lfloor r_{PUCCH1}/8 \rfloor = 1$ and $r_{PUCCH1} - 8 < \lceil 8/N_{CS} \rceil$, a start PRB index of a first PUCCH resource in a first mapping position is $N_{BWP}^{size} - (RB_{BWP}^{offset} + \lfloor (r_{PUCCH1} - 8)/N_{CS} \rfloor + 1) \cdot N$, a start PRB index of the first PUCCH resource in a second mapping position is $(RB_{BWP}^{offset} + \lfloor (r_{PUCCH1} - 8)/N_{CS} \rfloor) \cdot N$, and an initial cyclic shift index of the first PUCCH resource is $(r_{PUCCH1} - 8) \bmod N_{CS}$; and

if $\lfloor r_{PUCCH2}/8 \rfloor = 0$ and $r_{PUCCH2} \geq \lceil 8/N_{CS} \rceil$, a start PRB index of a second PUCCH resource in a first mapping position is $(RB_{BWP}^{offset} + \lfloor r_{PUCCH2}/N_{CS} \rfloor) \cdot N$, a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$, and an initial cyclic shift index of the second PUCCH resource is $r_{PUCCH2} \bmod N_{CS}$, where the second PUCCH resource is a PUCCH resource other than the first PUCCH resource in a PUCCH resource set, each PUCCH resource in the second PUCCH resource has a same frequency-domain frequency-hopping distance, and the PUCCH resource set includes a plurality of PUCCH resources; or

if $\lfloor r_{PUCCH2}/8 \rfloor = 1$ and $r_{PUCCH2} - 8 \geq \lceil 8/N_{CS} \rceil$, a start PRB index of a second PUCCH resource in a first mapping position is $N_{BWP}^{size} - (RB_{BWP}^{offset} + \lfloor (r_{PUCCH2} - 8)/N_{CS} \rfloor + 1) \cdot N$, a start PRB index of the second PUCCH resource in a second mapping position is $(RB_{BWP}^{offset} + 6 - N_{CS} - \lfloor (r_{PUCCH2} - 8)/N_{CS} \rfloor) \cdot N$, and an initial cyclic shift index of the second PUCCH resource is $(r_{PUCCH} - 8 \bmod N_{CS}$, where $RB_{BWP}^{offset}$ is the PRB offset, $r_{PUCCH1}$ is an index of the first PUCCH resource, $N_{CS}$ is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than or equal to 1.

In a possible implementation, that frequency-domain positions to which the PUCCH resource is mapped in at least two consecutive time units in the first duration are different includes:

In the at least two consecutive time units, if $\lfloor r_{PUCCH}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{PUCCH}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes.

Alternatively, in the at least two consecutive time units, if $\lfloor r_{PUCCH}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{PUCCH}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

In a possible implementation, that frequency-domain positions to which the PUCCH resource is mapped in at least two consecutive time units in the first duration are different includes:

In an $M^{th}$ time unit in the at least two consecutive time units, if $\lfloor r_{PUCCH}/8 \rfloor = 0$, the start PRB index of the PUCCH resource in the first mapping position is $(RB_{BWP}^{offset} + \lfloor r_{PUCCH}/N_{CS}\rfloor + ((M - 1 + K)\ mod\ \lceil 8/N_{CS}\rceil)) \cdot N$, and the start PRB index of the PUCCH resource in the second mapping position is $N_{BWP}^{size} - \left(RB_{BWP}^{offset} + \lfloor r_{PUCCH}/N_{CS}\rfloor + 1 + ((M - 1 + K)\ mod\ \lceil 8/N_{CS}\rceil)\right) \cdot N$; or if $\lfloor r_{PUCCH}/8\rfloor = 1$, the start PRB index of the PUCCH resource in the first mapping position is $N_{BWP}^{size} - (RB_{BWP}^{offset} + \lfloor (r_{PUCCH} - 8)/N_{CS}\rfloor + 1 + ((M - 1 + K)\ mod\ \lceil 8/N_{CS}\rceil)) \cdot N$, and the start PRB index of the PUCCH resource in the second mapping position is $(RB_{BWP}^{offset} + \lfloor (r_{PUCCH} - 8)/N_{CS}\rfloor + ((M - 1 + K)\ mod\ \lceil 8/N_{CS}\rceil)) \cdot N$, where K is a fixed time-domain cyclic offset, and M is an integer greater than or equal to 1.

In a possible implementation, that frequency-domain positions to which the PUCCH resource is mapped in at least two consecutive time units in the first duration are different includes:

In the at least two consecutive time units, if $\lfloor r_{PUCCH1}/8\rfloor = 0$ and $\lfloor r_{PUCCH2}/8\rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8\rfloor = 1$ and $\lfloor r_{PUCCH2}/8\rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes.

Alternatively, in the at least two consecutive time units, if $\lfloor r_{PUCCH1}/8\rfloor = 0$ and $\lfloor r_{PUCCH2}/8\rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8\rfloor = 1$ and $\lfloor r_{PUCCH2}/8\rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes, where $r_{PUCCH1}$ is the index of the first PUCCH resource, and $r_{PUCCH2}$ is an index of the second PUCCH resource.

In a possible implementation, that frequency-domain positions to which the PUCCH resource is mapped in at least two consecutive time units in the first duration are different includes:

In an $M^{th}$ time unit in the at least two consecutive time units, if $\lfloor r_{PUCCH1}/8\rfloor = 0$, the start PRB index of the first PUCCH resource in the first mapping position is $(RB_{BWP}^{offset} + \lfloor r_{PUCCH1}/N_{CS}\rfloor + ((M - 1 + K)\ mod\ \lceil 8/N_{CS}\rceil)) \cdot N$, and the start PRB index of the first PUCCH resource in the second mapping position is $N_{BWP}^{size} - \left(RB_{BWP}^{offset} + \lfloor r_{PUCCH1}/N_{CS}\rfloor + 1 + ((M - 1 + K)\ mod\ \lceil 8/N_{CS}\rceil)\right) \cdot N$; or if $\lfloor r_{PUCCH1}/8\rfloor = 1$, the start PRB index of the first PUCCH resource in the first mapping position is $N_{BWP}^{size} - (RB_{BWP}^{offset} + \lfloor (r_{PUCCH1} - 8)/N_{CS}\rfloor + 1 + ((M -$

$1 + K) \mod \lceil 8/N_{CS} \rceil) \cdot N$ , and the start PRB index of the first PUCCH resource in the second mapping position is $(RB_{BWP}^{offset} + \lfloor (r_{PUCCH1} - 8)/N_{CS} \rfloor + ((M - 1 + K) \mod \lceil 8/N_{CS} \rceil)) \cdot N$ ; and

if $\lfloor r_{PUCCH2}/8 \rfloor = 0$ , the start PRB index of the second PUCCH resource in the first mapping position is $\left( RB_{BWP}^{offset} + \lfloor r_{PUCCH2}/N_{CS} \rfloor + ((M - 1 + K) \mod \lceil \frac{8}{N_{CS}} \rceil) \right) \cdot N$ , and the start PRB index of the second PUCCH resource in the second mapping position is $N_{BWP}^{size} - (RB_{BWP}^{offset} +$

$7 - N_{CS} - \lfloor r_{PUCCH2}/N_{CS} \rfloor + ((M - 1 + K) \mod \lceil 8/N_{CS} \rceil)) \cdot N$ ; or if $\lfloor r_{PUCCH2}/8 \rfloor = 1$ , the start PRB index of the second PUCCH resource in the first mapping position is $N_{BWP}^{size} - (RB_{BWP}^{offset} +$

$\lfloor (r_{PUCCH2} - 8)/N_{CS} \rfloor + 1 + ((M - 1 + K) \mod \lceil 8/N_{CS} \rceil)) \cdot N$ , and the start PRB index of the second PUCCH resource in the second mapping position is $(RB_{BWP}^{offset} + 6 - N_{CS} -$

$\lfloor (r_{PUCCH2} - 8)/N_{CS} \rfloor + ((M - 1 + K) \mod \lceil 8/N_{CS} \rceil)) \cdot N$ , where K is a fixed time-domain cyclic offset, and M is an integer greater than or equal to 1.

In a possible implementation, that frequency-domain positions to which the PUCCH resource is mapped in at least two consecutive time units in the first duration are different includes:

In the at least two consecutive time units, if $\lfloor r_{PUCCH1}/8 \rfloor = 0$ and $\lfloor r_{PUCCH2}/8 \rfloor = 0$ , the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if

$\lfloor r_{PUCCH1}/8 \rfloor = 1$ and $\lfloor r_{PUCCH2}/8 \rfloor = 1$ , the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

Alternatively, in the at least two consecutive time units, if $\lfloor r_{PUCCH1}/8 \rfloor = 0$ and $\lfloor r_{PUCCH2}/8 \rfloor = 0$ , the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if

$\lfloor r_{PUCCH1}/8 \rfloor = 1$ and $\lfloor r_{PUCCH2}/8 \rfloor = 1$ , the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, where $r_{PUCCH1}$ is the index of the first PUCCH resource, and $r_{PUCCH2}$ is an index of the second PUCCH resource.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In a possible implementation, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

In a possible implementation, the first offset is configured by the network device by using a dedicated radio resource control RRC layer.

In a possible implementation, the second offset is configured by the network device by using a dedicated radio resource control RRC layer.

In a possible implementation, the sending unit is further configured to send second indication information to the terminal device, where the second indication information indicates that a start time unit of the at least two consecutive time units is a time unit in which the terminal device uses the PUCCH resource for the first time.

In a possible implementation, the sending unit is further configured to send second indication information to the terminal device, where the second indication information includes a time period offset, and the second indication information indicates that a start time unit of the at least two consecutive time units is a time unit obtained by adding the time period offset to a time unit in which the terminal device receives the second indication information.

In a possible implementation, the sending unit is further configured to send second indication information to the terminal device, where the second indication information includes a time unit index value, and the second indication information indicates that a start time unit of the at least two consecutive time units is a time unit corresponding to the time unit index value.

According to a fifth aspect, a communication apparatus is provided. The communication apparatus may be a terminal, or may be a module (for example, a chip) in the terminal. The apparatus may include a processor, a memory, an input interface, and an output interface. The input interface is configured to receive information from a communication apparatus other than the communication apparatus. The output interface is configured to output information to the communication apparatus other than the communication apparatus. The processor invokes a computer program stored in the memory to perform the communication method provided in any one of the first aspect or the implementations of the first aspect.

According to a sixth aspect, a communication apparatus is provided. The communication apparatus may be a network device, or may be a module (for example, a chip) in the network device. The apparatus may include a processor, a memory, an input interface, and an output interface. The input interface is configured to receive information from a communication apparatus other than the communication apparatus. The output interface is configured to output information to the communication apparatus other than the communication apparatus. The processor invokes a computer program stored in the memory to perform the communication method provided in any one of the second aspect or the implementations of the second aspect.

According to a seventh aspect, this application provides a communication system. The communication system includes at least one terminal and at least one network device. When running in the communication system, the at least one terminal device and the at least one network device are configured to perform any method according to the first aspect or the second aspect.

According to an eighth aspect, this application provides a computer-readable storage medium. The computer-readable storage medium stores computer instructions, and when the computer program or the computer instructions is/are run, the method according to the first aspect and any possible implementation of the first aspect, or the second aspect and any possible implementation of the second aspect is performed.

According to a ninth aspect, this application provides a computer program product including executable instructions. When the computer program product runs on user equipment, the method according to the first aspect and any possible implementation of the first aspect, or the second aspect and any possible implementation of the second aspect is performed.

According to a tenth aspect, this application provides a chip system. The chip system includes a processor, may further include a memory, and is configured to implement the method according to the first aspect and any possible implementation of the first aspect, or the second aspect and any possible implementation of the second aspect. The chip system may include a chip, or may include a chip and another discrete component.

## BRIEF DESCRIPTION OF DRAWINGS

To describe the technical solutions in embodiments of this application more clearly, the following briefly describes the accompanying drawings for describing embodiments.

FIG. 1 is a schematic diagram of positions of a PRB pair according to an embodiment of this application;

FIG. 2 is a schematic flowchart of determining a PUCCH resource by UE according to the conventional technology;

FIG. 3 is a schematic diagram of a time-frequency position of a PUCCH resource according to the conventional technology;

FIG. 4 is a schematic diagram of a time-domain position of another PUCCH resource according to the conventional technology;

FIG. 5 is a schematic diagram of a network architecture according to an embodiment of this application;

FIG. 6 is a schematic flowchart of a communication method according to an embodiment of this application;

FIG. 7 is a schematic diagram of a time-frequency position of a PUCCH resource according to an embodiment of this application;

FIG. 8 is a schematic diagram of a time-frequency position of another PUCCH resource according to an embodiment of this application;

FIG. 9 is a schematic diagram of a time-frequency position of still another PUCCH resource according to an embodiment of this application;

FIG. 10A to FIG. 10C are a schematic diagram of different frequency-domain positions to which a PUCCH resource is mapped according to an embodiment of this application;

FIG. 11A to FIG. 11C are a schematic diagram of different frequency-domain positions to which another PUCCH resource is mapped according to an embodiment of this application;

FIG. 12A to FIG. 12C are a schematic diagram of different frequency-domain positions to which still another PUCCH resource is mapped according to an embodiment of this application;

FIG. 13A to FIG. 13C are a schematic diagram of different frequency-domain positions to which yet another PUCCH resource is mapped according to an embodiment of this application;

FIG. 14A to FIG. 14C are a schematic diagram of different frequency-domain positions to which still yet another PUCCH resource is mapped according to an embodiment of this application;

FIG. 15A to FIG. 15C are a schematic diagram of different frequency-domain positions to which a further PUCCH resource is mapped according to an embodiment of this application;

FIG. 16A to FIG. 16C are a schematic diagram of different frequency-domain positions to which a still further PUCCH resource is mapped according to an embodiment of this application;

FIG. 17 is a schematic diagram of a structure of a communication apparatus according to an embodiment of this application;

FIG. 18 is a schematic diagram of a structure of another communication apparatus according to an embodiment of this application;

FIG. 19 is a schematic diagram of a structure of still another communication apparatus according to an embodiment of this application; and

FIG. 20 is a schematic diagram of a structure of a terminal device according to an embodiment of this application.

## DESCRIPTION OF EMBODIMENTS

The following clearly describes embodiments of this application in detail with reference to the accompanying drawings in embodiments of this application.

Terms used in embodiments of this application are only used to explain specific embodiments of this application, but are not intended to limit this application.

Definitions of technical terms that may occur in embodiments of this application are first provided.

(1) Frequency-hopping spread spectrum (frequency-hopping spread spectrum, FHSS)

A frequency-hopping spread spectrum is one of the most commonly used spread spectrum manners in wireless communication. The frequency-hopping spread spectrum is a communication manner in which a carrier frequency used for wireless signal transmission between transmitting and receiving devices changes discretely according to a preset algorithm or rule. In other words, a carrier frequency used in wireless communication jumps randomly under control of a pseudo-random variation code. In terms of an implementation of a communication technology, the frequency-hopping spread spectrum is a communication manner in which multiple frequency-shift keying is performed by using a code sequence, and is also a code controlled carrier frequency hopping communication system. In terms of time domain, a frequency-hopping signal is a multifrequency shift keying signal. In terms of frequency domain, a frequency spectrum of the frequency-hopping signal randomly hops at unequal intervals on a very wide frequency band.

(2) Cyclic shift

Cyclic shift is an operation of rearranging a group of elements by placing the last element at a position of the first element and moving each of the other elements to a next position, for example, (a, b, c, d), (d, a, b, c), (c, d, a, b), (b, c, d, a), (a, b, c, d).... Alternatively, cyclic shift may be a reverse operation of the foregoing operation.

To support uplink data transmission, uplink control signaling needs to be designed in a communication system. APUCCH is a basis of uplink control signaling transmission. The PUCCH may be used to carry uplink control information. When user equipment (user equipment, UE) is not scheduled, in other words, when no uplink shared channel (uplink shared channel, ULSCH) resource is allocated, the UE transfers uplink control information (uplink control information, UCI) of the layer 1 or layer 2 (layer 1/layer 2, L1/L2) by using the PUCCH, including a hybrid automatic repeat request acknowledgment (hybrid automatic repeat request acknowledgment, HARQ-ACK), channel-state information (channel-state information, CSI), and a scheduling request (scheduling request, SR). Different formats of PUCCHs may be used to transmit the UCI.

When the UE accesses a network, a base station may configure a dedicated PUCCH resource for the UE by using dedicated RRC signaling. Specifically, a physical downlink shared channel (physical downlink shared channel, PDSCH) and a PDSCH-to-PUCCH slot index difference set dl-DataToUL-ACK are configured for the UE by using RRC signaling, and the PDSCH-to-PUCCH slot index difference set dl-DataToUL-ACK is used to determine a difference between a slot index for the UE to receive the PDSCH and a slot index for the UE to feed back the PUCCH. A PDSCH-to-HARQ_feedback timing indicator field in DCI is used to indicate which slot index difference in the set is used. However, before and after RRC establishment, manners of determining a resource set are different.

Before RRC establishment, the base station cannot configure the dedicated PUCCH resource for the UE by using signaling, and the PUCCH resource is predefined in a protocol. Specifically, the base station configures, by using a SIB 1, a common PUCCH resource set for all UEs before RRC establishment, and a PUCCH resource in a predefined PUCCH resource set needs to carry only acknowledgment information of one or two bits (bits), that is, include only a PUCCH format 0 and a PUCCH format 1. Therefore, transmission of each PUCCH resource occupies one PRB. A dedicated PUCCH resource is not configured for the UE in a PUCCH-ResourceSet in PUCCH-Config, and the UE transmits HARQ-ACK information in an initial UL BWP by using a PUCCH resource configured in a PUCCH resource set in pucch-ResourceCommon. The UE may determine the PUCCH resource based on the parameter pucch-Resource-Common configured in the SIB 1 and Table 1.

**Table 1: PUCCH resource set before dedicated PUCCH resource configuration**

| Index Index | PUCCH format | First symbol | Number of symbols | PRB offset $RB_{BWP}^{offset}$ BWP | Cyclic shift index set |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6,9} |
| 5 | 1 | 10 | 4 | 2 | {0, 3, 6,9} |
| 6 | 1 | 10 | 4 | 4 | {0, 3, 6,9} |
| 7 | 1 | 4 | 10 | 0 | {0, 6} |
| 8 | 1 | 4 | 10 | 0 | {0, 3, 6,9} |
| 9 | 1 | 4 | 10 | 2 | {0, 3, 6,9} |
| 10 | 1 | 4 | 10 | 4 | {0, 3, 6,9} |
| 11 | 1 | 0 | 14 | 0 | {0, 6} |
| 12 | 1 | 0 | 14 | 0 | {0, 3, 6,9} |
| 13 | 1 | 0 | 14 | 2 | {0, 3, 6,9} |
| 14 | 1 | 0 | 14 | 4 | {0, 3, 6,9} |

(continued)

| Index Index | PUCCH format | First symbol | Number of symbols | PRB offset $RB_{BWP}^{offset}$ BWP | Cyclic shift index set |
|---|---|---|---|---|---|
| 15 | 1 | 0 | 14 | $N_{BWP}^{size}/4$ | {0, 3, 6, 9} |

Specifically, the UE determines the PUCCH resource based on the parameter pucch-ResourceCommon configured in the SIB 1 and Table 1. FIG. 2 is a schematic flowchart of determining the PUCCH resource by the UE according to the conventional technology. As shown in FIG. 2, determining the PUCCH resource by the UE may include the following steps.

S201: The base station sends the SIB 1 to the UE, where the SIB 1 carries the parameter pucch-Resource-Common. The parameter pucch-ResourceCommon is an indication field in an RRC message. A hierarchy of the parameter defined in 38.331 is as follows: SIB 1→ServingCellConfigCommonSIB→UplinkConfigCommonSIB→BWP-UplinkCommon→PUCCH-ConfigCommon→pucch-ResourceCommon.

S202: The UE determines a PUCCH resource set based on the SIB 1. After the UE receives the SIB 1 from the base station, where the PUCCH resource set (PUCCH resource set) is configured based on the parameter pucch-ResourceCommon, a value of the parameter is one of 0 to 15, and the value of the parameter pucch-ResourceCommon corresponds to a value of the index in Table 1, the UE determines a row in Table 1 as a configuration of the PUCCH resource set.

S203: The base station sends a PDCCH to the UE, where the PDCCH includes downlink control information (downlink control information, DCI), and the DCI indicates a modulation coding scheme of a PDSCH.

S204: The UE determines each PUCCH resource in the PUCCH resource set based on the configuration of the PUCCH resource set. Specifically, in the NR R16 standard, one PUCCH resource set includes 16 PUCCH resources (PUCCH resources). Each PUCCH resource is determined based on a corresponding PUCCH format, a first symbol (first symbol), a number of symbols (number of symbols), a physical resource block offset (PRB offset), and a cyclic shift index set (cyclic shift index set) for PUCCH transmission. The UE uses an index $r_{PUCCH}$ to indicate each PUCCH resource in 16 PUCCH resources included in one PUCCH resource set, where $0 \leq r_{PUCCH} \leq 15$,

$$r_{PUCCH} = \left\lfloor \frac{2 \cdot n_{CCE,0}}{N_{CCE}} \right\rfloor + 2 \cdot \Delta_{PRI}$$

, and $N_{CCE}$ is a quantity of control channel elements (control channel elements, CCEs) in a control resource set (control resource set, CORESET) of PDCCH reception, $n_{CCE,0}$ is an index of a first CCE of the PDCCH, and $\Delta_{PRI}$ is a value in a PUCCH resource indicator field in the DCI. When $\lfloor r_{PUCCH}/8 \rfloor = 0$, the UE determines that a PRB index of the PUCCH transmission in a first mapping position is $RB_{BWP}^{offset} + \lfloor r_{PUCCH}/N_{CS} \rfloor$, and determines that a PRB index of the PUCCH transmission in a second mapping position is $N_{BWP}^{size} - 1 - RB_{BWP}^{offset} - \lfloor r_{PUCCH}/N_{CS} \rfloor$, where $N_{BWP}^{size}$ is a quantity of RBs occupied by a BWP, $RB_{BWP}^{offset}$ is the PRB offset, and $N_{CS}$ is a total quantity of initial cyclic shift indexes in a set of initial cyclic shift indexes. The UE determines that an initial cyclic shift index of the PUCCH transmission is $r_{PUCCH} \bmod N_{CS}$. When $\lfloor r_{PUCCH}/8 \rfloor = 1$, the UE determines that a PRB index of the PUCCH transmission in a first mapping position is $N_{BWP}^{size} - 1 - RB_{BWP}^{offset} - \lfloor (r_{PUCCH} - 8)/N_{CS} \rfloor$, and determines that a PRB index of the PUCCH transmission in a second mapping position is $RB_{BWP}^{offset} + \lfloor (r_{PUCCH} - 8)/N_{CS} \rfloor$. The UE determines that an initial cyclic shift index of the PUCCH transmission is $(r_{PUCCH} - 8) \bmod N_{CS}$.

For example, the parameter pucch-ResourceCommon being 1 corresponds to a configuration of the PUCCH resource set whose index (index) is 1 in Table 1, that is, the PUCCH resource set indicated by the row includes 16 PUCCH resources. The 16 PUCCH resources use a PUCCH format_0, a first symbol is 12, a number of symbols is 2, a PRB offset value is 0, a set of initial cyclic shift indexes is {0, 4, 8}, and a total quantity of initial cyclic shift indexes in the set of initial cyclic shift indexes is $N_{CS} = 3$.

When $r_{PUCCH}$ = 0,1, ..., 7, the condition $\lfloor r_{PUCCH}/8 \rfloor = 0$ is met, corresponding 8 PUCCH resources are shown in Table 2, and each PUCCH resource is determined based on a physical resource block index and an initial cyclic shift index.

**Table 2: 8 PUCCH resources when r$_{PUCCH}$ = 0, 1, ...,7**

| Index $r_{PUCCH}$ | First-hop PRB index | Second-hop PRB index | $r_{PUCCH}$ mod $N_{CS}$ | Initial cyclic shift index |
|---|---|---|---|---|
| $r_{PUCCH}$ = 0 | 0 | $N_{BWP}^{size} - 1$ | 0 | CS0 |
| $r_{PUCCH}$ = 1 | 0 | $N_{BWP}^{size} - 1$ | 1 | CS4 |
| $r_{PUCCH}$ = 2 | 0 | $N_{BWP}^{size} - 1$ | 2 | CS8 |
| $r_{PUCCH}$ = 3 | 1 | $N_{BWP}^{size} - 2$ | 0 | CS0 |
| $r_{PUCCH}$ = 4 | 1 | $N_{BWP}^{size} - 2$ | 1 | CS4 |
| $r_{PUCCH}$ = 5 | 1 | $N_{BWP}^{size} - 2$ | 2 | CS8 |
| $r_{PUCCH}$ = 6 | 2 | $N_{BWP}^{size} - 3$ | 0 | CS0 |
| $r_{PUCCH}$ = 7 | 2 | $N_{BWP}^{size} - 3$ | 1 | CS4 |

When $r_{PUCCH}$ = 8, 9, ...,15, the condition $\lfloor r_{PUCCH}/8 \rfloor = 1$ is met, corresponding 8 PUCCH resources are shown in Table 3, and each PUCCH resource is determined based on a physical resource block index and an initial cyclic shift index.

**Table 3: 8 PUCCH resources when $r_{PUCCH}$ = 8, 9, ..., 15**

| Index $r_{PUCCH}$ | First-hop PRB index | Second-hop PRB index | $r_{PUCCH}$ mod $N_{CS}$ | Initial cyclic shift index |
|---|---|---|---|---|
| $r_{PUCCH}$ = 8 | $N_{BWP}^{size} - 1$ | 0 | 0 | CS0 |
| $r_{PUCCH}$ = 9 | $N_{BWP}^{size} - 1$ | 0 | 1 | CS4 |
| $r_{PUCCH}$ = 10 | $N_{BWP}^{size} - 1$ | 0 | 2 | CS8 |
| $r_{PUCCH}$ = 11 | $N_{BWP}^{size} - 2$ | 1 | 0 | CS0 |
| $r_{PUCCH}$ = 12 | $N_{BWP}^{size} - 2$ | 1 | 1 | CS4 |
| $r_{PUCCH}$ = 13 | $N_{BWP}^{size} - 2$ | 1 | 2 | CS8 |
| $r_{PUCCH}$ = 14 | $N_{BWP}^{size} - 3$ | 2 | 0 | CS0 |
| $r_{PUCCH}$ = 15 | $N_{BWP}^{size} - 3$ | 2 | 1 | CS4 |

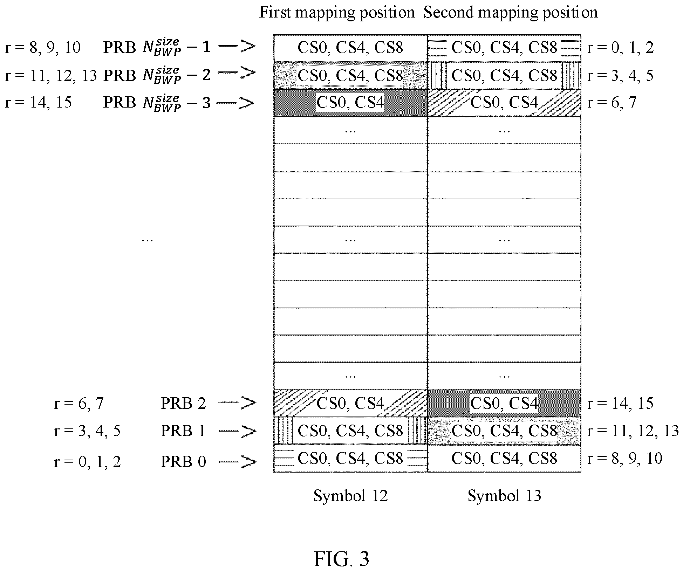

FIG. 3 is a schematic diagram of a time-frequency position of a PUCCH resource according to the conventional technology. As shown in FIG. 3, based on the configuration of the PUCCH resource set whose index (Index) is 1 in Table 1, a time-domain resource position of the PUCCH resource occupies two symbols starting from a first symbol 12 in a time unit (slot). Frequency-domain frequency-hopping distances of PUCCH resources $r_{PUCCH}$ = 0,1,2,8,9,10 are

$$N_{BWP}^{size} - 1$$, frequency-domain frequency-hopping distances of PUCCH resources $r_{PUCCH}$ = 3,4,5,11,12,13 are

$$N_{BWP}^{size} - 3$$, and frequency-domain frequency-hopping distances of PUCCH resources $r_{PUCCH}$ = 6,7,14,15 are

$$N_{BWP}^{size} - 5$$.

S205: The base station sends the PDSCH to the UE.

S206: The UE performs the PUCCH transmission based on the PDSCH. For example, the UE may provide HARQ-ACK information during the PUCCH transmission.

A value of a transmit power of the PUCCH is related to coverage. To be specific, a larger transmit power indicates a longer transmission distance. It can be learned from FIG. 3 that each PUCCH resource occupies only one PRB. Under conditions that a maximum transmit power and a power spectral density are restricted, a transmit power of one PRB is relatively small, and therefore coverage is relatively small. It can be further learned from FIG. 3 that frequency-domain frequency-hopping distances of some PUCCH resources are different. For example, the frequency-domain frequency-hopping distances of the PUCCH resources $r_{PUCCH}$ = 0,1,2,8,9,10 are greater than the frequency-domain frequency-hopping distances of the PUCCH resources $r_{PUCCH}$ = 6,7,14,15. For a PUCCH resource whose frequency-domain position is farther away from an edge of the BWP, a shorter frequency-domain frequency-hopping distance indicates a smaller frequency-hopping gain. As a result, coverage deterioration occurs to some extent. Therefore, how to reduce a limitation of a frequency-hopping gain of a PUCCH resource and enhance coverage is a problem to be urgently resolved.

In the conventional technology, to improve PUCCH transmission coverage, it is proposed that each PUCCH resource may occupy a plurality of PRBs. A transmit power of the plurality of PRBs may be greater than the power of one PRB when the constraint conditions of the maximum transmit power and the power spectral density are satisfied. Therefore, the PUCCH transmission coverage is improved. However, because each PUCCH resource may occupy a plurality of PRBs, for a PUCCH whose frequency-domain position is farther away from the edge of the BWP, a frequency-hopping distance of the PUCCH is shorter, and a frequency-hopping gain is more limited. As a result, coverage degradation is severe.

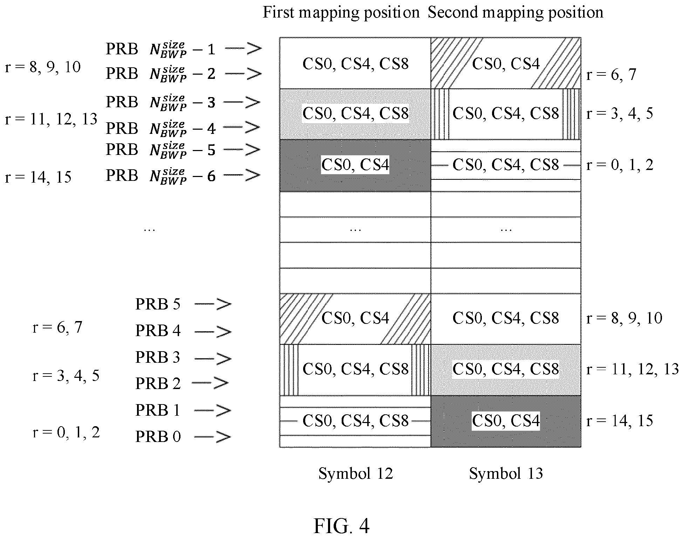

FIG. 4 is a schematic diagram of a time-domain position of another PUCCH resource according to the conventional technology. As shown in FIG. 4, it is assumed that one PUCCH resource occupies two RBs. Frequency-hopping distances of all PUCCH resources are equal to $N_{BWP}^{size} - 6$. The 16 PUCCH resources have a same frequency-domain frequency-hopping distance and a same frequency-hopping gain, but the PUCCH resources may be fragmented. For example, when only the PUCCH resource $r_{PUCCH}$ = 1 is used for transmission, there are still some idle spectrums between the edge of the BWP and the second mapping position of $r_{PUCCH}$ = 1, and a spectrum fragment may occur. In addition, it can be learned from FIG. 4 that $r_{PUCCH}$ = 0,1,2 is not at the edges on both sides of the BWP. Therefore, a time-domain position of the PUCCH resource in this manner causes a maximum frequency-hopping gain to be limited, and a most severe coverage degradation problem exists.

The technical problem to be resolved in embodiments of this application may include: In embodiments of this application, a frequency-domain position to which a PUCCH resource is mapped changes in consecutive time units, so that frequency-domain frequency-hopping distances of all PUCCH resources can be the same on average in a time dimension. In this way, frequency-hopping gains are the same on average in the time dimension. This can reduce a limitation of a frequency-hopping gain of the PUCCH resource and enhance coverage.

Based on the foregoing description, to better understand the communication method and the related apparatus provided in this application, the following first describes a network architecture to which embodiments of this application are applied.

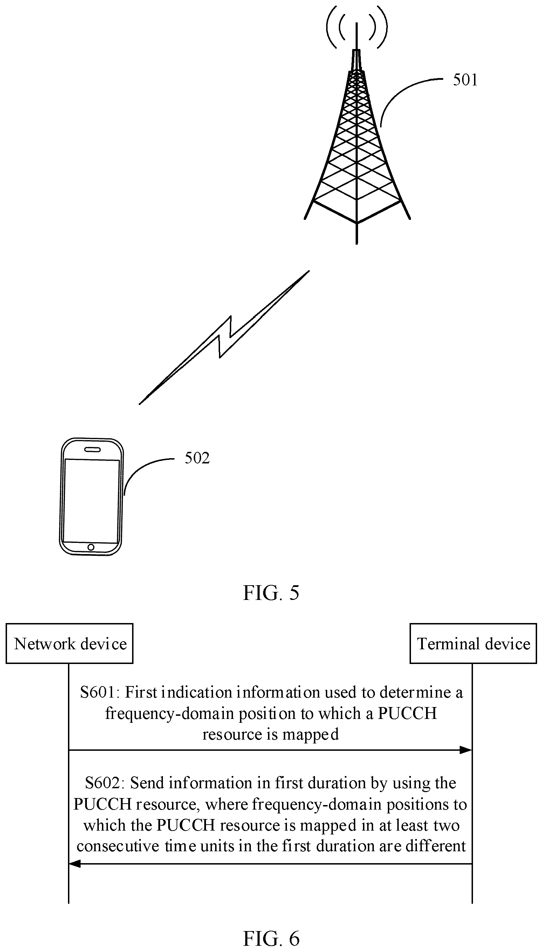

FIG. 5 is a schematic diagram of a network architecture according to an embodiment of this application. As shown in FIG. 5, the network architecture may include a network device 501 and a terminal device 502. The terminal device 502 may be connected to the network device 501 in a wireless manner, and may access a core network by using the network device 501. The terminal device 502 may be located at a fixed position, or may be mobile.

The network device 501 may be an entity for transmitting or receiving a signal, or may be a device for communicating with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a 5G network, a network device in a future evolved PLMN network, or the like. This is not limited in this embodiment of this application. The network device may be a device in a wireless network, for example, a radio access network (radio access network, RAN) node that enables a terminal to access the wireless network. Currently, the RAN node is, for example, a NodeB, a next generation NodeB gNB, a transmission reception point (transmission reception point, TRP), an evolved NodeB (evolved NodeB, eNB), a home NodeB, a baseband unit (baseband unit, BBU), or an access point (access point, AP) in a Wi-Fi system. In a network structure, the network device may include a central unit (central unit, CU) node, or a distributed unit (distributed unit, DU) node, or a RAN device including a CU node and a DU node.

The terminal device 502 is an entity on a user side for receiving or transmitting a signal, for example, user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a mobile phone (mobile phone), a cellular phone, a cordless phone, a session initiation protocol (session initiation protocol, SIP) phone, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device having a wireless communication function, a computing device, another processing device connected to a wireless modem, a vehicle-mounted device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable device (for example, a smartwatch, a smart band, or a pedometer), a terminal device in a 5G network, a terminal device in a future evolved public land mobile network (public land mobile network, PLMN), or the like. This is not limited in this embodiment of this application. The terminal device may be deployed on land, including being deployed indoor, outdoor, handheld, wearable, or vehicle-mounted; or may be deployed on a water surface (for example, on a ship); or may be deployed in the air (for example, on an airplane, a balloon, or a satellite).

By way of example and not limitation, in this embodiment of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, for example, smart watches or smart glasses, and devices that focus only on a type of application function and need to work with other devices such as smartphones, for example, various smart bands or smart jewelry for monitoring physical symptoms. Alternatively, in this embodiment of this application, the terminal may be a terminal in an internet of things (internet of things, IoT) system. The IoT is an important composition part of information technology development in the future, and has a main technical feature in which things are connected to a network by using a communication technology to implement an intelligent network for human-machine interconnection and thing-thing interconnection. In this embodiment of this application, an IoT technology may implement massive connections, deep coverage, and terminal power saving by using, for example, a narrow band (narrow band, NB) technology. In addition, in this embodiment of this application, the terminal may further include a sensor, for example, an intelligent printer, a train detector, or a gas station. Main functions of the terminal include collecting data (for some terminals), receiving control information and downlink data from a network device, sending an electromagnetic wave, and transmitting uplink data to the network device.

The technical solutions in this embodiment of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a global worldwide interoperability for microwave access (worldwide interoperability for microwave access, WiMAX) system. The technical solutions in this embodiment of this application may be further applied to another communication system, for example, a public land mobile network (public land mobile network, PLMN) system, a long term evolution advanced (LTE advanced, LTE-A) system, a fifth generation (the 5th generation, 5G) mobile communication system, a new radio (new radio, NR) system, a machine to machine (machine to machine, M2M) communication system, or another future evolved communication system. This is not limited in this embodiment of this application.

In this embodiment of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in this embodiment of this application, provided that a program that records code of the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke the program and execute the program.

It should be noted that a quantity and types of terminals included in the network architecture shown in FIG. 5 are merely examples, and this embodiment of this application is not limited thereto. For example, more or fewer terminals that communicate with the network device may be further included. For brevity, details are not described in the accompanying drawings. In addition, in the network architecture shown in FIG. 5, although the network device and the terminal are shown, the application scenario may include but is not limited to the network device and the terminal, for example, may further include a core network node or a device configured to bear a virtualized network function. This is clear to a person skilled in the art, and details are not described herein.

With reference to the foregoing network architecture, the following describes a communication method provided in embodiments of this application. FIG. 6 is a schematic flowchart of a communication method according to an embodiment of this application. A function performed by a terminal device in this embodiment may alternatively be performed by a module (for example, a chip) in the terminal device, and a function performed by a network device in this application may alternatively be performed by a module (for example, a chip) in the network device. As shown in FIG. 6, the communication method may include the following steps.

Step S601: The network device sends, to the terminal device, first indication information used to determine a frequency-domain position to which a PUCCH resource is mapped. Correspondingly, the terminal device receives, from the network device, the first indication information used to determine the frequency-domain position to which the PUCCH resource is mapped.

After receiving the first indication information from the network device, the terminal device determines, based on the first indication information, the frequency-domain position to which the PUCCH resource is mapped, and there may be the following two cases.

In a first case, the network device does not configure a dedicated PUCCH resource for the terminal device, and this may be understood as that when the PUCCH resource of the terminal device is provided by using a parameter pucch-ResourceCommon, the first indication information may include a SIB 1 and DCI. The SIB 1 carries the parameter pucch-ResourceCommon. The parameter pucch-ResourceCommon is an indication field in an RRC message. A hierarchy of the parameter in 38.331 is SIB 1→ServingCellConfigCommonSIB→UplinkConfigCommonSIB→BWP-Uplink-Common→PUCCH-ConfigCommon→pucch-ResourceCommon. A value of the parameter pucch-ResourceCommon is one of 0 to 15. The terminal device determines a PUCCH resource set based on the parameter pucch-ResourceCommon. The value of the parameter pucch-ResourceCommon corresponds to a value of an index in Table 1, that is, a row in Table 1 is determined as a configuration of the PUCCH resource set. The terminal device determines each PUCCH resource in the PUCCH resource set based on the configuration of the PUCCH resource set. UE uses an index $r_{PUCCH}$ to indicate each PUCCH resource in 16 PUCCH resources included in one PUCCH resource set, where $0 \leq r_{PUCCH} \leq 15$,

$$r_{PUCCH} = \left\lfloor \frac{2 \cdot n_{CCE,0}}{N_{CCE}} \right\rfloor + 2 \cdot \Delta_{PRI}$$

and $N_{CCE}$ is a quantity of control channel elements (control channel elements, CCEs) in a control resource set (control resource set, CORESET) of PDCCH reception, $n_{CCE,0}$ is an index of a first CCE on the PDCCH, and $\Delta_{PRI}$ is a value in a PUCCH resource indicator field in the DCI.

The frequency-domain position to which the PUCCH resource is mapped includes a start PRB index of the PUCCH resource in a first mapping position, a start PRB index of the PUCCH resource in a second mapping position, and an initial cyclic shift index of the PUCCH resource. The frequency-domain position to which the PUCCH resource is mapped may meet any one of the following rules.

Rule 1:

Manner 1: For indexes 0 to 15 of the PUCCH resource set, on the basis of Table 1, if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, the start PRB index of the PUCCH resource in the second mapping position is $N_{BWP}^{size} - (RB_{BWP}^{offset} + \lfloor r_{PUCCH}/N_{CS} \rfloor + 1) \cdot N$, and the initial cyclic shift index of the PUCCH resource is $r_{\text{PUCCH}}$ mod $N_{\text{CS}}$.

If $\lfloor r_{\text{PUCCH}}/8 \rfloor = 1$, the start PRB index of the PUCCH resource in the first mapping position is $N_{BWP}^{size} - (RB_{BWP}^{offset} + \lfloor (r_{\text{PUCCH}} - 8)/N_{CS} \rfloor + 1) \cdot N$, the start PRB index of the PUCCH resource in the second mapping position is $(RB_{BWP}^{offset} + \lfloor (r_{\text{PUCCH}} - 8)/N_{CS} \rfloor) \cdot N$, and the initial cyclic shift index of the PUCCH resource is ($r_{\text{PUCCH}}$ - 8 mod $N_{CS}$, where $RB_{BWP}^{offset}$ is a PRB offset, $r_{PUCCH}$ is an index of the PUCCH resource, $N_{CS}$ is a total quantity of initial cyclic shift indexes in a set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

For example, if N = 1, that is, a quantity of RBs transmitted on each PUCCH is 1, and it is assumed that the parameter pucch-ResourceCommon=1, the frequency-domain position to which the PUCCH resource is mapped is shown in FIG. 3. As shown in FIG. 3, based on the configuration of the PUCCH resource set whose index (Index) is 1 in Table 1, a time-domain resource position of the PUCCH resource occupies two symbols starting from a first symbol 12. A start PRB index of PUCCH resources $r_{PUCCH}$ = 0,1,2 in a first mapping position is a PRB 0, and a start PRB index in a second mapping position is a PRB $N_{BWP}^{size} - 1$; a start PRB index of PUCCH resources $r_{PUCCH}$ = 3,4,5 in a first mapping position is a PRB 1, and a start PRB index in a second mapping position is a PRB $N_{BWP}^{size} - 2$; a start PRB index of PUCCH resources $r_{PUCCH}$ = 6,7 in a first mapping position is a PRB 2, and a start PRB index in a second mapping position is a PRB $N_{BWP}^{size} - 3$; a start PRB index of PUCCH resources $r_{PUCCH}$ = 8,9,10 in a first mapping position is a PRB $N_{BWP}^{size} - 1$, and a start PRB index in a second mapping position is a PRB 0; a start PRB index of PUCCH resources $r_{PUCCH}$ = 11,12,13 in a first mapping position is a PRB $N_{BWP}^{size} - 2$, and a start PRB index in a second mapping position is a PRB 1; and a start PRB index of PUCCH resources $r_{PUCCH}$ = 14,15 in a first mapping position is a PRB $N_{BWP}^{size} - 3$, and a start PRB index in a second mapping position is a PRB 2.

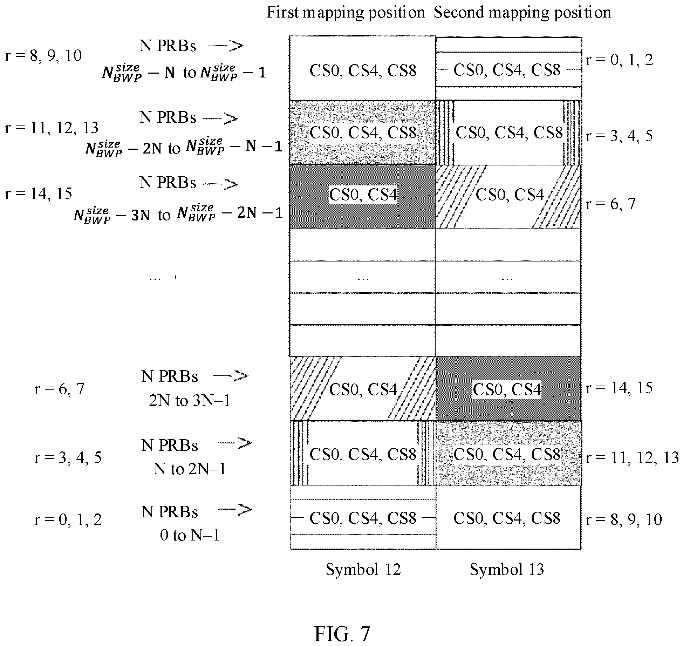

For another example, if N > 1, that is, a quantity of RBs transmitted on each PUCCH is greater than 1, it is assumed that the parameter pucch-ResourceCommon is 1. FIG. 7 is a schematic diagram of a time-frequency position of a PUCCH resource according to an embodiment of this application. As shown in FIG. 7, based on the configuration of the PUCCH resource set whose index (Index) is 1 in Table 1, a time-domain resource position of the PUCCH resource occupies two symbols starting from a first symbol 12. A start PRB index of PUCCH resources $r_{PUCCH}$ = 0,1,2 in a first mapping position is a PRB 0, and a start PRB index in a second mapping position is a PRB $N_{BWP}^{size} - N$; a start PRB index of PUCCH resources $r_{PUCCH}$ = 3,4,5 in a first mapping position is a PRB N, and a start PRB index in a second mapping position is a PRB $N_{BWP}^{size} - 2N$; a start PRB index of PUCCH resources $r_{PUCCH}$ = 6,7 in a first mapping position is a PRB 2N, and a start PRB index in a second mapping position is a PRB $N_{BWP}^{size} - 3N$; a start PRB index of PUCCH resources $r_{PUCCH}$ = 8,9,10 in a first mapping position is a PRB $N_{BWP}^{size} - N$, and a start PRB index in a second mapping position is a PRB 0; a start PRB index of PUCCH resources $r_{PUCCH}$ = 11,12,13 in a first mapping position is a PRB $N_{BWP}^{size} - 2N$, and a start PRB index in a second mapping position is a PRB N; and a start PRB index of PUCCH resources $r_{PUCCH}$ = 14,15 in a first mapping position is a PRB $N_{BWP}^{size} - 3N$, and a start PRB index in a second mapping position is a PRB 2N.

It may be understood that the frequency-domain position to which the PUCCH resource is mapped that is determined based on frequency division multiplexing in Manner 1 can reduce a possibility that different PUCCH resources overlap in frequency domain.

Further, according to regulatory constraints of different countries and regions, including an effective isotropic radiated power (effective isotropic radiated power, EIRP) constraint and/or a power spectral density (power spectral density, PSD) constraint, a maximum quantity of PRBs occupied by a transmission resource of a PUCCH format 0/1/4 varies according to a subcarrier spacing (SCS).

For a 120 kHz SCS, a maximum quantity of PRBs occupied by the resource of the PUCCH format 0/1/4 is 32.

For a 480 kHz SCS, a maximum quantity of PRBs occupied by the resource of the PUCCH format 0/1/4 is 8.

For a 960 kHz SCS, a maximum quantity of PRBs occupied by the resource of the PUCCH format 0/1/4 is 4.

Currently, for the 120/480/960 kHz SCS, a maximum quantity of PRBs occupied by the resource of the PUCCH format 0/1/4 is consistent, which is specifically 16.

Because for the 120/480/960 kHz SCS, the maximum quantity of PRBs occupied by the resource of the PUCCH format 0/1/4 is 16, there may be a shortage of RBs in different configurations in Table 1.

In the case of RB shortage, the frequency-domain position to which the PUCCH resource is mapped may be determined in any one of Manner 2 to Manner 6.

Manner 2: It is assumed that a PUCCH resource set index configured for the terminal device is 15, and a quantity of RBs available for a configured PUCCH format 0/1/4 is less than or equal to a threshold T. For example, a value of T is 3.

It may be understood that, it is assumed that the PUCCH resource set index configured for the terminal device is 15, and the quantity N of RBs available for the configured PUCCH format 0/1/4 is greater than the threshold T, some RBs of a PUCCH resource may exceed a maximum range of an initial uplink bandwidth part (UL BWP). For example, N = 4, and a first-hop frequency-domain resource index of $r_{PUCCH}$ = 0,1,2,3 determined by using Manner 1 is $4 \cdot \left\lfloor N_{BWP}^{size}/4 \right\rfloor$ to $4 \cdot \left\lfloor N_{BWP}^{size}/4 \right\rfloor + 3$. It is further assumed that when $N_{BWP}^{size} = 100$, the first-hop frequency-domain resource index of $r_{PUCCH}$ = 0,1,2,3 is 100 to 103, which is beyond an UL BWP range, and there is no available PUCCH resource. In other words, there is a shortage of RBs.

The quantity of RBs available for the configured PUCCH format 0/1/4 is limited to be less than or equal to a threshold, so that a case in which there is no available PUCCH resource, in other words, there is a shortage of RBs, can be avoided. In the configuration in which the PUCCH resource set index is 15, when the quantity of RBs occupied by the PUCCH resources is 2, corresponding 16 PUCCH resources are described by using Table (a) as an example.

**Table (a): 16 PUCCH resources when $r_{PUCCH}$ = 0,1, ... , 15**

| Index $r_{PUCCH}$ | First-hop PRB index | Second-hop PRB index | Initial cyclic shift index |
|---|---|---|---|
| $r_{PUCCH}$ = 0 | $2 \cdot \left\lfloor N_{BWP}^{size}/4 \right\rfloor$ to $2 \cdot \left\lfloor N_{BWP}^{size}/4 \right\rfloor + 1$ | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | CS0 |
| $r_{PUCCH}$ = 1 | $2 \cdot \left\lfloor N_{BWP}^{size}/4 \right\rfloor$ to $2 \cdot \left\lfloor N_{BWP}^{size}/4 \right\rfloor + 1$ | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | CS3 |
| $r_{PUCCH}$ = 2 | $2 \cdot \left\lfloor N_{BWP}^{size}/4 \right\rfloor$ to $2 \cdot \left\lfloor N_{BWP}^{size}/4 \right\rfloor + 1$ | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | CS6 |

(continued)

| Index $r_{PUCCH}$ | First-hop PRB index | Second-hop PRB index | Initial cyclic shift index |
|---|---|---|---|
| $r_{PUCCH}$ = 3 | $2 \cdot \left\lfloor N_{BWP}^{size}/4 \right\rfloor$ to $2 \cdot \left\lfloor N_{BWP}^{size}/4 \right\rfloor + 1$ | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | CS9 |
| $r_{PUCCH}$ = 4 | $2 \cdot \left\lfloor N_{BWP}^{size}/4 \right\rfloor + 2$ to $2 \cdot \left\lfloor N_{BWP}^{size}/4 \right\rfloor + 3$ | $N_{BWP}^{size} - 2 \cdot \left\lfloor N_{BWP}^{size}/4 \right\rfloor - 4$ to $N_{BWP}^{size} - 2 \cdot \left\lfloor N_{BWP}^{size}/4 \right\rfloor - 3$ | CS0 |
| $r_{PUCCH}$ = 5 | $2 \cdot \left\lfloor N_{BWP}^{size}/4 \right\rfloor + 2$ to $2 \cdot \left\lfloor N_{BWP}^{size}/4 \right\rfloor + 3$ | $N_{BWP}^{size} - 2 \cdot \left\lfloor N_{BWP}^{size}/4 \right\rfloor - 4$ $N_{BWP}^{size} - 2 \cdot \left\lfloor N_{BWP}^{size}/4 \right\rfloor - 3$ to | CS3 |
| $r_{PUCCH}$ = 6 | $2 \cdot \left\lfloor N_{BWP}^{size}/4 \right\rfloor + 2$ to $2 \cdot \left\lfloor N_{BWP}^{size}/4 \right\rfloor + 3$ | $N_{BWP}^{size} - 2 \cdot \left\lfloor N_{BWP}^{size}/4 \right\rfloor - 4$ to $N_{BWP}^{size} - 2 \cdot \left\lfloor N_{BWP}^{size}/4 \right\rfloor - 3$ | CS6 |
| $r_{PUCCH}$ = 7 | $2 \cdot \left\lfloor N_{BWP}^{size}/4 \right\rfloor + 2$ to $2 \cdot \left\lfloor N_{BWP}^{size}/4 \right\rfloor + 3$ | $N_{BWP}^{size} - 2 \cdot \left\lfloor N_{BWP}^{size}/4 \right\rfloor - 4$ to $N_{BWP}^{size} - 2 \cdot \left\lfloor N_{BWP}^{size}/4 \right\rfloor - 3$ | CS9 |
| $r_{PUCCH}$ = 8 | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | $2 \cdot \left\lfloor N_{BWP}^{size}/4 \right\rfloor$ to $2 \cdot \left\lfloor N_{BWP}^{size}/4 \right\rfloor + 1$ | CS0 |
| $r_{PUCCH}$ = 9 | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | $2 \cdot \left\lfloor N_{BWP}^{size}/4 \right\rfloor$ to $2 \cdot \left\lfloor N_{BWP}^{size}/4 \right\rfloor + 1$ | CS3 |
| $r_{PUCCH}$ = 10 | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | $2 \cdot \left\lfloor N_{BWP}^{size}/4 \right\rfloor$ to $2 \cdot \left\lfloor N_{BWP}^{size}/4 \right\rfloor + 1$ | CS6 |
| $r_{PUCCH}$ = 11 | $N_{BWP}^{size} - 2 \cdot \left\lfloor N_{BWP}^{size}/4 \right\rfloor - 2$ to $N_{BWP}^{size} - 2 \cdot \left\lfloor N_{BWP}^{size}/4 \right\rfloor - 1$ | $2 \cdot \left\lfloor N_{BWP}^{size}/4 \right\rfloor$ to $2 \cdot \left\lfloor N_{BWP}^{size}/4 \right\rfloor + 1$ | CS9 |
| $r_{PUCCH}$ = 12 | $N_{BWP}^{size} - 2 \cdot \left\lfloor N_{BWP}^{size}/4 \right\rfloor - 4$ to $N_{BWP}^{size} - 2 \cdot \left\lfloor N_{BWP}^{size}/4 \right\rfloor - 3$ | $2 \cdot \left\lfloor N_{BWP}^{size}/4 \right\rfloor + 2$ to $2 \cdot \left\lfloor N_{BWP}^{size}/4 \right\rfloor + 3$ | CS0 |
| $r_{PUCCH}$ = 13 | $N_{BWP}^{size} - 2 \cdot \left\lfloor N_{BWP}^{size}/4 \right\rfloor - 4$ to $N_{BWP}^{size} - 2 \cdot \left\lfloor N_{BWP}^{size}/4 \right\rfloor - 3$ | $2 \cdot \left\lfloor N_{BWP}^{size}/4 \right\rfloor + 2$ to $2 \cdot \left\lfloor N_{BWP}^{size}/4 \right\rfloor + 3$ | CS3 |

(continued)

| Index $r_{PUCCH}$ | First-hop PRB index | Second-hop PRB index | Initial cyclic shift index |
|---|---|---|---|
| $r_{PUCCH} = 14$ | $N_{BWP}^{size} - 2 \cdot \lfloor N_{BWP}^{size}/4 \rfloor - 4$ to $N_{BWP}^{size} - 2 \cdot \lfloor N_{BWP}^{size}/4 \rfloor - 3$ | $2 \cdot \lfloor N_{BWP}^{size}/4 \rfloor + 2$ to $2 \cdot \lfloor N_{BWP}^{size}/4 \rfloor + 3$ | CS6 |
| $r_{PUCCH} = 15$ | $N_{BWP}^{size} - 2 \cdot \lfloor N_{BWP}^{size}/4 \rfloor - 4$ to $N_{BWP}^{size} - 2 \cdot \lfloor N_{BWP}^{size}/4 \rfloor - 3$ | $2 \cdot \lfloor N_{BWP}^{size}/4 \rfloor + 2$ to $2 \cdot \lfloor N_{BWP}^{size}/4 \rfloor + 3$ | CS9 |

In the configuration in which the PUCCH resource set index is 15, when the quantity of RBs occupied by the PUCCH resource is 3, corresponding 16 PUCCH resources are described by using Table (b) as an example.

**Table (b): 16 PUCCH resources when $r_{PUCCH} = 0, 1, \ldots, 15$**

| Index $r_{PUCCH}$ | First-hop PRB index | Second-hop PRB index | Initial cyclic shift index |
|---|---|---|---|
| $r_{PUCCH} = 0$ | $3 \cdot \lfloor N_{BWP}^{size}/4 \rfloor$ to $3 \cdot \lfloor N_{BWP}^{size}/4 \rfloor + 2$ | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | CS0 |
| $r_{PUCCH} = 1$ | $3 \cdot \lfloor N_{BWP}^{size}/4 \rfloor$ to $3 \cdot \lfloor N_{BWP}^{size}/4 \rfloor + 2$ | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | CS3 |
| $r_{PUCCH} = 2$ | $3 \cdot \lfloor N_{BWP}^{size}/4 \rfloor$ to $3 \cdot \lfloor N_{BWP}^{size}/4 \rfloor + 2$ | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | CS6 |
| $r_{PUCCH} = 3$ | $3 \cdot \lfloor N_{BWP}^{size}/4 \rfloor$ to $3 \cdot \lfloor N_{BWP}^{size}/4 \rfloor + 2$ | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | CS9 |
| $r_{PUCCH} = 4$ | $3 \cdot \lfloor N_{BWP}^{size}/4 \rfloor + 3$ to $3 \cdot \lfloor N_{BWP}^{size}/4 \rfloor + 5$ | $N_{BWP}^{size} - 3 \cdot \lfloor N_{BWP}^{size}/4 \rfloor - 6$ to $N_{BWP}^{size} - 3 \cdot \lfloor N_{BWP}^{size}/4 \rfloor - 4$ | CS0 |
| $r_{PUCCH} = 5$ | $3 \cdot \lfloor N_{BWP}^{size}/4 \rfloor + 3$ to $3 \cdot \lfloor N_{BWP}^{size}/4 \rfloor + 5$ | $N_{BWP}^{size} - 3 \cdot \lfloor N_{BWP}^{size}/4 \rfloor - 6$ to $N_{BWP}^{size} - 3 \cdot \lfloor N_{BWP}^{size}/4 \rfloor - 4$ | CS3 |
| $r_{PUCCH} = 6$ | $3 \cdot \lfloor N_{BWP}^{size}/4 \rfloor + 3$ to $3 \cdot \lfloor N_{BWP}^{size}/4 \rfloor + 5$ | $N_{BWP}^{size} - 3 \cdot \lfloor N_{BWP}^{size}/4 \rfloor - 6$ to $N_{BWP}^{size} - 3 \cdot \lfloor N_{BWP}^{size}/4 \rfloor - 4$ | CS6 |
| $r_{PUCCH} = 7$ | $3 \cdot \lfloor N_{BWP}^{size}/4 \rfloor + 3$ to $3 \cdot \lfloor N_{BWP}^{size}/4 \rfloor + 5$ | $N_{BWP}^{size} - 3 \cdot \lfloor N_{BWP}^{size}/4 \rfloor - 6$ to $N_{BWP}^{size} - 3 \cdot \lfloor N_{BWP}^{size}/4 \rfloor - 4$ | CS9 |

(continued)

| Index $r_{PUCCH}$ | First-hop PRB index | Second-hop PRB index | Initial cyclic shift index |
|---|---|---|---|
| $r_{PUCCH}$ = 8 | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | $3 \cdot \lfloor N_{BWP}^{size}/4 \rfloor$ to $3 \cdot \lfloor N_{BWP}^{size}/4 \rfloor + 2$ | CS0 |
| $r_{PUCCH}$ = 9 | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | $3 \cdot \lfloor N_{BWP}^{size}/4 \rfloor$ to $3 \cdot \lfloor N_{BWP}^{size}/4 \rfloor + 2$ | CS3 |
| $r_{PUCCH}$ = 10 | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | $3 \cdot \lfloor N_{BWP}^{size}/4 \rfloor$ to $3 \cdot \lfloor N_{BWP}^{size}/4 \rfloor + 2$ | CS6 |
| $r_{PUCCH}$ = 11 | $N_{BWP}^{size} - 3 \cdot \lfloor N_{BWP}^{size}/4 \rfloor - 3$ to $N_{BWP}^{size} - 3 \cdot \lfloor N_{BWP}^{size}/4 \rfloor - 1$ | $3 \cdot \lfloor N_{BWP}^{size}/4 \rfloor$ to $3 \cdot \lfloor N_{BWP}^{size}/4 \rfloor + 2$ | CS9 |
| $r_{PUCCH}$ = 12 | $N_{BWP}^{size} - 3 \cdot \lfloor N_{BWP}^{size}/4 \rfloor - 6$ $N_{BWP}^{size} - 3 \cdot \lfloor N_{BWP}^{size}/4 \rfloor - 4$ to | $3 \cdot \lfloor N_{BWP}^{size}/4 \rfloor + 3$ to $3 \cdot \lfloor N_{BWP}^{size}/4 \rfloor + 5$ | CS0 |
| $r_{PUCCH}$ = 13 | $N_{BWP}^{size} - 3 \cdot \lfloor N_{BWP}^{size}/4 \rfloor - 6$ $N_{BWP}^{size} - 3 \cdot \lfloor N_{BWP}^{size}/4 \rfloor - 4$ to | $3 \cdot \lfloor N_{BWP}^{size}/4 \rfloor + 3$ to $3 \cdot \lfloor N_{BWP}^{size}/4 \rfloor + 5$ | CS3 |
| $r_{PUCCH}$ = 14 | $N_{BWP}^{size} - 3 \cdot \lfloor N_{BWP}^{size}/4 \rfloor - 6$ $N_{BWP}^{size} - 3 \cdot \lfloor N_{BWP}^{size}/4 \rfloor - 4$ to | $3 \cdot \lfloor N_{BWP}^{size}/4 \rfloor + 3$ to $3 \cdot \lfloor N_{BWP}^{size}/4 \rfloor + 5$ | CS6 |
| $r_{PUCCH}$ = 15 | $N_{BWP}^{size} - 3 \cdot \lfloor N_{BWP}^{size}/4 \rfloor - 6$ $N_{BWP}^{size} - 3 \cdot \lfloor N_{BWP}^{size}/4 \rfloor - 4$ to | $3 \cdot \lfloor N_{BWP}^{size}/4 \rfloor + 3$ to $3 \cdot \lfloor N_{BWP}^{size}/4 \rfloor + 5$ | CS9 |

It may be understood that, determining the frequency-domain position to which the PUCCH resource is mapped by using Manner 2 can avoid an RB shortage problem that occurs when the PUCCH resource set index configured for the terminal device is 15 and the quantity N of RBs occupied by the resource of the PUCCH format 0/1/4 is configured to be relatively large. In this embodiment of this application, the quantity of RBs occupied by the resource of the PUCCH format 0/1/4 may be restricted by using the threshold T, to alleviate the RB shortage problem.

Optionally, the frequency-domain position to which the PUCCH resource is mapped that is determined in Manner 2 may be applied to configurations of PUCCH resource set indexes 0 to 15 in Table 1.

Manner 3: For the PUCCH resource set indexes 0 to 15, on the basis of Table 1, if $\lfloor r_{PUCCH}/8 \rfloor = 0$, the start PRB index of the PUCCH resource in the first mapping position is

$$\left( RB_{BWP}^{offset} \cdot N \right) mod \, N_{BWP}^{size} + \lfloor r_{PUCCH}/N_{CS} \rfloor \cdot N$$, the start PRB index of the PUCCH resource in the second mapping position is $N_{BWP}^{size} - \left( RB_{BWP}^{offset} \cdot N \right) mod \, N_{BWP}^{size} - ( \lfloor r_{PUCCH}/N_{CS} \rfloor + 1) \cdot N$, and the initial cyclic shift index of the PUCCH resource is $r_{PUCCH}$ mod $N_{CS}$; or if $\lfloor r_{PUCCH}/8 \rfloor = 1$, the start PRB index of the PUCCH resource in the first mapping position is $N_{BWP}^{size} - \left(RB_{BWP}^{offset} \cdot N\right) \bmod N_{BWP}^{size} - (\lfloor (r_{PUCCH} - 8)/N_{CS} \rfloor + 1)$, the start PRB index of the PUCCH resource in the second mapping position is $\left(RB_{BWP}^{offset} \cdot N\right) \bmod N_{BWP}^{size} + (\lfloor (r_{PUCCH} - 8)/N_{CS} \rfloor) \cdot N$, and the initial cyclic shift index of the PUCCH resource is $(r_{PUCCH} - 8) \bmod N_{CS}$. $RB_{BWP}^{offset}$ is a PRB offset, $r_{PUCCH}$ is an index of the PUCCH resource, $N_{CS}$ is a total quantity of initial cyclic shift indexes in a set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

It may be understood that, in the configuration in which the PUCCH resource set index is 15 in Table 1, a configuration value of the PRB offset is $\lfloor N_{BWP}^{size}/4 \rfloor$, and the formula $\left(RB_{BWP}^{offset} \cdot N\right) \bmod N_{BWP}^{size}$ in Manner 3 is used to perform a modulo operation on a result of N times of an RB offset, so that a PUCCH frequency-domain resource index can be prevented from exceeding a BWP range due to an excessively large RB offset of the PUCCH resource. This can alleviate the RB shortage problem.

Optionally, the frequency-domain position to which the PUCCH resource is mapped that is determined in Manner 3 may be applied to the configurations of PUCCH resource set indexes 0 to 15 in Table 1.

Manner 4: For the PUCCH resource set indexes 0 to 15, on the basis of Table 1, if $\lfloor r_{PUCCH}/8 \rfloor = 0$, the start PRB index of the PUCCH resource in the first mapping position is $\left(\left(RB_{BWP}^{offset} + \lfloor r_{PUCCH}/N_{CS} \rfloor\right) \cdot N\right) \bmod N_{BWP}^{size}$, the start PRB index of the PUCCH resource in the second mapping position is $N_{BWP}^{size} - \left(\left(RB_{BWP}^{offset} + \lfloor r_{PUCCH}/N_{CS} \rfloor + 1\right) \cdot N\right) \bmod N_{BWP}^{size}$, and the initial cyclic shift index of the PUCCH resource is $r_{PUCCH} \bmod N_{CS}$; or if $\lfloor r_{PUCCH}/8 \rfloor = 1$, the start PRB index of the PUCCH resource in the first mapping position is $N_{BWP}^{size} - ((RB_{BWP}^{offset} + \lfloor (r_{PUCCH} - 8)/N_{CS} \rfloor + 1) \cdot N) \bmod N_{BWP}^{size}$, the start PRB index of the PUCCH resource in the second mapping position is $\left((RB_{BWP}^{offset} + \lfloor (r_{PUCCH} - 8)/N_{CS} \rfloor) \cdot N\right) \bmod N_{BWP}^{size}$, and the initial cyclic shift index of the PUCCH resource is $(r_{PUCCH} - 8) \bmod N_{CS}$. $RB_{BWP}^{offset}$ is the PRB offset $r_{PUCCH}$ is the index of the PUCCH resource, $N_{CS}$ is the total quantity of initial cyclic shift indexes in the set of initial cyclic shift indexes, $N_{BWP}^{size}$ is the quantity of PRBs occupied by the bandwidth part BWP, N is the quantity of PRBs occupied by the PUCCH resource, and N is a positive integer greater than or equal to 1.

It may be understood that, in the configuration in which the PUCCH resource set index is 15 in Table 1, the configuration value of the PRB offset is $\lfloor N_{BWP}^{size}/4 \rfloor$. In Manner 4, a modulo position of the calculation formula is adjusted, so that an initial RB position of the PUCCH resource does not exceed the BWP range. This can alleviate the RB shortage problem.

Optionally, the frequency-domain position to which the PUCCH resource is mapped that is determined in Manner 4 may be applied to the configurations of PUCCH resource set indexes 0 to 15 in Table 1.

Manner 5: For the PUCCH resource set indexes 0 to 15, on the basis of Table 1, if $\lfloor r_{PUCCH}/8 \rfloor = 0$, the start PRB index of the PUCCH resource in the first mapping position is $\left(\left(RB_{BWP}^{offset} + \lfloor r_{PUCCH}/N_{CS} \rfloor\right) \cdot N\right) \bmod N_{BWP}^{size}$, the start PRB index of the PUCCH resource in the second mapping position is $\left(N_{BWP}^{size} - \left(RB_{BWP}^{offset} + \lfloor r_{PUCCH}/N_{CS} \rfloor + 1\right) \cdot N\right) \bmod N_{BWP}^{size}$, and the initial cyclic shift index of the PUCCH resource is $r_{PUCCH}$ mod $N_{CS}$; or if $\lfloor r_{PUCCH}/8 \rfloor = 1$, the start PRB index of the PUCCH resource in the first mapping position is $(N_{BWP}^{size} - (RB_{BWP}^{offset} + \lfloor (r_{PUCCH} - 8)/N_{CS} \rfloor + 1) \cdot N) \bmod N_{BWP}^{size}$, the start PRB index of the PUCCH resource in the second mapping position is $\left( (RB_{BWP}^{offset} + \lfloor (r_{PUCCH} - 8)/N_{CS} \rfloor) \cdot N \right) \bmod N_{BWP}^{size}$, and the initial cyclic shift index of the PUCCH resource is ($r_{PUCCH}$ - 8 mod $N_{CS}$. $RB_{BWP}^{offset}$ is the PRB offset $r_{PUCCH}$ is the index of the PUCCH resource, $N_{CS}$ is the total quantity of initial cyclic shift indexes in the set of initial cyclic shift indexes, $N_{BWP}^{size}$ is the quantity of PRBs occupied by the bandwidth part BWP, N is the quantity of PRBs occupied by the PUCCH resource, and N is a positive integer greater than or equal to 1.

It may be understood that, in the configuration in which the PUCCH resource set index is 15 in Table 1, the configuration value of the PRB offset is $\lfloor N_{BWP}^{size}/4 \rfloor$. In Manner 5, the modulo position of the calculation formula is adjusted, so that the initial RB position of the PUCCH resource does not exceed the BWP range. This can alleviate the RB shortage problem.

Optionally, the frequency-domain position to which the PUCCH resource is mapped that is determined in Manner 5 may be applied to the configurations of PUCCH resource set indexes 0 to 15 in Table 1.

Manner 6: For the PUCCH resource set indexes 0 to 15, on the basis of Table 1, if $\lfloor r_{PUCCH}/8 \rfloor = 0$, the start PRB index of the PUCCH resource in the first mapping position is $RB_{BWP}^{offset} \cdot X + \lfloor r_{PUCCH}/N_{CS} \rfloor \cdot N$, the start PRB index of the PUCCH resource in the second mapping position is $N_{BWP}^{size} - RB_{BWP}^{offset} \cdot X - (\lfloor r_{PUCCH}/N_{CS} \rfloor + 1) \cdot N$, and the initial cyclic shift index of the PUCCH resource is $r_{PUCCH}$ mod $N_{CS}$; or if $\lfloor r_{PUCCH}/8 \rfloor = 1$, the start PRB index of the PUCCH resource in the first mapping position is $N_{BWP}^{size} - RB_{BWP}^{offset} \cdot X - (\lfloor (r_{PUCCH} - 8)/N_{CS} \rfloor + 1) \cdot N$, the start PRB index of the PUCCH resource in the second mapping position is $RB_{BWP}^{offset} \cdot X + (\lfloor (r_{PUCCH} - 8)/N_{CS} \rfloor) \cdot N$, and the initial cyclic shift index of the PUCCH resource is ($r_{PUCCH}$ - 8 mod $N_{CS}$. $RB_{BWP}^{offset}$ is the PRB offset $r_{PUCCH}$ is the index of the PUCCH resource, $N_{CS}$ is the total quantity of initial cyclic shift indexes in the set of initial cyclic shift indexes, $N_{BWP}^{size}$ is the quantity of PRBs occupied by the bandwidth part BWP, N is the quantity of PRBs occupied by the PUCCH resource, and N is a positive integer greater than or equal to 1. $X = \lfloor \sqrt[q]{N} \rfloor - p$ or $X = \lfloor \sqrt[q]{N} - p \rfloor$, where p and q are real numbers, or p and q are integers.

In a possible implementation, $X = \lfloor \sqrt[2]{N} \rfloor$, or $X = \lfloor \sqrt[3]{N} \rfloor$, ..., or $X = \lfloor \sqrt[n-1]{N} \rfloor$.

In a possible implementation, $X = \lfloor \sqrt[2]{N} \rfloor - 1$, or $X = \lfloor \sqrt[3]{N} \rfloor - 1$, ..., or $X = \lfloor \sqrt[n-1]{N} \rfloor - 1$.

In a possible implementation, $X = \lfloor \sqrt[2]{N} - 1 \rfloor$, or $X = \lfloor \sqrt[3]{N} - 1 \rfloor$, ..., or $X = \lfloor \sqrt[n-1]{N} - 1 \rfloor$.

In a possible implementation, $X = \lfloor \frac{N}{4} \rfloor$.

It may be understood that, in the configuration in which the PUCCH resource set index is 15 in Table 1, the configuration value of the PRB offset is $\lfloor N_{BWP}^{size}/4 \rfloor$. In the formula $RB_{BWP}^{offset} \cdot$ X in Manner 6, $X = \sqrt[q]{N} - p$. Because a maximum value of N is 16, a scaling degree of the RB offset is restricted by using the formula, and the RB offset does not increase linearly with an increase of N. This can alleviate the RB shortage problem. $\sqrt[q]{N}$ or $\sqrt[q]{N} - p$ may alternatively be an irrational number. When q is an integer greater than or equal to 2, as N increases, a change rate of increase of $\sqrt[q]{N}$ or $\sqrt[q]{N} - p$ decreases, and a change rate of scaling of the PRB offset decreases, so that the RB shortage problem can be alleviated.

Optionally, the frequency-domain position to which the PUCCH resource is mapped that is determined in Manner 6 may be applied to the configurations of PUCCH resource set indexes 0 to 15 in Table 1.

Rule 2: One PUCCH resource set includes a plurality of PUCCH resources, and the plurality of PUCCH resources are classified into a first PUCCH resource and a second PUCCH resource. The first PUCCH resource is a PUCCH resource closest to edges on both sides of the BWP, and the second PUCCH resource is another PUCCH resource other than the first PUCCH resource in the PUCCH resource set.

If $\lfloor r_{PUCCH1}/8 \rfloor = 0$ and $r_{PUCCH1} < \lceil 8/N_{CS} \rceil$, a start PRB index of the first PUCCH resource in a first mapping position is $(RB_{BWP}^{offset} + \lfloor r_{PUCCH1}/N_{CS} \rfloor) \cdot N$, a start PRB index of the first PUCCH resource in a second mapping position is $N_{BWP}^{size} - (RB_{BWP}^{offset} + \lfloor r_{PUCCH1}/N_{CS} \rfloor + 1) \cdot N$, and an initial cyclic shift index of the first PUCCH resource is $r_{PUCCH1} \bmod N_{CS}$.

If $\lfloor r_{PUCCH1}/8 \rfloor = 1$ and $r_{PUCCH1} - 8 < \lceil 8/N_{CS} \rceil$, a start PRB index of the first PUCCH resource in a first mapping position is $N_{BWP}^{size} - (RB_{BWP}^{offset} + \lfloor (r_{PUCCH1} - 8)/N_{CS} \rfloor + 1) \cdot N$, a start PRB index of the first PUCCH resource in a second mapping position is $(RB_{BWP}^{offset} + \lfloor (r_{PUCCH1} - 8)/N_{CS} \rfloor) \cdot N$, and an initial cyclic shift index of the first PUCCH resource is $(r_{PUCCH1} - 8) \bmod N_{CS}$.

If $\lfloor r_{PUCCH2}/8 \rfloor = 0$ and $r_{PUCCH2} \geq \lceil 8/N_{CS} \rceil$, a start PRB index of the second PUCCH resource in a first mapping position is $(RB_{BWP}^{offset} + \lfloor r_{PUCCH2}/N_{CS} \rfloor) \cdot N$, a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$, and an initial cyclic shift index of the second PUCCH resource is $r_{PUCCH2} \bmod N_{CS}$. The second PUCCH resource is a PUCCH resource other than the first PUCCH resource in the PUCCH resource set, each PUCCH resource in the second PUCCH resource has a same frequency-domain frequency-hopping distance, and the PUCCH resource set includes a plurality of PUCCH resources.

If $\lfloor r_{PUCCH2}/8 \rfloor = 1$ and $r_{PUCCH2} - 8 \geq \lceil 8/N_{CS} \rceil$, a start PRB index of the second PUCCH resource in a first mapping position is $N_{BWP}^{size} - (RB_{BWP}^{offset} + \lfloor (r_{PUCCH2} - 8)/N_{CS} \rfloor + 1) \cdot N$, a start PRB index of the second PUCCH resource in a second mapping position is $(RB_{BWP}^{offset} + 6 - N_{CS} - \lfloor (r_{PUCCH2} - 8)/N_{CS} \rfloor) \cdot N$, and an initial cyclic shift index of the second PUCCH resource is $(r_{PUCCH2} - 8) \bmod N_{CS}$, where $RB_{BWP}^{offset}$ is the PRB offset $r_{PUCCH1}$ is an index of the first PUCCH resource, $N_{CS}$ is the total quantity of initial cyclic shift indexes in the set of initial cyclic shift indexes, $N_{BWP}^{size}$ is the quantity of PRBs occupied by the bandwidth part BWP, N is the quantity of PRBs occupied by the PUCCH resource, and N is a positive integer greater than or equal to 1.

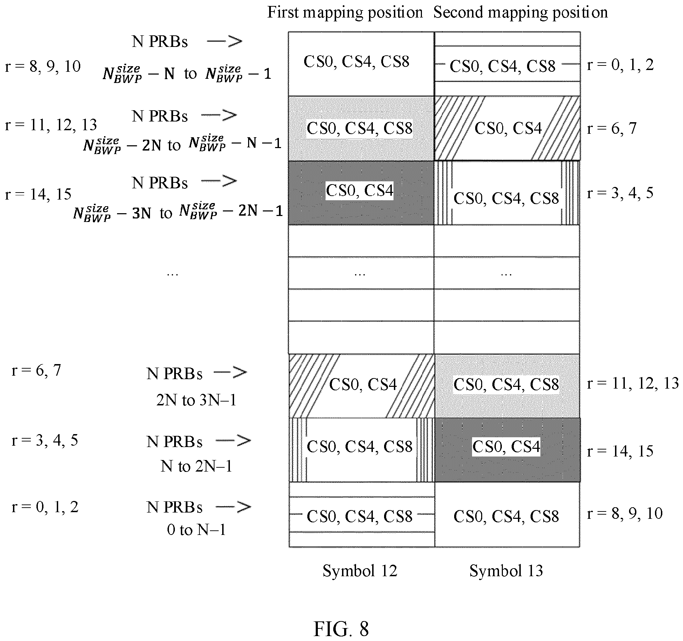

For example, it is assumed that the parameter pucch-ResourceCommon is 1. FIG. 8 is a schematic diagram of a time-frequency position of another PUCCH resource according to an embodiment of this application. As shown in FIG. 8, based on the configuration of the PUCCH resource set whose index (Index) is 1 in Table 1, a time-domain resource position of the PUCCH resource occupies two symbols starting from a first symbol 12. A start PRB index of first PUCCH resources $r_{PUCCH} = 0,1,2$ in a first mapping position is a PRB 0, and a start PRB index in a second mapping position is a PRB $N_{BWP}^{size} - N$; a start PRB index of second PUCCH resources $r_{PUCCH} = 3,4,5$ in a first mapping position is a PRB N, and a start PRB index in a second mapping position is a PRB $N_{BWP}^{size} - 3N$; a start PRB index of second PUCCH resources $r_{PUCCH}$ = 6,7 in a first mapping position is a PRB 2N, and a start PRB index in a second mapping position is a PRB $N_{BWP}^{size} - 2N$ ; a start PRB index of first PUCCH resources $r_{PUCCH}$ = 8,9,10 in a first mapping position is a PRB $N_{BWP}^{size} - N$ , and a start PRB index in a second mapping position is a PRB 0; a start PRB index of second PUCCH resources $r_{PUCCH}$ = 11,12,13 in a first mapping position is a PRB $N_{BWP}^{size} - 2N$ , and a start PRB index in a second mapping position is a PRB 2N; and a start PRB index of second PUCCH resources $r_{PUCCH}$ = 14,15 in a first mapping position is a PRB $N_{BWP}^{size} - 3N$ , and a start PRB index in a second mapping position is a PRB N.

In a second case, the network device configures a dedicated PUCCH resource for the terminal device, and this may be understood as that the network device configures the dedicated PUCCH resource by using dedicated RRC signaling. The first indication information may include one or more PUCCH resources dedicated to the terminal device, and may further include a PUCCH frequency hopping indication indicating the terminal device to perform frequency hopping. In an embodiment, the first indication information may be PUCCH-Config, where the PUCCH-Config is used to configure the dedicated PUCCH resource for the terminal device, and the PUCCH-Config is an indication field in the dedicated RRC signaling.

In the case of frequency hopping, a quantity of PRBs occupied by the PUCCH resource is N, where N is a positive integer greater than or equal to 1. The frequency-domain position to which the PUCCH resource is mapped may include the start PRB index of the PUCCH resource in the first mapping position and the start PRB index of the PUCCH resource in the second mapping position.

If transmission of the PUCCH resource occupies one PRB, the start PRB index of the PUCCH resource in the first mapping position may also be referred to as a PRB index of the PUCCH resource in the first mapping position, and the start PRB index of the PUCCH resource in the second mapping position may also be referred to as a PRB index of the PUCCH resource in the second mapping position. In an embodiment, the PRB index of the PUCCH resource in the first mapping position may be represented by a firstHopPRB, and the PRB index of the PUCCH resource in the second mapping position may be represented by a secondHopPRB.

If transmission of the PUCCH resource occupies a plurality of PRBs, in an embodiment, the start PRB index of the PUCCH resource in the first mapping position may be represented by a firstHopstartingPRB, and the start PRB index of the PUCCH resource in the second mapping position may be represented by a secondHopstartingPRB. In another embodiment, an end PRB index of the PUCCH resource in the first mapping position may be represented by a firstHopendingPRB, and an end PRB index of the PUCCH resource in the second mapping position may be represented by a secondHopendingPRB.

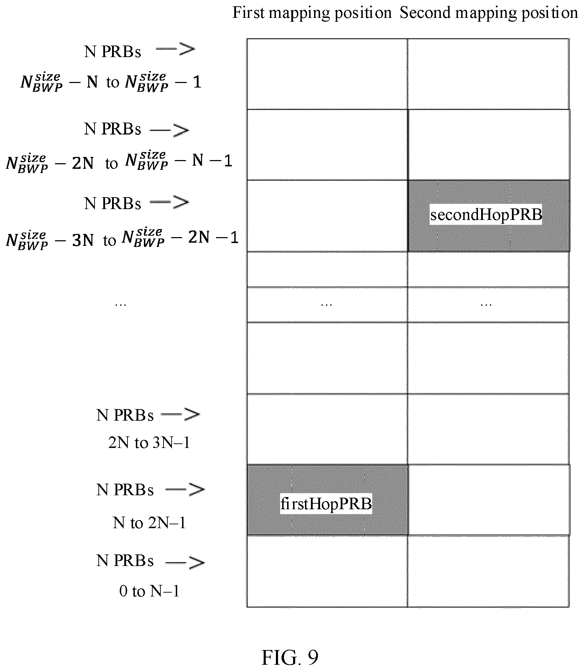

For example, FIG. 9 is a schematic diagram of a time-frequency position of still another PUCCH resource according to an embodiment of this application. As shown in FIG. 9, a PRB index of the PUCCH resource in a first mapping position may be represented by a firstHopPRB, and a PRB index in a second mapping position of the PUCCH resource may be represented by a secondHopPRB. The PRB index of the PUCCH resource in the first mapping position is a PRB N to a PRB 2N-1, and the PRB index of the PUCCH resource in the second mapping position is a PRB $N_{BWP}^{size} - 3N$ to PRB $N_{BWP}^{size} - 2N - 1$ .

Optionally, a frequency-domain position to which the PUCCH resource is mapped meets Rule 2 only if any one of the following conditions is met:

Condition 1: N is greater than or equal to (or greater than) a first threshold, and the first threshold is a positive integer greater than 1.
Condition 2: A bandwidth of a BWP is less than or equal to (or less than) a second threshold, and the second threshold is a positive integer. For example, when a subcarrier spacing (subcarrier spacing, SCS) is 120 K, the bandwidth of the BWP is less than X; when an SCS is 480 K, the bandwidth of the BWP is less than X/4; when an SCS is 960 K, the bandwidth of the BWP is less than X/8; or when an SCS is 1920 K, the bandwidth of the BWP is less than X/16. In an embodiment, X = 400. It may be understood that, when the bandwidth of the BWP is less than 400, frequency-hopping gains of different PUCCH resources differ greatly, and when the bandwidth of the BWP tends to be a larger value (for example, greater than 400), although different PUCCH resources have different frequency-hopping distances, main frequency-hopping gains can be obtained, and impact on coverage is little.

It should be noted that, in this embodiment of this application, the PUCCH resource may be understood as a PUCCH transmission resource (PUCCH transmission resource) in the standard, the first mapping position of the PUCCH resource may be understood as a first hop (first hop) in the standard, the start PRB index may be understood as a lowest PRB index, and the end PRB index may be understood as a highest PRB index. For example, if PRB indexes corresponding to a PUCCH resource are a PRB 0 to a PRB n-1, the start PRB index is the PRB 0, and the end PRB index is the PRB n-1. This is described herein in a unified manner, and details are not described subsequently.

Step S602: The terminal device sends information to the network device in first duration by using the PUCCH resource, where frequency-domain positions to which the PUCCH resource is mapped in at least two consecutive time units in the first duration are different.

After determining, based on the first indication information, the frequency-domain position to which the PUCCH resource is mapped, the terminal device may send the information to the network device within the first duration by using the PUCCH resource. In the at least two consecutive time units in the first duration, the frequency-domain position to which the PUCCH resource is mapped changes with a time unit. The information may be uplink control information of the PUCCH resource, and may include HARQ-ACK information, SR information, CSI, and the like.

It should be noted that, the first mapping position and the second mapping position included in the frequency-domain position to which the PUCCH resource is mapped are respectively located in different time-domain positions in a same time unit. The time unit may be a frame (frame), a subframe (subframe), a slot (slot), a symbol (symbol), or the like. For example, the first mapping position and the second mapping position are respectively located on two different symbols in a slot.

Optionally, the frequency-domain positions to which the PUCCH resource is mapped in the at least two consecutive time units in the first duration are different only if any one of the following conditions is met:

Condition 1: N is greater than or equal to (or greater than) a first threshold, and the first threshold is a positive integer greater than 1.

Condition 2: A bandwidth of a BWP is less than or equal to (or less than) a second threshold, and the second threshold is a positive integer. For example, when a subcarrier spacing (subcarrier spacing, SCS) is 120 K, the bandwidth of the BWP is less than X; when an SCS is 480 K, the bandwidth of the BWP is less than X/4; when an SCS is 960 K, the bandwidth of the BWP is less than X/8; or when an SCS is 1920 K, the bandwidth of the BWP is less than X/16. In an embodiment, X = 400.

A start time unit in the at least two consecutive time units may be determined in any one of the following manners:

Manner 1: The start time unit is determined according to a default specification of the protocol without a signaling indication.

Manner 2: The terminal device receives second indication information from the network device, and determines the start time unit based on the second indication information. The second indication information may indicate that the start time unit is a time unit in which the terminal device uses the PUCCH resource for the first time. Alternatively, the second indication information may include a time period offset, indicating that the start time unit is a time unit obtained by adding the time period offset to a time unit in which the terminal device receives the second indication information. For example, the terminal device receives the second indication information in a slot 1, and the time period offset is 3. In this case, the start time unit is a slot 4. Alternatively, the second indication information may include a time unit index value, indicating that the start time unit is a time unit corresponding to the time unit index value.

The frequency-domain position to which the PUCCH resource is mapped is in the at least two consecutive time units, and changes with the time units starting from the start time unit. Details are as follows:

For the frequency-domain position to which the PUCCH resource is mapped that is determined according to Rule 1 in the first case in step S601, that frequency-domain positions to which the PUCCH resource is mapped in the at least two consecutive time units are different may meet any one of the following implementations.

In a first implementation, the start PRB index of the PUCCH resource in the first mapping position and the start PRB index of the PUCCH resource in the second mapping position are cyclically shifted by N PRBs from both sides of the BWP to the middle of the BWP. To be specific, in the at least two consecutive time units, if $\lfloor r_{\text{PUCCH}}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{\text{PUCCH}}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes.

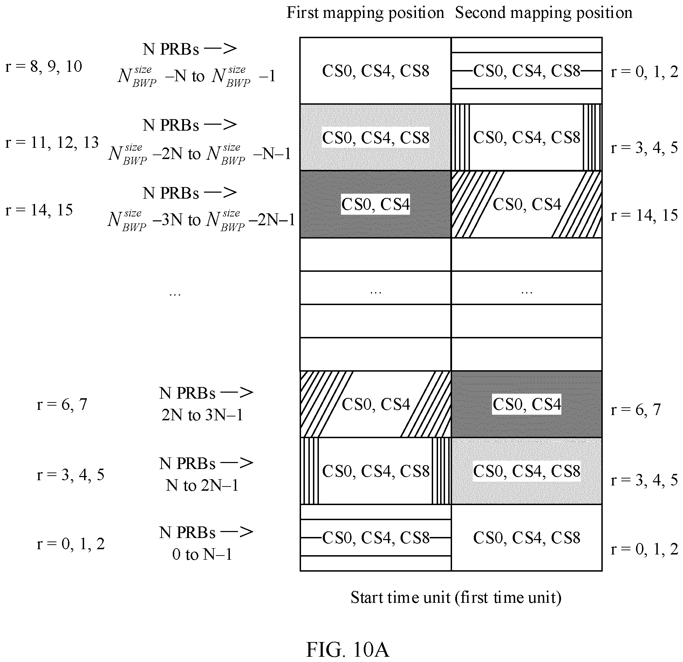

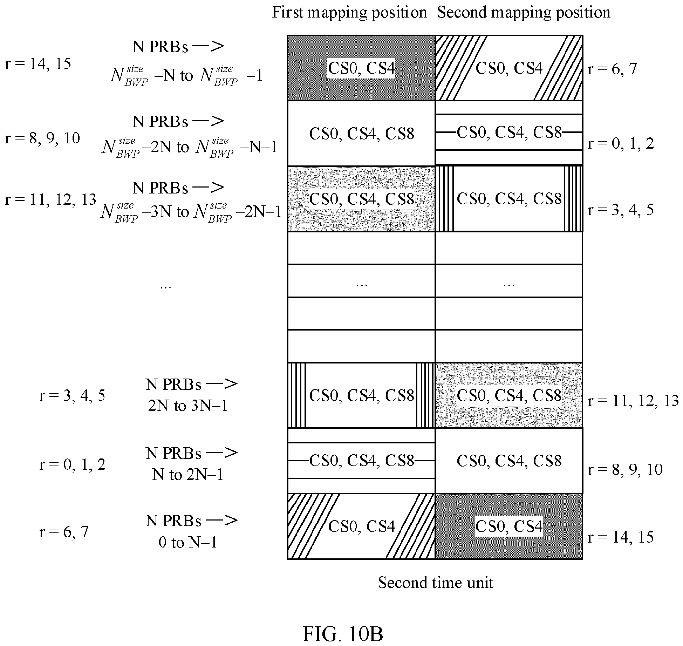

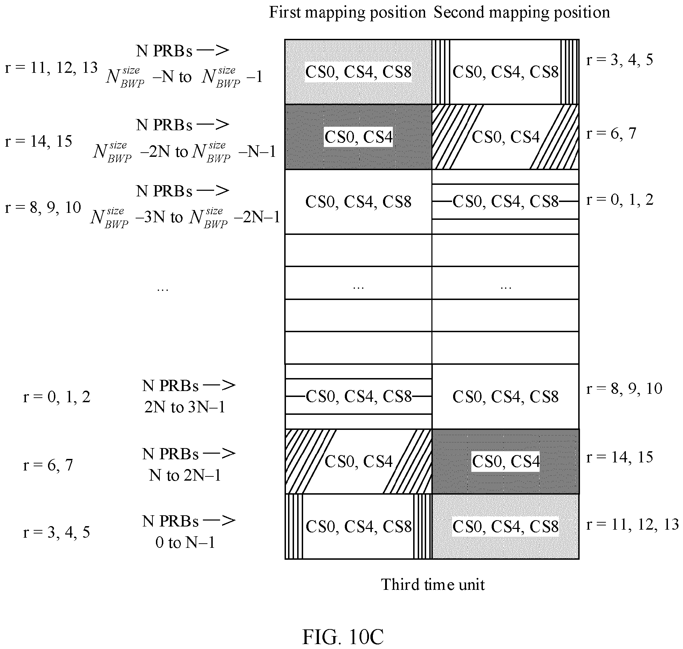

For example, FIG. 10A to FIG. 10C are a schematic diagram of different frequency-domain positions to which a PUCCH resource is mapped according to an embodiment of this application. As shown in FIG. 10A to FIG. 10C, in a start time unit (a first time unit), for frequency-domain positions to which a PUCCH resource is mapped shown in FIG.

7, the frequency-domain positions to which the PUCCH resource is mapped are different starting from the first time unit in consecutive time units. PUCCH resources $r_{PUCCH}$ = 0,1,2 are used as an example for description. In the first time unit, a second time unit, and a third time unit, start PRB indexes of the PUCCH resources $r_{PUCCH}$ = 0,1,2 in a first mapping position are a PRB 0, a PRB N, and a PRB 2N respectively, and start PRB indexes of the PUCCH resources $r_{PUCCH}$ = 0,1,2 in a second mapping position are a PRB $N_{BWP}^{size} - N$, a PRB $N_{BWP}^{size} - 2N$, and a PRB $N_{BWP}^{size} - 3N$ respectively. In the first time unit, a PUCCH resource frequency-hopping distance of $r_{PUCCH}$ = 0,1,2,8,9,10 is $N_{BWP}^{size} - N$, a PUCCH resource frequency-hopping distance of $r_{PUCCH}$ = 3,4,5,11,12,13 is $N_{BWP}^{size} - 3N$, and a PUCCH resource frequency-hopping distance of $r_{PUCCH}$ = 6,7,14,15 is $N_{BWP}^{size} - 5N$. In the second time unit, a PUCCH resource frequency-hopping distance of $r_{PUCCH}$ = 0,1,2,8,9,10 is $N_{BWP}^{size} - 3N$, a PUCCH resource frequency-hopping distance of $r_{PUCCH}$ = 3,4,5,11,12,13 is $N_{BWP}^{size} - 5N$, and a PUCCH resource frequency-hopping distance of $r_{PUCCH}$ = 6,7,14,15 is $N_{BWP}^{size} - N$. In the third time unit, a PUCCH resource frequency-hopping distance of $r_{PUCCH}$ = 0,1,2,8,9,10 is $N_{BWP}^{size} - 5N$, a PUCCH resource frequency-hopping distance of $r_{PUCCH}$ = 3,4,5,11,12,13 is $N_{BWP}^{size} - N$, and a PUCCH resource frequency-hopping distance of $r_{PUCCH}$ = 6,7,14,15 is $N_{BWP}^{size} - 3N$. After the three time units, a time-domain average value of all PUCCH resource frequency-hopping distances is $N_{BWP}^{size} - 3N$.

It should be noted that, a time-domain change cycle of a PUCCH resource frequency-hopping distance may be determined based on $N_{CS}$. According to the configuration in Table 1, for example, when $N_{CS}$ = 2, the time-domain change cycle of the PUCCH resource frequency-hopping distance is a cycle of four time units; when $N_{CS}$ = 3, the time-domain change cycle of the PUCCH resource frequency-hopping distance is a cycle of three time units; and when $N_{CS}$ = 4, the time-domain change cycle of the PUCCH resource frequency-hopping distance is a cycle of two time units. FIG. 10A to FIG. 10C are an example described by using a frequency-domain position to which a PUCCH resource is mapped that is in FIG. 7 as a start time unit. FIG. 7 shows a frequency-domain position to which a PUCCH resource is mapped that is determined based on a configuration of a PUCCH resource set whose index (Index) is 1 in Table 1, where $N_{CS}$ = 3. Therefore, a time-domain change cycle in FIG. 10A to FIG. 10C is a cycle of three time units. The following embodiments are similar, and are described herein in a unified manner. Details are not described subsequently.

In a second implementation, the start PRB index of the PUCCH resource in the first mapping position and the start PRB index of the PUCCH resource in the second mapping position are cyclically shifted by N PRBs from the middle of the BWP to both sides of the BWP. To be specific, in the at least two consecutive time units, if $\lfloor r_{PUCCH}/8 \rfloor = 0$, the start PRB index of the PUCCH resource in the first mapping position is cyclically shifted by N PRBs in descending order of the PRB indexes, and the start PRB index of the PUCCH resource in the second mapping position is cyclically shifted by N PRBs in ascending order of the PRB indexes; or if $\lfloor r_{PUCCH}/8 \rfloor = 1$, the start PRB index of the PUCCH resource in the first mapping position is cyclically shifted by N PRBs in ascending order of the PRB indexes, and the start PRB index of the PUCCH resource in the second mapping position is cyclically shifted by N PRBs in descending order of the PRB indexes.

In an embodiment, the start PRB index of the PUCCH resource in the first mapping position and the start PRB index of the PUCCH resource in the second mapping position may be cyclically shifted by N PRBs from both sides of the BWP to the middle of the BWP or from the middle of the BWP to both sides of the BWP, and the following rule may be met:

In an $M^{th}$ time unit in the at least two consecutive time units, if $\lfloor r_{PUCCH}/8 \rfloor = 0$, the start PRB index of the PUCCH resource in the first mapping position is $(RB_{BWP}^{offset} + \lfloor r_{PUCCH}/N_{CS} \rfloor + ((M - 1 + K) \bmod \lceil 8/N_{CS} \rceil)) \cdot N$, and the start PRB index of the PUCCH resource in the second mapping position is $N_{BWP}^{size} - (RB_{BWP}^{offset} + \lfloor r_{PUCCH}/N_{CS} \rfloor + 1 + ((M -$

$$1 + K) \bmod \lceil 8/N_{CS} \rceil) \Big) \cdot N$$ ; or if $\lfloor r_{\text{PUCCH}}/8 \rfloor = 1$ , the start PRB index of the PUCCH resource in the first mapping position is $$N_{BWP}^{size} - (RB_{BWP}^{offset} + \lfloor (r_{PUCCH} - 8)/N_{CS} \rfloor + 1 + ((M - 1 + K) \bmod \lceil 8/N_{CS} \rceil)) \cdot N$$ , and the start PRB index of the PUCCH resource in the second mapping position is

$$(RB_{BWP}^{offset} + \lfloor (r_{PUCCH} - 8)/N_{CS} \rfloor + ((M - 1 + K) \bmod \lceil 8/N_{CS} \rceil)) \cdot N$$ , where K is a fixed time-domain cyclic offset, and M is an integer greater than or equal to 1. K is a positive integer greater than or equal to 1, and

$K \neq \lceil 8/N_{CS} \rceil \cdot k - 1$ . $k$ is a positive integer greater than or equal to 1. For example, it is assumed that $N_{CS}$ = 3. If $K$ = 0, the start PRB index of the PUCCH resource in the first mapping position and the start PRB index of the PUCCH resource in the second mapping position are cyclically shifted by N PRBs from both sides of the BWP to the middle of the BWP; or if $K$ = 1, the start PRB index of the PUCCH resource in the first mapping position and the start PRB index of the PUCCH resource in the second mapping position are cyclically shifted by N PRBs from the middle of the BWP to both sides of the BWP.

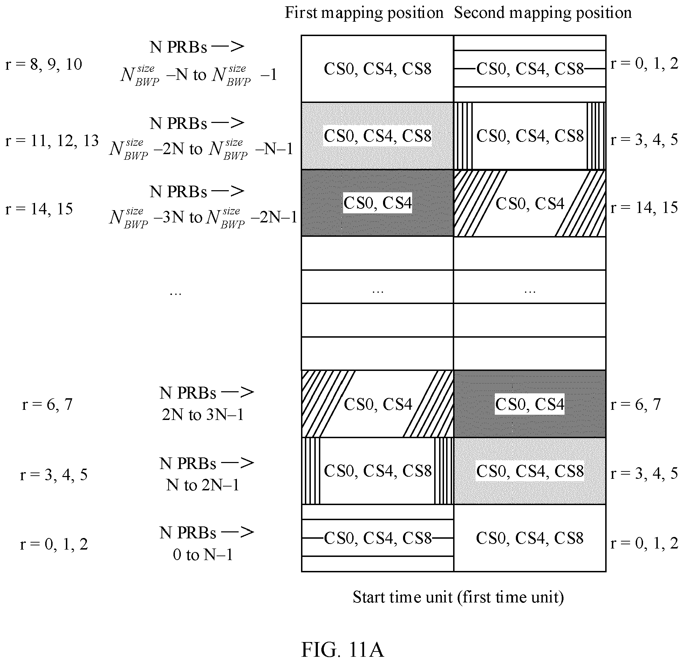

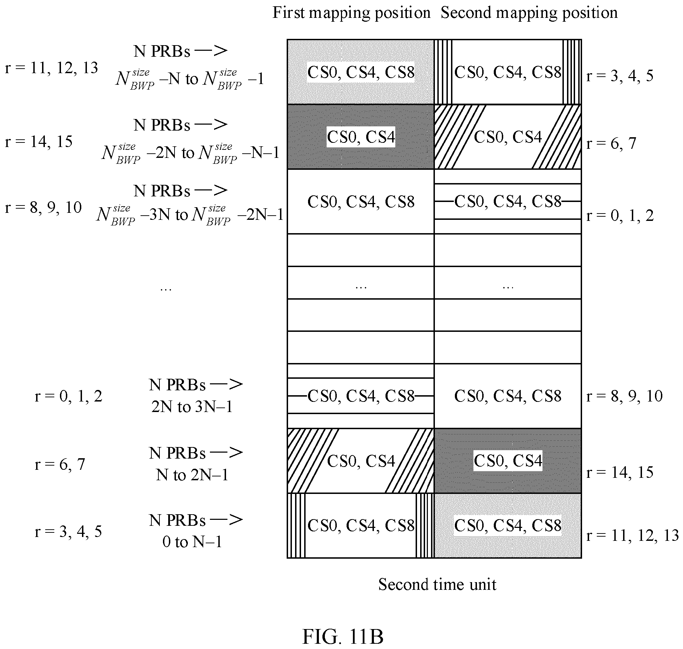

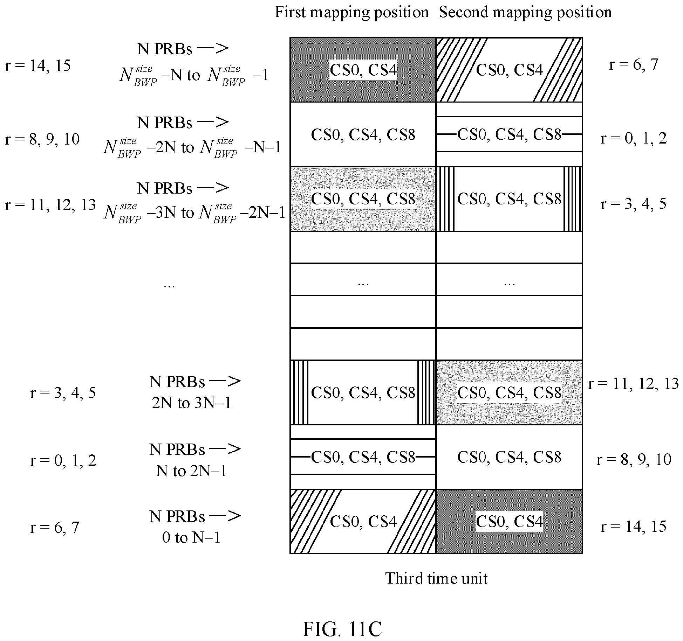

For example, FIG. 11A to FIG. 11C are a schematic diagram of different frequency-domain positions to which another PUCCH resource is mapped according to an embodiment of this application. As shown in FIG. 11A to FIG. 11C, in a start time unit (a first time unit), for frequency-domain positions to which a PUCCH resource is mapped shown in FIG. 7, the frequency-domain positions to which the PUCCH resource is mapped are different starting from the first time unit in consecutive time units. PUCCH resources $r_{PUCCH}$ = 0,1,2 are used as an example for description. In the first time unit, a second time unit, and a third time unit, start PRB indexes of the PUCCH resources $r_{PUCCH}$ = 0,1,2 in a first mapping position are a PRB 0, a PRB 2N, and a PRB N respectively, and start PRB indexes of the PUCCH resources $r_{PUCCH}$ = 0,1,2 in a second mapping position are a PRB $N_{BWP}^{size} - N$ , a PRB $N_{BWP}^{size} - 3N$ , and a PRB $N_{BWP}^{size} - 2N$ respectively. In the first time unit, a PUCCH resource frequency-hopping distance of $r_{PUCCH}$ = 0,1,2,8,9,10 is $N_{BWP}^{size} - N$ , a PUCCH resource frequency-hopping distance of $r_{PUCCH}$ = 3,4,5,11,12,13 is $N_{BWP}^{size} - 3N$ , and a PUCCH resource frequency-hopping distance of $r_{PUCCH}$ = 6,7,14,15 is $N_{BWP}^{size} - 5N$ . In the second time unit, a PUCCH resource frequency-hopping distance of $r_{PUCCH}$ = 0,1,2,8,9,10 is $N_{BWP}^{size} - 5N$ , a PUCCH resource frequency-hopping distance of $r_{PUCCH}$ = 3,4,5,11,12,13 is $N_{BWP}^{size} - N$ , and a PUCCH resource frequency-hopping distance of $r_{PUCCH}$ = 6,7,14,15 is $N_{BWP}^{size} - 3N$ . In the third time unit, a PUCCH resource frequency-hopping distance of $r_{PUCCH}$ = 0,1,2,8,9,10 is $N_{BWP}^{size} - 3N$ , a PUCCH resource frequency-hopping distance of $r_{PUCCH}$ = 3,4,5,11,12,13 is $N_{BWP}^{size} - 5N$ , and a PUCCH resource frequency-hopping distance of $r_{PUCCH}$ = 6,7,14,15 is $N_{BWP}^{size} - N$ . After the three time units, a time-domain average value of all PUCCH resource frequency-hopping distances is $N_{BWP}^{size} - 3N$ .

For the frequency-domain positions to which the PUCCH resource is mapped that are determined according to Rule 2 in the first case in step S601, that the frequency-domain positions to which the PUCCH resource is mapped in the at least two consecutive time units are different may have the following four implementations.

In a first implementation, start PRB indexes of a first PUCCH resource and a second PUCCH resource in a first mapping position and a second mapping position are cyclically shifted by N PRBs from both sides of the BWP to the middle of the BWP. To be specific, in the at least two consecutive time units, if $\lfloor r_{\text{PUCCH}1}/8 \rfloor = 0$ and $\lfloor r_{\text{PUCCH}2}/8 \rfloor = 0$ , the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{\text{PUCCH}1}/8 \rfloor = 1$ and $\lfloor r_{\text{PUCCH}2}/8 \rfloor = 1$ , the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes.

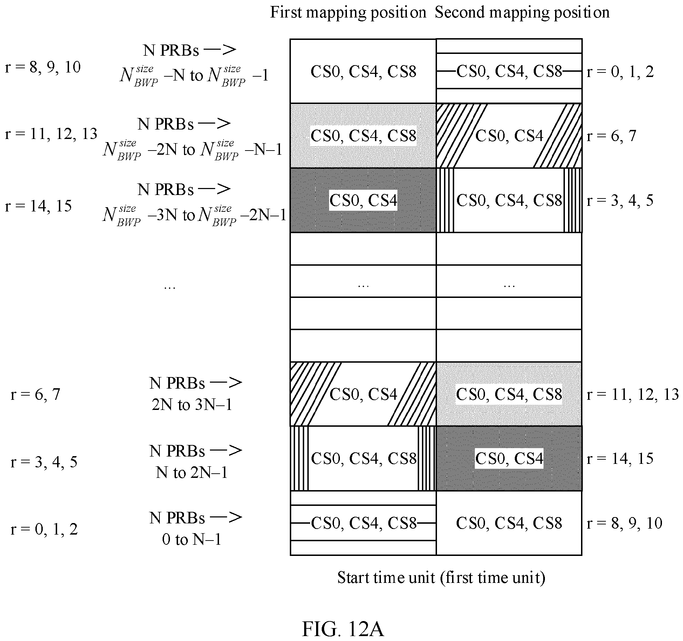

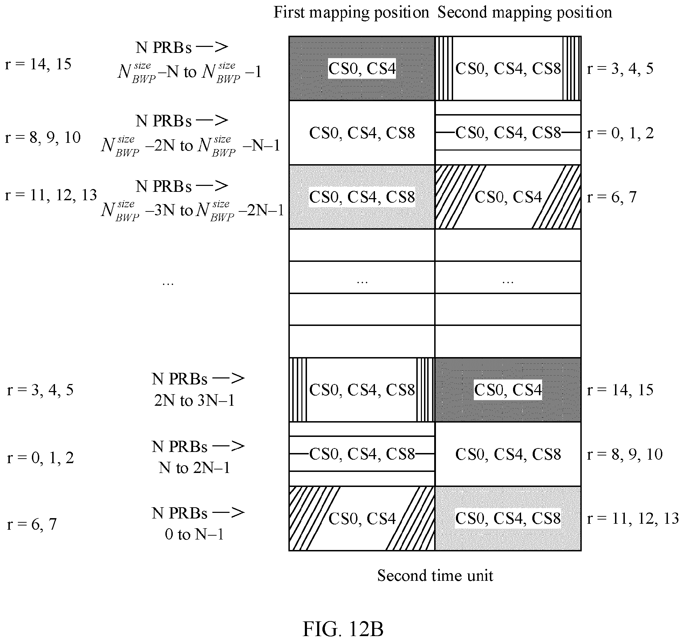

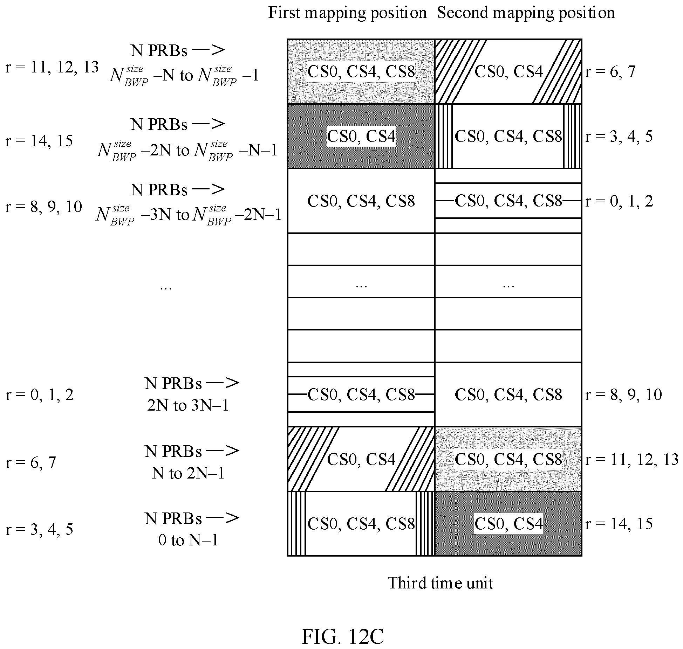

For example, FIG. 12A to FIG. 12C are a schematic diagram of different frequency-domain positions to which still another PUCCH resource is mapped according to an embodiment of this application. As shown in FIG. 12A to FIG. 12C, in a start time unit (a first time unit), for frequency-domain positions to which a first PUCCH resource and a second PUCCH resource are mapped shown in FIG. 8, the frequency-domain positions to which the first PUCCH resource and the second PUCCH resource are mapped are different starting from the first time unit in consecutive time units. A first mapping position index, a second mapping position index, and an initial cyclic shift index of the first PUCCH resource and the second PUCCH resource in the first time unit, a second time unit, and a third time unit are respectively shown in Table 4, Table 5, and Table 6.

**Table 4: Frequency-domain positions of the first PUCCH resource and the second PUCCH resource in the first time unit**

| Index $r_{PUCCH1}/r_{PUCCH2}$ | First-hop PRB index | Second-hop PRB index | Initial cyclic shift index |
|---|---|---|---|
| $r_{PUCCH1} = 0$ | 0 to N-1 | $N_{BWP}^{size} - N \text{ to } N_{BWP}^{size} - 1$ | CS0 |
| $r_{PUCCH1} = 1$ | 0 to N-1 | $N_{BWP}^{size} - N \text{ to } N_{BWP}^{size} - 1$ | CS4 |
| $r_{PUCCH1} = 2$ | 0 to N-1 | $N_{BWP}^{size} - N \text{ to } N_{BWP}^{size} - 1$ | CS8 |
| $r_{PUCCH2} = 3$ | N to 2N-1 | $N_{BWP}^{size} - 3N \text{ to } N_{BWP}^{size} - 2N - 1$ | CS0 |
| $r_{PUCCH2} = 4$ | N to 2N-1 | $N_{BWP}^{size} - 3N \text{ to } N_{BWP}^{size} - 2N - 1$ | CS4 |
| $r_{PUCCH2} = 5$ | N to 2N-1 | $N_{BWP}^{size} - 3N \text{ to } N_{BWP}^{size} - 2N - 1$ | CS8 |
| $r_{PUCCH2} = 6$ | 2N to 3N-1 | $N_{BWP}^{size} - 2N \text{ to } N_{BWP}^{size} - N - 1$ | CS0 |
| $r_{PUCCH2} = 7$ | 2N to 3N-1 | $N_{BWP}^{size} - 2N \text{ to } N_{BWP}^{size} - N - 1$ | CS4 |
| $r_{PUCCH1} = 8$ | $N_{BWP}^{size} - N \text{ to } N_{BWP}^{size} - 1$ | 0 to N-1 | CS0 |
| $r_{PUCCH1} = 9$ | $N_{BWP}^{size} - N \text{ to } N_{BWP}^{size} - 1$ | 0 to N-1 | CS4 |
| $r_{PUCCH1} = 10$ | $N_{BWP}^{size} - N \text{ to } N_{BWP}^{size} - 1$ | 0 to N-1 | CS8 |
| $r_{PUCCH2} = 11$ | $N_{BWP}^{size} - 2N \text{ to } N_{BWP}^{size} - N - 1$ | 2N to 3N-1 | CS0 |
| $r_{PUCCH2} = 12$ | $N_{BWP}^{size} - 2N \text{ to } N_{BWP}^{size} - N - 1$ | 2N to 3N-1 | CS4 |
| $r_{PUCCH2} = 13$ | $N_{BWP}^{size} - 2N \text{ to } N_{BWP}^{size} - N - 1$ | 2N to 3N-1 | CS8 |
| $r_{PUCCH2} = 14$ | $N_{BWP}^{size} - 3N \text{ to } N_{BWP}^{size} - 2N - 1$ | N to 2N-1 | CS0 |

(continued)

| Index $r_{PUCCH1}$/ $r_{PUCCH2}$ | First-hop PRB index | Second-hop PRB index | Initial cyclic shift index |
|---|---|---|---|
| $r_{PUCCH2}$ = 15 | $N_{BWP}^{size} - 3N \ to \ N_{BWP}^{size} - 2N - 1$ | N to 2N-1 | CS4 |

**Table 5: Frequency-domain positions of the first PUCCH resource and the second PUCCH resource in the second time unit**

| Index $r_{PUCCH1}$/ $r_{PUCCH2}$ | First-hop PRB index | Second-hop PRB index | Initial cyclic shift index |
|---|---|---|---|
| $r_{PUCCH1}$ = 0 | N to 2N-1 | $N_{BWP}^{size} - 2N \ to \ N_{BWP}^{size} - N - 1$ | CS0 |
| $r_{PUCCH1}$ = 1 | N to 2N-1 | $N_{BWP}^{size} - 2N \ to \ N_{BWP}^{size} - N - 1$ | CS4 |
| $r_{PUCCH1}$ = 2 | N to 2N-1 | $N_{BWP}^{size} - 2N \ to \ N_{BWP}^{size} - N - 1$ | CS8 |
| $r_{PUCCH2}$ = 3 | 2N to 3N-1 | $N_{BWP}^{size} - N \ to \ N_{BWP}^{size} - 1$ | CS0 |
| $r_{PUCCH2}$ = 4 | 2N to 3N-1 | $N_{BWP}^{size} - N \ to \ N_{BWP}^{size} - 1$ | CS4 |
| $r_{PUCCH2}$ = 5 | 2N to 3N-1 | $N_{BWP}^{size} - N \ to \ N_{BWP}^{size} - 1$ | CS8 |
| $r_{PUCCH2}$ = 6 | 0 to N-1 | $N_{BWP}^{size} - 3N \ to \ N_{BWP}^{size} - 2N - 1$ | CS0 |
| $r_{PUCCH2}$ = 7 | 0 to N-1 | $N_{BWP}^{size} - 3N \ to \ N_{BWP}^{size} - 2N - 1$ | CS4 |
| $r_{PUCCH1}$ = 8 | $N_{BWP}^{size} - 2N \ to \ N_{BWP}^{size} - N - 1$ | N to 2N-1 | CS0 |
| $r_{PUCCH1}$ = 9 | $N_{BWP}^{size} - 2N \ to \ N_{BWP}^{size} - N - 1$ | N to 2N-1 | CS4 |
| $r_{PUCCH1}$ = 10 | $N_{BWP}^{size} - 2N \ to \ N_{BWP}^{size} - N - 1$ | N to 2N-1 | CS8 |
| $r_{PUCCH2}$ = 11 | $N_{BWP}^{size} - 3N \ to \ N_{BWP}^{size} - 2N - 1$ | 0 to N-1 | CS0 |
| $r_{PUCCH2}$ = 12 | $N_{BWP}^{size} - 3N \ to \ N_{BWP}^{size} - 2N - 1$ | 0 to N-1 | CS4 |
| $r_{PUCCH2}$ = 13 | $N_{BWP}^{size} - 3N \ to \ N_{BWP}^{size} - 2N - 1$ | 0 to N-1 | CS8 |
| $r_{PUCCH2}$ = 14 | $N_{BWP}^{size} - N \ to \ N_{BWP}^{size} - 1$ | 2N to 3N-1 | CS0 |
| $r_{PUCCH2}$ = 15 | $N_{BWP}^{size} - N \ to \ N_{BWP}^{size} - 1$ | 2N to 3N-1 | CS4 |

**Table 6: Frequency-domain positions of the first PUCCH resource and the second PUCCH resource in the third time unit**

| Index $r_{PUCCH1}$/ $r_{PUCCH2}$ | First-hop PRB index | Second-hop PRB index | Initial cyclic shift index |
|---|---|---|---|
| $r_{PUCCH1} = 0$ | 2N to 3N-1 | $N_{BWP}^{size} - 3N$ to $N_{BWP}^{size} - 2N - 1$ | CS0 |
| $r_{PUCCH1} = 1$ | 2N to 3N-1 | $N_{BWP}^{size} - 3N$ to $N_{BWP}^{size} - 2N - 1$ | CS4 |
| $r_{PUCCH1} = 2$ | 2N to 3N-1 | $N_{BWP}^{size} - 3N$ to $N_{BWP}^{size} - 2N - 1$ | CS8 |
| $r_{PUCCH2} = 3$ | 0 to N-1 | $N_{BWP}^{size} - 2N$ to $N_{BWP}^{size} - N - 1$ | CS0 |
| $r_{PUCCH2} = 4$ | 0 to N-1 | $N_{BWP}^{size} - 2N$ to $N_{BWP}^{size} - N - 1$ | CS4 |
| $r_{PUCCH2} = 5$ | 0 to N-1 | $N_{BWP}^{size} - 2N$ to $N_{BWP}^{size} - N - 1$ | CS8 |
| $r_{PUCCH2} = 6$ | N to 2N-1 | $N_{BWP}^{size} - N$ to $N_{BWP}^{size} - 1$ | CS0 |
| $r_{PUCCH2} = 7$ | N to 2N-1 | $N_{BWP}^{size} - N$ to $N_{BWP}^{size} - 1$ | CS4 |
| $r_{PUCCH1} = 8$ | $N_{BWP}^{size} - 3N$ to $N_{BWP}^{size} - 2N - 1$ | 2N to 3N-1 | CS0 |
| $r_{PUCCH1} = 9$ | $N_{BWP}^{size} - 3N$ to $N_{BWP}^{size} - 2N - 1$ | 2N to 3N-1 | CS4 |
| $r_{PUCCH1} = 10$ | $N_{BWP}^{size} - 3N$ to $N_{BWP}^{size} - 2N - 1$ | 2N to 3N-1 | CS8 |
| $r_{PUCCH2} = 11$ | $N_{BWP}^{size} - N$ to $N_{BWP}^{size} - 1$ | N to 2N-1 | CS0 |
| $r_{PUCCH2} = 12$ | $N_{BWP}^{size} - N$ to $N_{BWP}^{size} - 1$ | N to 2N-1 | CS4 |
| $r_{PUCCH2} = 13$ | $N_{BWP}^{size} - N$ to $N_{BWP}^{size} - 1$ | N to 2N-1 | CS8 |

(continued)

| Index $r_{PUCCH1}$/ $r_{PUCCH2}$ | First-hop PRB index | Second-hop PRB index | Initial cyclic shift index |
|---|---|---|---|
| $r_{PUCCH2}$ = 14 | $N_{BWP}^{size} - 2N$ to $N_{BWP}^{size} - N - 1$ | 0 to N-1 | CS0 |
| $r_{PUCCH2}$ = 15 | $N_{BWP}^{size} - 2N$ to $N_{BWP}^{size} - N - 1$ | 0 to N-1 | CS4 |

In the first time unit, a PUCCH resource frequency-hopping distance of $r_{PUCCH1}$ = 0,1,2,8,9,10 is $N_{BWP}^{size} - N$, a PUCCH resource frequency-hopping distance of $r_{PUCCH2}$ = 3,4,5,11,12,13 is $N_{BWP}^{size} - 4N$, and a PUCCH resource frequency-hopping distance of $r_{PUCCH2}$ = 6,7,14,15 is $N_{BWP}^{size} - 4N$. In the second time unit, a PUCCH resource frequency-hopping distance of $r_{PUCCH1}$ = 0,1,2,8,9,10 is $N_{BWP}^{size} - 3N$, a PUCCH resource frequency-hopping distance of $r_{PUCCH2}$ = 3,4,5,11,12,13 is $N_{BWP}^{size} - 3N$, and a PUCCH resource frequency-hopping distance of $r_{PUCCH2}$ = 6,7,14,15 is $N_{BWP}^{size} - 3N$. In the third time unit, a PUCCH resource frequency-hopping distance of $r_{PUCCH1}$ = 0,1,2,8,9,10 is $N_{BWP}^{size} - 5N$, a PUCCH resource frequency-hopping distance of $r_{PUCCH2}$ = 3,4,5,11,12,13 is $N_{BWP}^{size} - 2N$, and a PUCCH resource frequency-hopping distance of $r_{PUCCH2}$ = 6,7,14,15 is $N_{BWP}^{size} - 2N$. After the three time units, a time-domain average value of all PUCCH resource frequency-hopping distances is $N_{BWP}^{size} - 3N$.

In a second implementation, start PRB indexes of a first PUCCH resource and a second PUCCH resource in a first mapping position and a second mapping position are cyclically shifted by N PRBs from the middle of the BWP to both sides of the BWP. To be specific, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes.

In an embodiment, start PRB indexes of a first PUCCH resource and a second PUCCH resource in a first mapping position and start PRB indexes of the PUCCH resources in a second mapping position may be cyclically shifted by N PRBs from both sides of the BWP to the middle of the BWP or from the middle of the BWP to both sides of the BWP, and the following rule may be met:

In an M^th time unit in the at least two consecutive time units, if $\lfloor r_{PUCCH1}/8 \rfloor = 0$, the start PRB index of the first PUCCH resource in the first mapping position is $(RB_{BWP}^{offset} + \lfloor r_{PUCCH1}/N_{CS} \rfloor + ((M - 1 + K) \bmod \lceil 8/N_{CS} \rceil)) \cdot N$, and the start PRB index of the first PUCCH resource in the second mapping position is $N_{BWP}^{size} - \left(RB_{BWP}^{offset} + \lfloor r_{PUCCH1}/N_{CS} \rfloor + 1 + ((M - 1 + K) \bmod \lceil 8/N_{CS} \rceil)\right) \cdot N$; or if $\lfloor r_{PUCCH1}/8 \rfloor = 1$, the start PRB index of the first PUCCH resource in the first mapping position is $N_{BWP}^{size} - (RB_{BWP}^{offset} + \lfloor (r_{PUCCH1} - 8)/N_{CS} \rfloor + 1 + ((M - 1 + K) \bmod \lceil 8/N_{CS} \rceil)) \cdot N$, and the start PRB index of the first PUCCH resource in the second mapping position is $(RB_{BWP}^{offset} + \lfloor (r_{PUCCH1} - 8)/N_{CS} \rfloor + ((M - 1 + K) \bmod \lceil 8/N_{CS} \rceil)) \cdot N$; and

if $\lfloor r_{PUCCH2}/8 \rfloor = 0$, the start PRB index of the second PUCCH resource in the first mapping position is $\left(RB_{BWP}^{offset} + \lfloor r_{PUCCH2}/N_{CS} \rfloor + ((M - 1 + K) \bmod \lceil \frac{8}{N_{CS}} \rceil)\right) \cdot N$, and the start PRB index of the second PUCCH resource in the second mapping position is $N_{BWP}^{size} - (RB_{BWP}^{offset} + 7 - N_{CS} - \lfloor r_{PUCCH2}/N_{CS} \rfloor + ((M - 1 + K) \bmod \lceil 8/N_{CS} \rceil)) \cdot N$; or if $\lfloor r_{PUCCH2}/8 \rfloor = 1$, the start PRB index of the second PUCCH resource in the first mapping position is $N_{BWP}^{size} - (RB_{BWP}^{offset} + \lfloor (r_{PUCCH2} - 8)/N_{CS} \rfloor + 1 + ((M - 1 + K) \bmod \lceil 8/N_{CS} \rceil)) \cdot N$, and the start PRB index of the second PUCCH resource in the second mapping position is $(RB_{BWP}^{offset} + 6 - N_{CS} - \lfloor (r_{PUCCH2} - 8)/N_{CS} \rfloor + ((M - 1 + K) \bmod \lceil 8/N_{CS} \rceil)) \cdot N$.

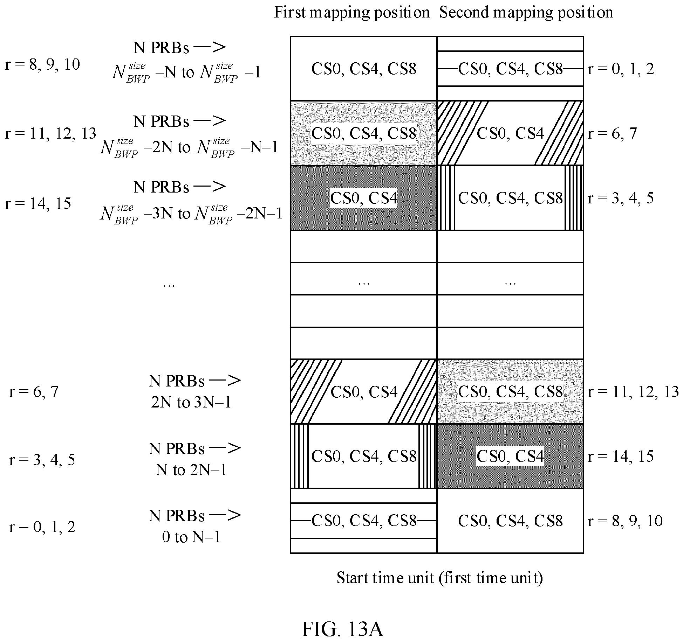

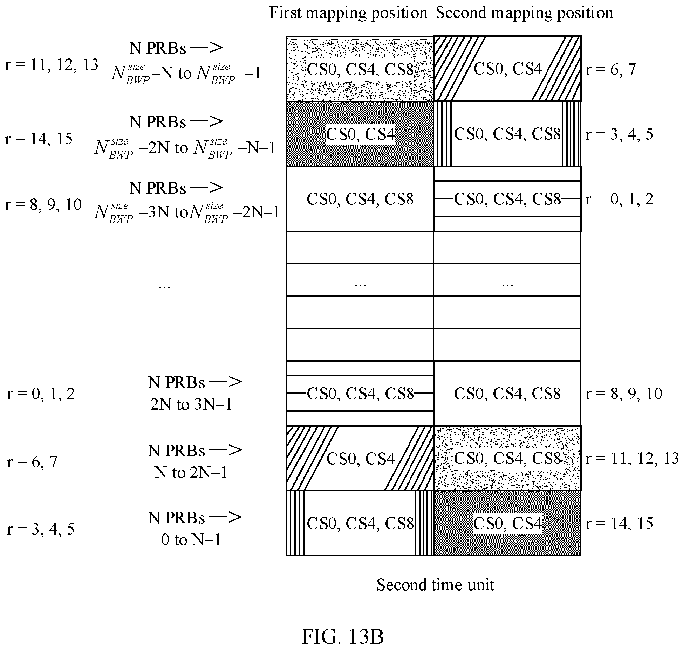

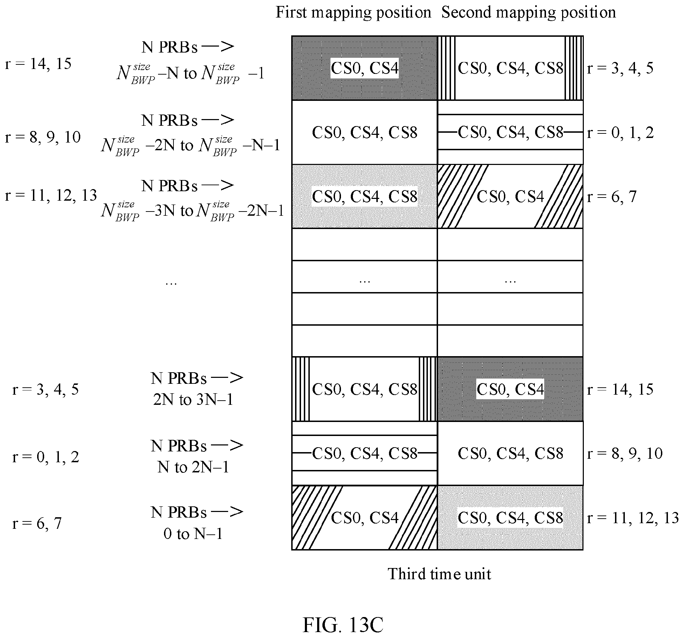

For example, FIG. 13A to FIG. 13C are a schematic diagram of different frequency-domain positions to which yet another PUCCH resource is mapped according to an embodiment of this application. As shown in FIG. 13A to FIG. 13C, in a start time unit (a first time unit), for frequency-domain positions to which a first PUCCH resource and a second PUCCH resource are mapped shown in FIG. 8, the frequency-domain positions to which the first PUCCH resource and the second PUCCH resource are mapped are different starting from the first time unit in consecutive time units. First PUCCH resources $r_{PUCCH1} = 0,1,2$ are used as an example for description. In the first time unit, a second time unit, and a third time unit, start PRB indexes of the first PUCCH resources $r_{PUCCH1} = 0,1,2$ in a first mapping position are a PRB 0, a PRB 2N, and a PRB N respectively, and start PRB indexes of the first PUCCH resources $r_{PUCCH1} = 0,1,2$ in a second mapping position are a PRB $N_{BWP}^{size} - N$, a PRB $N_{BWP}^{size} - 3N$, and a PRB $N_{BWP}^{size} - 2N$ respectively. In the first time unit, a PUCCH resource frequency-hopping distance of $r_{PUCCH1} = 0,1,2,8,9,10$ is $N_{BWP}^{size} - N$, a PUCCH resource frequency-hopping distance of $r_{PUCCH2} = 3,4,5,11,12,13$ is $N_{BWP}^{size} - 4N$, and a PUCCH resource frequency-hopping distance of $r_{PUCCH2} = 6,7,14,15$ is $N_{BWP}^{size} - 4N$. In the second time unit, a PUCCH resource frequency-hopping distance of $r_{PUCCH1} = 0,1,2,8,9,10$ is $N_{BWP}^{size} - 5N$, a PUCCH resource frequency-hopping distance of $r_{PUCCH2} = 3,4,5,11,12,13$ is $N_{BWP}^{size} - 2N$, and a PUCCH resource frequency-hopping distance of $r_{PUCCH2} = 6,7,14,15$ is $N_{BWP}^{size} - 2N$. In the third time unit, a PUCCH resource frequency-hopping distance of $r_{PUCCH1} = 0,1,2,8,9,10$ is $N_{BWP}^{size} - 3N$, a PUCCH resource frequency-hopping distance of $r_{PUCCH2} = 3,4,5,11,12,13$ is $N_{BWP}^{size} - 3N$, and a PUCCH resource frequency-hopping distance of $r_{PUCCH2} = 6,7,14,15$ is $N_{BWP}^{size} - 3N$. After the three time units, a time-domain average value of all PUCCH resource frequency-hopping distances is $N_{BWP}^{size} - 3N$.

In a third implementation, start PRB indexes of a first PUCCH resource and a second PUCCH resource in a first mapping position are cyclically shifted by N PRBs from both sides of the BWP to the middle of the BWP, and start PRB indexes in a second mapping position are cyclically shifted by N PRBs from the middle of the BWP to both sides of the BWP. To be specific, in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes;

or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

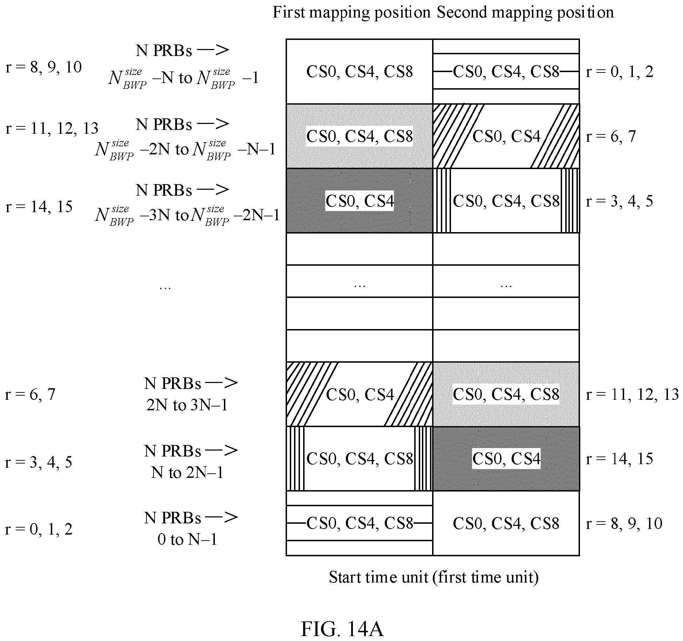

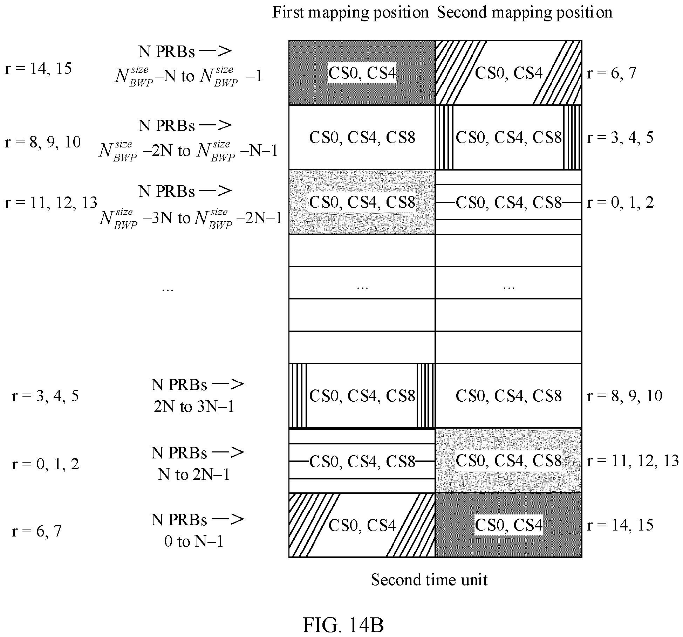

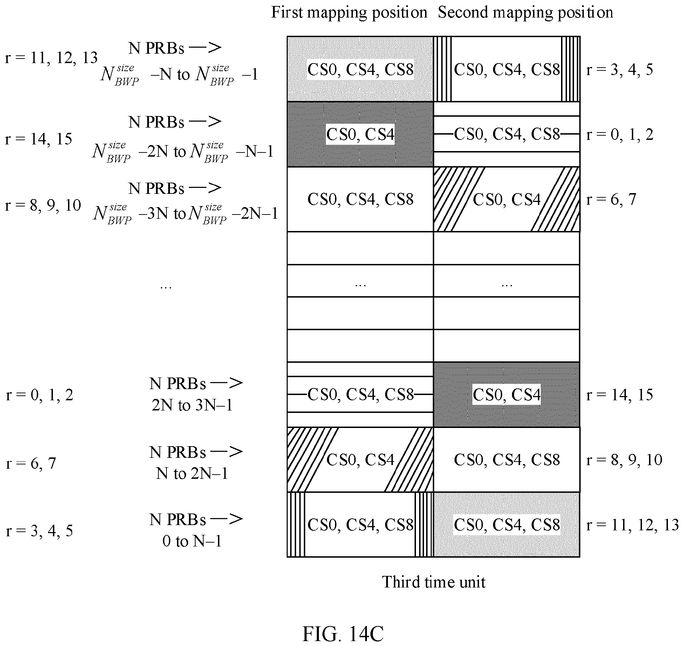

For example, FIG. 14A to FIG. 14C are a schematic diagram of different frequency-domain positions to which still yet another PUCCH resource is mapped according to an embodiment of this application. As shown in FIG. 14A to FIG. 14C, in a start time unit (a first time unit), for frequency-domain positions to which a first PUCCH resource and a second PUCCH resource are mapped shown in FIG. 8, the frequency-domain positions to which the first PUCCH resource and the second PUCCH resource are mapped are different starting from the first time unit in consecutive time units. A first mapping position index, a second mapping position index, and an initial cyclic shift index of the first PUCCH resource and the second PUCCH resource in the first time unit, a second time unit, and a third time unit are respectively shown in Table 7, Table 8, and Table 9.

**Table 7: Frequency-domain positions of the first PUCCH resource and the second PUCCH resource in the first time unit**

| Index $r_{PUCCH1}/r_{PUCCH2}$ | First-hop PRB index | Second-hop PRB index | Initial cyclic shift index |
|---|---|---|---|
| $r_{PUCCH1} = 0$ | 0 to N-1 | $N_{BWP}^{size} - N$ to $N_{BWP}^{size} - 1$ | CS0 |
| $r_{PUCCH1} = 1$ | 0 to N-1 | $N_{BWP}^{size} - N$ to $N_{BWP}^{size} - 1$ | CS4 |
| $r_{PUCCH1} = 2$ | 0 to N-1 | $N_{BWP}^{size} - N$ to $N_{BWP}^{size} - 1$ | CS8 |
| $r_{PUCCH2} = 3$ | N to 2N-1 | $N_{BWP}^{size} - 3N$ to $N_{BWP}^{size} - 2N - 1$ | CS0 |
| $r_{PUCCH2} = 4$ | N to 2N-1 | $N_{BWP}^{size} - 3N$ to $N_{BWP}^{size} - 2N - 1$ | CS4 |
| $r_{PUCCH2} = 5$ | N to 2N-1 | $N_{BWP}^{size} - 3N$ to $N_{BWP}^{size} - 2N - 1$ | CS8 |
| $r_{PUCCH2} = 6$ | 2N to 3N-1 | $N_{BWP}^{size} - 2N$ to $N_{BWP}^{size} - N - 1$ | CS0 |
| $r_{PUCCH2} = 7$ | 2N to 3N-1 | $N_{BWP}^{size} - 2N$ to $N_{BWP}^{size} - N - 1$ | CS4 |
| $r_{PUCCH1} = 8$ | $N_{BWP}^{size} - N$ to $N_{BWP}^{size} - 1$ | 0 to N-1 | CS0 |

(continued)

| Index $r_{PUCCH1}/r_{PUCCH2}$ | First-hop PRB index | Second-hop PRB index | Initial cyclic shift index |
|---|---|---|---|
| $r_{PUCCH1}$ = 9 | $N_{BWP}^{size} - N \ to \ N_{BWP}^{size} - 1$ | 0 to N-1 | CS4 |
| $r_{PUCCH1}$ = 10 | $N_{BWP}^{size} - N \ to \ N_{BWP}^{size} - 1$ | 0 to N-1 | CS8 |
| $r_{PUCCH2}$ = 11 | $N_{BWP}^{size} - 2N \ to \ N_{BWP}^{size} - N - 1$ | 2N to 3N-1 | CS0 |
| $r_{PUCCH2}$ = 12 | $N_{BWP}^{size} - 2N \ to \ N_{BWP}^{size} - N - 1$ | 2N to 3N-1 | CS4 |
| $r_{PUCCH2}$ = 13 | $N_{BWP}^{size} - 2N \ to \ N_{BWP}^{size} - N - 1$ | 2N to 3N-1 | CS8 |
| $r_{PUCCH2}$ = 14 | $N_{BWP}^{size} - 3N \ to \ N_{BWP}^{size} - 2N - 1$ | N to 2N-1 | CS0 |
| $r_{PUCCH2}$ = 15 | $N_{BWP}^{size} - 3N \ to \ N_{BWP}^{size} - 2N - 1$ | N to 2N-1 | CS4 |

**Table 8: Frequency-domain positions of the first PUCCH resource and the second PUCCH resource in the second time unit**

| Index $r_{PUCCH1}/r_{PUCCH2}$ | First-hop PRB index | Second-hop PRB index | Initial cyclic shift index |
|---|---|---|---|
| $r_{PUCCH1}$ = 0 | N to 2N-1 | $N_{BWP}^{size} - 3N \ to \ N_{BWP}^{size} - 2N - 1$ | CS0 |
| $r_{PUCCH1}$ = 1 | N to 2N-1 | $N_{BWP}^{size} - 3N \ to \ N_{BWP}^{size} - 2N - 1$ | CS4 |
| $r_{PUCCH1}$ = 2 | N to 2N-1 | $N_{BWP}^{size} - 3N \ to \ N_{BWP}^{size} - 2N - 1$ | CS8 |
| $r_{PUCCH2}$ = 3 | 2N to 3N-1 | $N_{BWP}^{size} - 2N \ to \ N_{BWP}^{size} - N - 1$ | CS0 |
| $r_{PUCCH2}$ = 4 | 2N to 3N-1 | $N_{BWP}^{size} - 2N \ to \ N_{BWP}^{size} - N - 1$ | CS4 |
| $r_{PUCCH2}$ = 5 | 2N to 3N-1 | $N_{BWP}^{size} - 2N \ to \ N_{BWP}^{size} - N - 1$ | CS8 |
| $r_{PUCCH2}$ = 6 | 0 to N-1 | $N_{BWP}^{size} - N \ to \ N_{BWP}^{size} - 1$ | CS0 |
| $r_{PUCCH2}$ = 7 | 0 to N-1 | $N_{BWP}^{size} - N \ to \ N_{BWP}^{size} - 1$ | CS4 |
| $r_{PUCCH1}$ = 8 | $N_{BWP}^{size} - 2N \ to \ N_{BWP}^{size} - N - 1$ | 2N to 3N-1 | CS0 |
| $r_{PUCCH1}$ = 9 | $N_{BWP}^{size} - 2N \ to \ N_{BWP}^{size} - N - 1$ | 2N to 3N-1 | CS4 |

(continued)

| Index $r_{PUCCH1}/r_{PUCCH2}$ | First-hop PRB index | Second-hop PRB index | Initial cyclic shift index |
|---|---|---|---|
| $r_{PUCCH1}$ = 10 | $N_{BWP}^{size} - 2N \text{ to } N_{BWP}^{size} - N - 1$ | 2N to 3N-1 | CS8 |
| $r_{PUCCH2}$ = 11 | $N_{BWP}^{size} - 3N \text{ to } N_{BWP}^{size} - 2N - 1$ | N to 2N-1 | CS0 |
| $r_{PUCCH2}$ = 12 | $N_{BWP}^{size} - 3N \text{ to } N_{BWP}^{size} - 2N - 1$ | N to 2N-1 | CS4 |
| $r_{PUCCH2}$ = 13 | $N_{BWP}^{size} - 3N \text{ to } N_{BWP}^{size} - 2N - 1$ | N to 2N-1 | CS8 |
| $r_{PUCCH2}$ = 14 | $N_{BWP}^{size} - N \text{ to } N_{BWP}^{size} - 1$ | 0 to N-1 | CS0 |
| $r_{PUCCH2}$ = 15 | $N_{BWP}^{size} - N \text{ to } N_{BWP}^{size} - 1$ | 0 to N-1 | CS4 |

**Table 9: Frequency-domain positions of the first PUCCH resource and the second PUCCH resource in the third time unit**

| Index $r_{PUCCH1}/r_{PUCCH2}$ | First-hop PRB index | Second-hop PRB index | Initial cyclic shift index |
|---|---|---|---|
| $r_{PUCCH1}$ = 0 | 2N to 3N-1 | $N_{BWP}^{size} - 2N \text{ to } N_{BWP}^{size} - N - 1$ | CS0 |
| $r_{PUCCH1}$ = 1 | 2N to 3N-1 | $N_{BWP}^{size} - 2N \text{ to } N_{BWP}^{size} - N - 1$ | CS4 |
| $r_{PUCCH1}$ = 2 | 2N to 3N-1 | $N_{BWP}^{size} - 2N \text{ to } N_{BWP}^{size} - N - 1$ | CS8 |
| $r_{PUCCH2}$ = 3 | 0 to N-1 | $N_{BWP}^{size} - N \text{ to } N_{BWP}^{size} - 1$ | CS0 |
| $r_{PUCCH2}$ = 4 | 0 to N-1 | $N_{BWP}^{size} - N \text{ to } N_{BWP}^{size} - 1$ | CS4 |
| $r_{PUCCH2}$ = 5 | 0 to N-1 | $N_{BWP}^{size} - N \text{ to } N_{BWP}^{size} - 1$ | CS8 |
| $r_{PUCCH2}$ = 6 | N to 2N-1 | $N_{BWP}^{size} - 3N \text{ to } N_{BWP}^{size} - 2N - 1$ | CS0 |
| $r_{PUCCH2}$ = 7 | N to 2N-1 | $N_{BWP}^{size} - 3N \text{ to } N_{BWP}^{size} - 2N - 1$ | CS4 |
| $r_{PUCCH1}$ = 8 | $N_{BWP}^{size} - 3N \text{ to } N_{BWP}^{size} - 2N - 1$ | N to 2N-1 | CS0 |
| $r_{PUCCH1}$ = 9 | $N_{BWP}^{size} - 3N \text{ to } N_{BWP}^{size} - 2N - 1$ | N to 2N-1 | CS4 |
| $r_{PUCCH1}$ = 10 | $N_{BWP}^{size} - 3N \text{ to } N_{BWP}^{size} - 2N - 1$ | N to 2N-1 | CS8 |

(continued)

| Index $r_{PUCCH1}/$ $r_{PUCCH2}$ | First-hop PRB index | Second-hop PRB index | Initial cyclic shift index |
|---|---|---|---|
| $r_{PUCCH2}=$ 11 | $N_{BWP}^{size} - N \ to \ N_{BWP}^{size} - 1$ | 0 to N-1 | CS0 |
| $r_{PUCCH2}=$ 12 | $N_{BWP}^{size} - N \ to \ N_{BWP}^{size} - 1$ | 0 to N-1 | CS4 |
| $r_{PUCCH2}=$ 13 | $N_{BWP}^{size} - N \ to \ N_{BWP}^{size} - 1$ | 0 to N-1 | CS8 |
| $r_{PUCCH2}=$ 14 | $N_{BWP}^{size} - 2N \ to \ N_{BWP}^{size} - N - 1$ | 2N to 3N-1 | CS0 |
| $r_{PUCCH2}=$ 15 | $N_{BWP}^{size} - 2N \ to \ N_{BWP}^{size} - N - 1$ | 2N to 3N-1 | CS4 |

In the first time unit, a PUCCH resource frequency-hopping distance of $r_{PUCCH1}$ = 0,1,2,8,9,10 is $N_{BWP}^{size} - N$, a PUCCH resource frequency-hopping distance of $r_{PUCCH2}$ = 3,4,5,11,12,13 is $N_{BWP}^{size} - 4N$, and a PUCCH resource frequency-hopping distance of $r_{PUCCH2}$ = 6,7,14,15 is $N_{BWP}^{size} - 4N$. In the second time unit, a PUCCH resource frequency-hopping distance of $r_{PUCCH1}$ = 0,1,2,8,9,10 is $N_{BWP}^{size} - 4N$, a PUCCH resource frequency-hopping distance of $r_{PUCCH2}$ = 3,4,5,11,12,13 is $N_{BWP}^{size} - 4N$, and a PUCCH resource frequency-hopping distance of $r_{PUCCH2}$ = 6,7,14,15 is $N_{BWP}^{size} - N$. In the third time unit, a PUCCH resource frequency-hopping distance of $r_{PUCCH1}$ = 0,1,2,8,9,10 is $N_{BWP}^{size} - 4N$, a PUCCH resource frequency-hopping distance of $r_{PUCCH2}$ = 3,4,5,11,12,13 is $N_{BWP}^{size} - N$, and a PUCCH resource frequency-hopping distance of $r_{PUCCH2}$ = 6,7,14,15 is $N_{BWP}^{size} - 4N$. After the three time units, a time-domain average value of all PUCCH resource frequency-hopping distances is $N_{BWP}^{size} - 3N$.

In a fourth implementation, start PRB indexes of a first PUCCH resource and a second PUCCH resource in a first mapping position are cyclically shifted by N PRBs from the middle of the BWP to both sides of the BWP, and start PRB indexes in a second mapping position are cyclically shifted by N PRBs from both sides of the BWP to the middle of the BWP. To be specific, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, where $r_{PUCCH1}$ is the index of the first PUCCH resource, and $r_{PUCCH2}$ is an index of the second PUCCH resource.

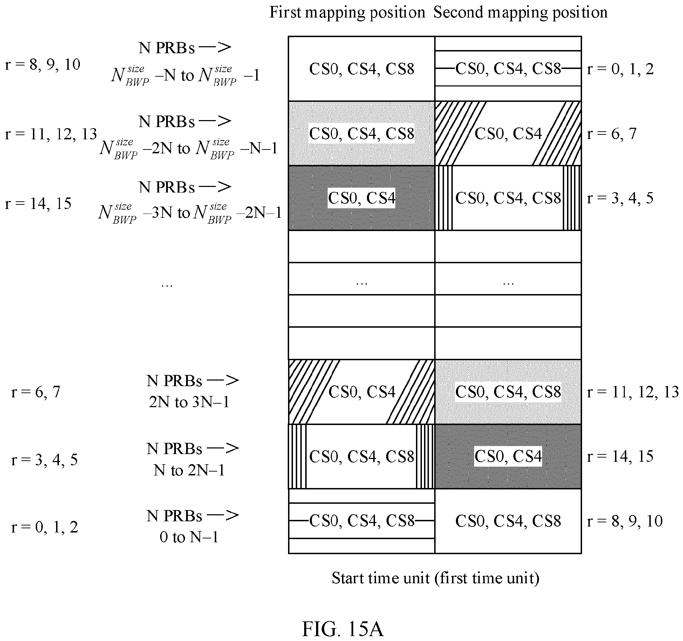

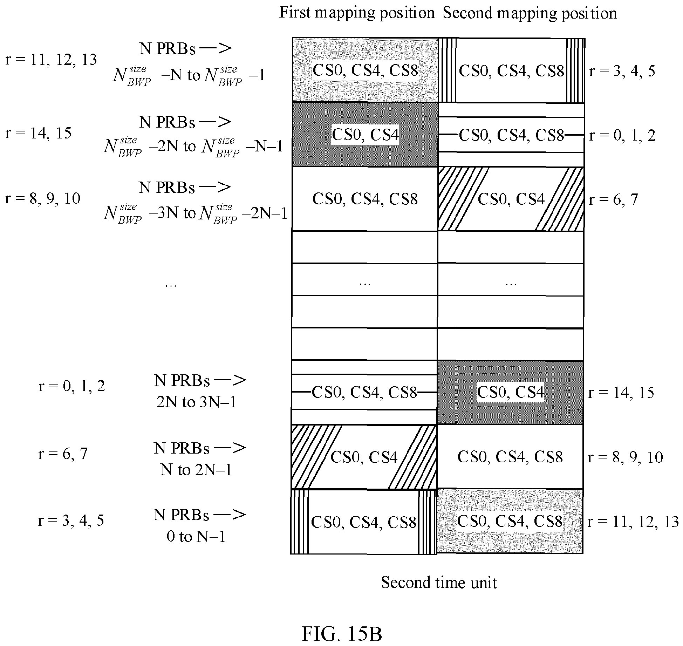

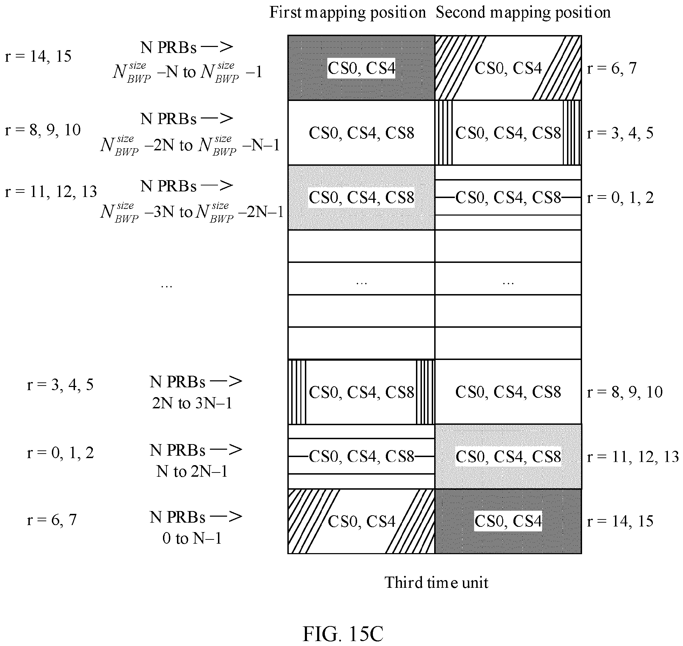

For example, FIG. 15A to FIG. 15C are a schematic diagram of different frequency-domain positions to which a further PUCCH resource is mapped according to an embodiment of this application. As shown in FIG. 15A to FIG. 15C, in a start time unit (a first time unit), for frequency-domain positions to which a first PUCCH resource and a second PUCCH resource are mapped shown in FIG. 8, the frequency-domain positions to which the first PUCCH resource and the second PUCCH resource are mapped are different starting from the first time unit in consecutive time units. First PUCCH resources $r_{PUCCH1}$ = 0,1,2 are used as an example for description. In the first time unit, a second time unit, and a third time unit, start PRB indexes of the first PUCCH resources $r_{PUCCH1}$ = 0,1,2 in a first mapping position are a PRB 0, a PRB 2N, and a PRB N respectively, and start PRB indexes of the first PUCCH resources $r_{PUCCH1}$ = 0,1,2 in a second mapping position are a PRB $N_{BWP}^{size} - N$, a PRB $N_{BWP}^{size} - 2N$, and a PRB $N_{BWP}^{size} - 3N$ respectively. In the first time unit, a PUCCH resource frequency-hopping distance of $r_{PUCCH1}$ = 0,1,2,8,9,10 is $N_{BWP}^{size} - N$, a PUCCH resource frequency-hopping distance of $r_{PUCCH2}$ = 3,4,5,11,12,13 is $N_{BWP}^{size} - 4N$, and a PUCCH resource frequency-hopping distance of $r_{PUCCH2}$ = 6,7,14,15 is $N_{BWP}^{size} - 4N$. In the second time unit, a PUCCH resource frequency-hopping distance of $r_{PUCCH1}$ = 0,1,2,8,9,10 is $N_{BWP}^{size} - 4N$, a PUCCH resource frequency-hopping distance of $r_{PUCCH2}$ = 3,4,5,11,12,13 is $N_{BWP}^{size} - N$, and a PUCCH resource frequency-hopping distance of $r_{PUCCH2}$ = 6,7,14,15 is $N_{BWP}^{size} - 4N$. In the third time unit, a PUCCH resource frequency-hopping distance of $r_{PUCCH1}$ = 0,1,2,8,9,10 is $N_{BWP}^{size} - 4N$, a PUCCH resource frequency-hopping distance of $r_{PUCCH2}$ = 3,4,5,11,12,13 is $N_{BWP}^{size} - 4N$, and a PUCCH resource frequency-hopping distance of $r_{PUCCH2}$ = 6,7,14,15 is $N_{BWP}^{size} - N$. After the three time units, a time-domain average value of all PUCCH resource frequency-hopping distances is $N_{BWP}^{size} - 3N$.

For the frequency-domain positions to which the PUCCH resource is mapped that are determined in the second case in step S601, that frequency-domain positions to which the PUCCH resource is mapped in the at least two consecutive time units are different may have the following two implementations.

In a first implementation, in the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In the at least two consecutive time units, if the start PRB index of the PUCCH resource in the second mapping position $\leq N_{BWP}^{size}$ (or $< N_{BWP}^{size}$), the start PRB index of the PUCCH resource in the first mapping position and the start PRB index of the PUCCH resource in the second mapping position are cyclically shifted by the first offset; or if the start PRB index of the PUCCH resource in the second mapping position $> N_{BWP}^{size}$ (or $\geq N_{BWP}^{size}$), the start PRB index of the PUCCH resource in the first mapping position and the start PRB index of the PUCCH resource in the second mapping position are cyclically shifted by the first offset.

It may be understood as that, in the at least two consecutive time units, if the start PRB index of the PUCCH resource in the second mapping position $\leq N_{BWP}^{size}$ (or $< N_{BWP}^{size}$), the start PRB index of the PUCCH resource in the first mapping position and the start PRB index of the PUCCH resource in the second mapping position are shifted by the first offset; or if the start PRB index of the PUCCH resource in the second mapping position $> N_{BWP}^{size}$ (or $\geq N_{BWP}^{size}$), the start PRB index of the PUCCH resource in the first mapping position and the start PRB index of the PUCCH resource in the second mapping position are shifted by the first offset and a modulo operation is performed on $N_{BWP}^{size}$. $N_{BWP}^{size}$ is a quantity of PRBs occupied by a bandwidth part BWP.

In an embodiment, the start PRB index of the PUCCH resource in the first mapping position and the start PRB index of the PUCCH resource in the second mapping position may meet the following rule: The PRB index of the PUCCH resource in the first mapping position may be represented by a firstHopPRB, and the PRB index of the PUCCH resource in the second mapping position may be represented by a secondHopPRB. In an Mth time unit in the at least two consecutive time units, the start PRB index of the PUCCH resource in the first mapping position is (firstHopPRB + offset 1) mod $N_{BWP}^{size}$, where the offset 1 is the first offset.

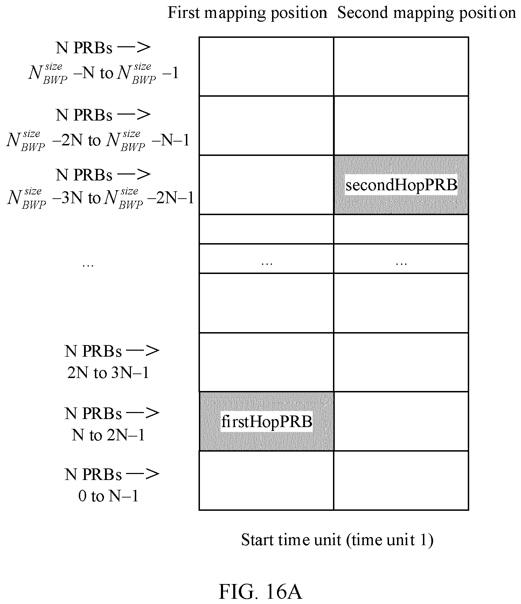

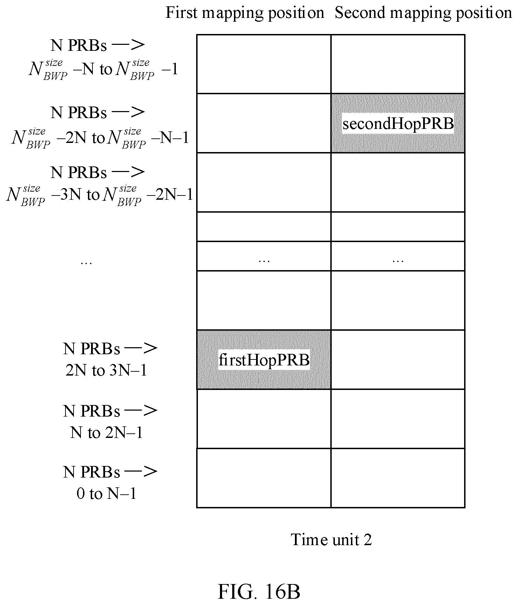

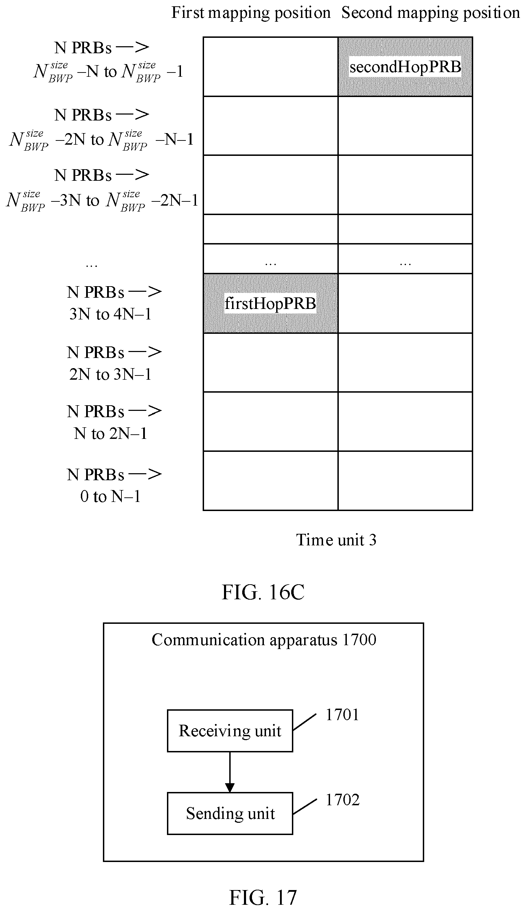

For example, FIG. 16A to FIG. 16C are a schematic diagram of different frequency-domain positions to which a still further PUCCH resource is mapped according to an embodiment of this application. As shown in FIG. 16A to FIG. 16C, the first offset is N PRBs, and the start PRB index of the PUCCH resource in the first mapping position and the start PRB index of the PUCCH resource in the second mapping position are both shifted based on values of the PRB indexes in ascending order. In a first time unit, a second time unit, and a third time unit, start PRB indexes of the PUCCH resource in a first mapping position are a PRB N to a PRB 2N-1, a PRB 2N to a PRB 3N-1, and a PRB 3N to a PRB 4N-1 respectively, and start PRB indexes of the PUCCH resource in a second mapping position are a PRB $N_{BWP}^{size} - 3N$, a PRB $N_{BWP}^{size} - 2N$, and a PRB $N_{BWP}^{size} - N$ respectively. In each time unit, a time-domain average value of PUCCH resource frequency-hopping distances is $N_{BWP}^{size} - 4N$.

In a second implementation, in the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

If the start PRB index of the PUCCH resource in the second mapping position $> N_{BWP}^{size}$ (or $\geq N_{BWP}^{size}$), the start PRB index of the PUCCH resource in the first mapping position and the start PRB index of the PUCCH resource in the second mapping position are respectively shifted by the first offset to obtain a reminder of $N_{BWP}^{size}$ and by the second offset to obtain a reminder of $N_{BWP}^{size}$. This may be understood as that, if the start PRB index of the PUCCH resource in the second mapping position $> N_{BWP}^{size}$ (or $\geq N_{BWP}^{size}$), the start PRB index of the PUCCH resource in the first mapping position and the start PRB index of the PUCCH resource in the second mapping position are respectively shifted by the first offset and the second offset.

It may be understood as that, in the at least two consecutive time units, if the start PRB index of the PUCCH resource in the second mapping position $\leq N_{BWP}^{size}$ (or $< N_{BWP}^{size}$), the start PRB index of the PUCCH resource in the first mapping position and the start PRB index of the PUCCH resource in the second mapping position are respectively shifted by the first offset and the second offset; or if the start PRB index of the PUCCH resource in the second mapping position $> N_{BWP}^{size}$ (or $\geq N_{BWP}^{size}$), the start PRB index of the PUCCH resource in the first mapping position and the start PRB index of the PUCCH resource in the second mapping position are respectively shifted by the first offset to obtain a reminder of $N_{BWP}^{size}$ and by the second offset to obtain a reminder of $N_{BWP}^{size}$. $N_{BWP}^{size}$ is a quantity of PRBs occupied by a BWP.

It should be noted that, shift directions of the start PRB index of the PUCCH resource in the first mapping position and the start PRB index of the PUCCH resource in the second mapping position are not limited. For example, shift is performed in ascending/descending order of index values of the BWP. The shift direction of the start PRB index of the PUCCH resource in the first mapping position may be the same as or different from the shift direction of the start PRB index of the PUCCH resource in the second mapping position. In the first implementation and the second implementation, the first offset may be configured by the network device by using a dedicated RRC, and the second offset may also be configured by the network device by using a dedicated RRC.

In the foregoing embodiments, the frequency-domain position to which the PUCCH resource is mapped changes, so that frequency-domain frequency-hopping distances of all PUCCH resources can be the same on average in a time dimension. In this way, frequency-hopping gains are the same on average in the time dimension. This can reduce a limitation of a frequency-hopping gain of the PUCCH resource and enhance coverage.

The foregoing describes the method embodiments provided in embodiments of this application, and the following describes virtual apparatus embodiments in embodiments of this application.

FIG. 17 is a schematic diagram of a structure of a communication apparatus according to an embodiment of this application. The apparatus may be a terminal device, or may be a module (for example, a chip) in the terminal device. As shown in FIG. 17, the apparatus 1700 includes at least a receiving unit 1701 and a sending unit 1702.

The receiving unit 1701 is configured to receive first indication information from a network device, where the first indication information is used to determine a frequency-domain position to which a physical uplink control channel PUCCH resource is mapped.

The sending unit 1702 is configured to send information to the network device in first duration by using the PUCCH resource, where frequency-domain positions to which the PUCCH resource is mapped in at least two consecutive time units in the first duration are different.

In an embodiment, if the network device does not configure, for the terminal device, a frequency-domain position to which a dedicated PUCCH resource is mapped, the frequency-domain position to which the PUCCH resource is mapped is determined based on a PRB offset and a set of initial cyclic shift indexes.

In an embodiment, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, the start PRB index of the PUCCH resource in the second mapping position is $N_{BWP}^{size} - (RB_{BWP}^{offset} + \lfloor r_{PUCCH}/N_{CS} \rfloor + 1) \cdot N$, and the initial cyclic shift index of the PUCCH resource is $r_{\text{PUCCH}} \bmod N_{\text{CS}}$; or

if $\lfloor r_{\text{PUCCH}}/8 \rfloor = 1$, the start PRB index of the PUCCH resource in the first mapping position is $N_{\text{BWP}}^{\text{size}} - (RB_{\text{BWP}}^{\text{offset}} + \lfloor (r_{\text{PUCCH}} - 8)/N_{\text{CS}} \rfloor + 1) \cdot N$, the start PRB index of the PUCCH resource in the second mapping position is $(RB_{\text{BWP}}^{\text{offset}} + \lfloor (r_{\text{PUCCH}} - 8)/N_{\text{CS}} \rfloor) \cdot N$, and the initial cyclic shift index of the PUCCH resource is $(r_{\text{PUCCH}} - 8) \bmod N_{\text{CS}}$, where $RB_{BWP}^{offset}$ is a PRB offset, $r_{PUCCH}$ is an index of the PUCCH resource, $N_{CS}$ is a total quantity of initial cyclic shift indexes in a set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In an embodiment, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH1}}/8 \rfloor = 0$ and $r_{\text{PUCCH1}} < \lceil 8/N_{CS} \rceil$, a start PRB index of a first PUCCH resource in a first mapping position is $(RB_{BWP}^{offset} + \lfloor r_{PUCCH1}/N_{CS} \rfloor) \cdot N$, a start PRB index of the first PUCCH resource in a second mapping position is $N_{BWP}^{size} - (RB_{BWP}^{offset} + \lfloor r_{PUCCH1}/N_{CS} \rfloor + 1) \cdot N$, and an initial cyclic shift index of the first PUCCH resource is $r_{\text{PUCCH1}} \bmod N_{\text{CS}}$, where the first PUCCH resource is a PUCCH resource closest to edges on both sides of a bandwidth part BWP; or

if $\lfloor r_{\text{PUCCH1}}/8 \rfloor = 1$ and $r_{\text{PUCCH1}} - 8 < \lceil 8/N_{CS} \rceil$, a start PRB index of a first PUCCH resource in a first mapping position is $N_{\text{BWP}}^{\text{size}} - (RB_{\text{BWP}}^{\text{offset}} + \lfloor (r_{\text{PUCCH1}} - 8)/N_{\text{CS}} \rfloor + 1) \cdot N$, a start PRB index of the first PUCCH resource in a second mapping position is $(RB_{\text{BWP}}^{\text{offset}} + \lfloor (r_{\text{PUCCH1}} - 8)/N_{\text{CS}} \rfloor) \cdot N$, and an initial cyclic shift index of the first PUCCH resource is $(r_{\text{PUCCH1}} - 8) \bmod N_{\text{CS}}$; and

if $\lfloor r_{\text{PUCCH2}}/8 \rfloor = 0$ and $r_{\text{PUCCH2}} \geq \lceil 8/N_{CS} \rceil$, a start PRB index of a second PUCCH resource in a first mapping position is $(RB_{BWP}^{offset} + \lfloor r_{PUCCH2}/N_{CS} \rfloor) \cdot N$, a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$, and an initial cyclic shift index of the second PUCCH resource is $r_{\text{PUCCH2}} \bmod N_{\text{CS}}$, where the second PUCCH resource is a PUCCH resource other than the first PUCCH resource in a PUCCH resource set, each PUCCH resource in the second PUCCH resource has a same frequency-domain frequency-hopping distance, and the PUCCH resource set includes a plurality of PUCCH resources; or

if $\lfloor r_{\text{PUCCH2}}/8 \rfloor = 1$ and $r_{\text{PUCCH2}} - 8 \geq \lceil 8/N_{CS} \rceil$, a start PRB index of a second PUCCH resource in a first mapping position is $N_{BWP}^{size} - (RB_{BWP}^{offset} + \lfloor (r_{PUCCH2} - 8)/N_{CS} \rfloor + 1) \cdot N$, a start PRB index of the second PUCCH resource in a second mapping position is $(RB_{BWP}^{offset} + 6 - N_{CS} - \lfloor (r_{PUCCH2} - 8)/N_{CS} \rfloor) \cdot N$, and an initial cyclic shift index of the second PUCCH resource is $(r_{PUCCH2} - 8)$ mod $N_{CS}$, where $RB_{BWP}^{offset}$ is the PRB offset ($r_{PUCCH1}$ is an index of the first PUCCH resource, $N_{CS}$ is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than or equal to 1.

In an embodiment, that frequency-domain positions to which the PUCCH resource is mapped in at least two consecutive time units in the first duration are different includes:

In the at least two consecutive time units, if $\lfloor r_{\text{PUCCH}}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{\text{PUCCH}}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes.

Alternatively, in the at least two consecutive time units, if $\lfloor r_{\text{PUCCH}}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{\text{PUCCH}}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

In an embodiment, that frequency-domain positions to which the PUCCH resource is mapped in at least two consecutive time units in the first duration are different includes:

In an M$^{th}$ time unit in the at least two consecutive time units, if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor + ((M - 1 + K) \bmod \lceil 8/N_{CS} \rceil)) \cdot N$, and the start PRB index of the PUCCH resource in the second mapping position is $N_{BWP}^{size} - \left( RB_{BWP}^{offset} + \lfloor r_{PUCCH}/N_{CS} \rfloor + 1 + ((M - 1 + K) \bmod \lceil 8/N_{CS} \rceil) \right) \cdot N$; or if $\lfloor r_{\text{PUCCH}}/8 \rfloor = 1$, the start PRB index of the PUCCH resource in the first mapping position is $N_{BWP}^{size} - (RB_{BWP}^{offset} + \lfloor (r_{PUCCH} - 8)/N_{CS} \rfloor + 1 + ((M - 1 + K) \bmod \lceil 8/N_{CS} \rceil)) \cdot N$, and the start PRB index of the PUCCH resource in the second mapping position is $(RB_{BWP}^{offset} + \lfloor (r_{PUCCH} - 8)/N_{CS} \rfloor + ((M - 1 + K) \bmod \lceil 8/N_{CS} \rceil)) \cdot N$, where K is a fixed time-domain cyclic offset.

In an embodiment, that frequency-domain positions to which the PUCCH resource is mapped in at least two consecutive time units in the first duration are different includes:

In the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes.

Alternatively, in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes, where $r_{\text{PUCCH1}}$ is the index of the first PUCCH resource, and $r_{\text{PUCCH2}}$ is an index of the second PUCCH resource.

In an embodiment, that frequency-domain positions to which the PUCCH resource is mapped in at least two consecutive time units in the first duration are different includes:

In an $M^{\text{th}}$ time unit in the at least two consecutive time units, if $\lfloor r_{\text{PUCCH1}}/8 \rfloor = 0$, the start PRB index of the first PUCCH resource in the first mapping position is $(RB_{BWP}^{offset} + \lfloor r_{PUCCH1}/N_{CS} \rfloor + ((M - 1 + K) \, mod \, \lceil 8/N_{CS} \rceil)) \cdot N$, and the start PRB index of the first PUCCH resource in the second mapping position is $N_{BWP}^{size} - \left( RB_{BWP}^{offset} + \lfloor r_{PUCCH1}/N_{CS} \rfloor + 1 + ((M - 1 + K) \, mod \, \lceil 8/N_{CS} \rceil) \right) \cdot N$; or if $\lfloor r_{\text{PUCCH1}}/8 \rfloor = 1$, the start PRB index of the first PUCCH resource in the first mapping position is $N_{\text{BWP}}^{\text{size}} - (RB_{\text{BWP}}^{\text{offset}} + \lfloor (r_{\text{PUCCH1}} - 8)/N_{\text{CS}} \rfloor + 1 + ((M - 1 + K) \, mod \, \lceil 8/N_{\text{CS}} \rceil)) \cdot N$, and the start PRB index of the first PUCCH resource in the second mapping position is $(RB_{\text{BWP}}^{\text{offset}} + \lfloor (r_{\text{PUCCH1}} - 8)/N_{\text{CS}} \rfloor + ((M - 1 + K) \, mod \, \lceil 8/N_{\text{CS}} \rceil)) \cdot N$; and if $\lfloor r_{PUCCH2}/8 \rfloor = 0$, the start PRB index of the second PUCCH resource in the first mapping position is $\left( RB_{BWP}^{offset} + \lfloor r_{PUCCH2}/N_{CS} \rfloor + ((M - 1 + K) mod \lceil \frac{8}{N_{CS}} \rceil) \right) \cdot N$, and the start PRB index of the second PUCCH resource in the second mapping position is $N_{\text{BWP}}^{\text{size}} - (RB_{\text{BWP}}^{\text{offset}} + 7 - N_{CS} - \lfloor r_{\text{PUCCH2}}/N_{\text{CS}} \rfloor + ((M - 1 + K) \, mod \, \lceil 8/N_{\text{CS}} \rceil)) \cdot N$; or if $\lfloor r_{PUCCH2}/8 \rfloor = 1$, the start PRB index of the second PUCCH resource in the first mapping position is $N_{\text{BWP}}^{\text{size}} - (RB_{\text{BWP}}^{\text{offset}} + \lfloor (r_{\text{PUCCH2}} - 8)/N_{\text{CS}} \rfloor + 1 + ((M - 1 + K) \, mod \, \lceil 8/N_{\text{CS}} \rceil)) \cdot N$, and the start PRB index of the second PUCCH resource in the second mapping position is $(RB_{BWP}^{offset} + 6 - N_{CS} - \lfloor (r_{PUCCH2} - 8)/N_{CS} \rfloor + ((M - 1 + K) \, mod \, \lceil 8/N_{CS} \rceil)) \cdot N$, where K is a fixed time-domain cyclic offset, and M is an integer greater than or equal to 1.

In an embodiment, that frequency-domain positions to which the PUCCH resource is mapped in at least two consecutive time units in the first duration are different includes:

In the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

Alternatively, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, where $r_{PUCCH1}$ is the index of the first PUCCH resource, and $r_{PUCCH2}$ is an index of the second PUCCH resource.

In an embodiment, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In an embodiment, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

In an embodiment, the first offset is configured by the network device by using a dedicated radio resource control RRC layer.

In an embodiment, the second offset is configured by the network device by using a dedicated radio resource control RRC layer.

In an embodiment, the receiving unit 1701 is further configured to receive second indication information from the network device, where the second indication information indicates that a start time unit of the at least two consecutive time units is a time unit in which the terminal device uses the PUCCH resource for the first time.

In an embodiment, the receiving unit 1701 is further configured to receive second indication information from the network device, where the second indication information includes a time period offset, and the second indication information indicates that a start time unit of the at least two consecutive time units is a time unit obtained by adding the time period offset to a time unit in which the terminal device receives the second indication information.

In an embodiment, the receiving unit 1701 is further configured to receive second indication information from the network device, where the second indication information includes a time unit index value, and the second indication information indicates that a start time unit of the at least two consecutive time units is a time unit corresponding to the time unit index value.

For more detailed descriptions of the receiving unit 1701 and the sending unit 1702, directly refer to related descriptions of the terminal device in the method embodiment shown in FIG. 6. Details are not described herein again.

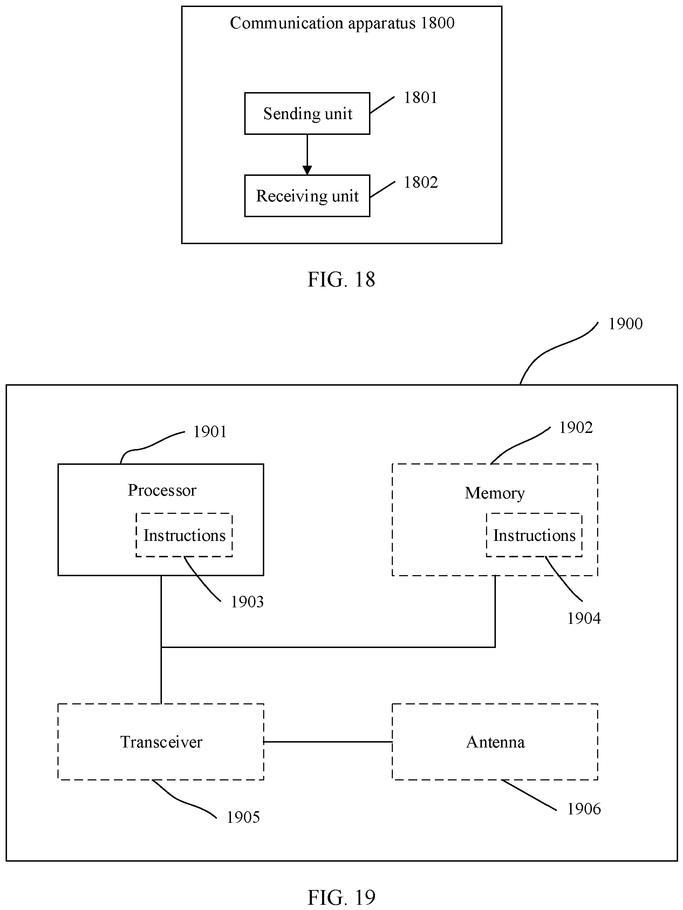

FIG. 18 is a schematic diagram of a structure of another communication apparatus according to an embodiment of this application. The apparatus may be a network device, or may be a module (for example, a chip) in the network device. As shown in FIG. 18, the apparatus 1800 includes at least a sending unit 1801 and a receiving unit 1802.

The sending unit 1801 is configured to send first indication information to a terminal device, where the first indication information is used to determine a frequency-domain position to which a physical uplink control channel PUCCH resource is mapped.

The receiving unit 1802 is configured to receive information from the terminal device in first duration, where frequency-domain positions to which the PUCCH resource is mapped in at least two consecutive time units in the first duration are different.

In an embodiment, if the network device does not configure, for the terminal device, a frequency-domain position to which a dedicated PUCCH resource is mapped, the frequency-domain position to which the PUCCH resource is mapped is determined based on a PRB offset and a set of initial cyclic shift indexes.

In an embodiment, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH}}/8 \rfloor = 0$ , the start PRB index of the PUCCH resource in the first mapping position is $(RB_{BWP}^{offset} + \lfloor r_{PUCCH}/N_{CS} \rfloor) \cdot N$ , the start PRB index of the PUCCH resource in the second mapping position is $N_{BWP}^{size} - (RB_{BWP}^{offset} + \lfloor r_{PUCCH}/N_{CS} \rfloor + 1) \cdot N$ , and the initial cyclic shift index of the PUCCH resource is $r_{\text{PUCCH}} \bmod N_{\text{CS}}$; or

if $\lfloor r_{\text{PUCCH}}/8 \rfloor = 1$ , the start PRB index of the PUCCH resource in the first mapping position is $N_{\text{BWP}}^{\text{size}} - (RB_{\text{BWP}}^{\text{offset}} + \lfloor (r_{\text{PUCCH}} - 8)/N_{\text{CS}} \rfloor + 1) \cdot N$ , the start PRB index of the PUCCH resource in the second mapping position is $(RB_{\text{BWP}}^{\text{offset}} + \lfloor (r_{\text{PUCCH}} - 8)/N_{\text{CS}} \rfloor) \cdot N$ , and the initial cyclic shift index of the PUCCH resource is $(r_{\text{PUCCH}} - 8) \bmod N_{\text{CS}}$, where $RB_{BWP}^{offset}$ is a PRB offset, $r_{PUCCH}$ is an index of the PUCCH resource, $N_{CS}$ is a total quantity of initial cyclic shift indexes in a set of initial cyclic shift indexes, $N_{BWP}^{size}$ is a quantity of PRBs occupied by a bandwidth part BWP, N is a quantity of PRBs occupied by the PUCCH resource, and N is a positive integer greater than or equal to 1.

In an embodiment, the frequency-domain position to which the PUCCH resource is mapped includes a start PRB index of the PUCCH resource in a first mapping position, a start PRB index of the PUCCH resource in a second mapping position, and an initial cyclic shift index of the PUCCH resource; and that the frequency-domain position to which the PUCCH resource is mapped is determined based on a PRB offset and a set of initial cyclic shift indexes includes:

if $\lfloor r_{\text{PUCCH1}}/8 \rfloor = 0$ and $r_{\text{PUCCH1}} < \lceil 8/N_{CS} \rceil$ , a start PRB index of a first PUCCH resource in a first mapping position is $(RB_{BWP}^{offset} + \lfloor r_{PUCCH1}/N_{CS} \rfloor) \cdot N$ , a start PRB index of the first PUCCH resource in a second mapping position is $N_{BWP}^{size} - (RB_{BWP}^{offset} + \lfloor r_{PUCCH1}/N_{CS} \rfloor + 1) \cdot N$, and an initial cyclic shift index of the first PUCCH resource is $r_{\text{PUCCH1}} \bmod N_{\text{CS}}$, where the first PUCCH resource is a PUCCH resource closest to edges on both sides of a bandwidth part BWP; or

if $\lfloor r_{\text{PUCCH1}}/8 \rfloor = 1$ and $r_{\text{PUCCH1}} - 8 < \lceil 8/N_{CS} \rceil$ , a start PRB index of a first PUCCH resource in a first mapping position is $N_{\text{BWP}}^{\text{size}} - (RB_{\text{BWP}}^{\text{offset}} + \lfloor (r_{\text{PUCCH1}} - 8)/N_{\text{CS}} \rfloor + 1) \cdot N$, a start PRB index of the first PUCCH resource in a second mapping position is $(RB_{\text{BWP}}^{\text{offset}} + \lfloor (r_{\text{PUCCH1}} - 8)/N_{\text{CS}} \rfloor) \cdot N$ , and an initial cyclic shift index of the first PUCCH resource is $(r_{\text{PUCCH1}} - 8) \bmod N_{\text{CS}}$; and

if $\lfloor r_{\text{PUCCH2}}/8 \rfloor = 0$ and $r_{\text{PUCCH2}} \geq \lceil 8/N_{CS} \rceil$, a start PRB index of a second PUCCH resource in a first mapping position is $(RB_{BWP}^{offset} + \lfloor r_{PUCCH2}/N_{CS} \rfloor) \cdot N$, a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$, and an initial cyclic shift index of the second PUCCH resource is $r_{\text{PUCCH2}}$ mod $N_{CS}$, where the second PUCCH resource is a PUCCH resource other than the first PUCCH resource in a PUCCH resource set, each PUCCH resource in the second PUCCH resource has a same frequency-domain frequency-hopping distance, and the PUCCH resource set includes a plurality of PUCCH resources; or

if $\lfloor r_{\text{PUCCH2}}/8 \rfloor = 1$ and $r_{\text{PUCCH2}} - 8 \geq \lceil 8/N_{CS} \rceil$, a start PRB index of a second PUCCH resource in a first mapping position is $N_{BWP}^{size} - (RB_{BWP}^{offset} + \lfloor (r_{PUCCH2} - 8)/N_{CS} \rfloor + 1)$. N, a start PRB index of the second PUCCH resource in a second mapping position is $(RB_{BWP}^{offset} +$

$6 - N_{CS} - \lfloor (r_{PUCCH2} - 8)/N_{CS} \rfloor) \cdot N$, and an initial cyclic shift index of the second PUCCH resource is

$(r_{PUCCH2} - 8)$ mod $N_{CS}$ where $RB_{BWP}^{offset}$ is the PRB offset $r_{PUCCH1}$ is an index of the first PUCCH resource,

$N_{CS}$ is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than or equal to 1.

In an embodiment, that frequency-domain positions to which the PUCCH resource is mapped in at least two consecutive time units in the first duration are different includes:

In the at least two consecutive time units, if $\lfloor r_{\text{PUCCH}}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB

indexes; or if $\lfloor r_{\text{PUCCH}}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes.

Alternatively, in the at least two consecutive time units, if $\lfloor r_{\text{PUCCH}}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{\text{PUCCH}}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.
In an embodiment, that frequency-domain positions to which the PUCCH resource is mapped in at least two consecutive time units in the first duration are different includes:

In an M$^{th}$ time unit in the at least two consecutive time units, if $\lfloor r_{\text{PUCCH}}/8 \rfloor = 0$, the start PRB index of the PUCCH resource in the first mapping position is $(RB_{BWP}^{offset} +$

$\lfloor r_{PUCCH}/N_{CS} \rfloor + ((M - 1 + K) \mod \lceil 8/N_{CS} \rceil)) \cdot N$, and the start PRB index of the PUCCH resource in the second mapping position is $N_{BWP}^{size} - \left(RB_{BWP}^{offset} + \lfloor r_{PUCCH}/N_{CS} \rfloor + 1 + ((M - 1 + K) \mod \lceil 8/N_{CS} \rceil)\right) \cdot N$ ; or if $\lfloor r_{PUCCH}/8 \rfloor = 1$ , the start PRB index of the PUCCH resource in the first mapping position is $N_{BWP}^{size} - (RB_{BWP}^{offset} + \lfloor (r_{PUCCH} - 8)/N_{CS} \rfloor + 1 + ((M - 1 + K) \mod \lceil 8/N_{CS} \rceil)) \cdot N$ , and the start PRB index of the PUCCH resource in the second mapping position is

$(RB_{BWP}^{offset} + \lfloor (r_{PUCCH} - 8)/N_{CS} \rfloor + ((M - 1 + K) \mod \lceil 8/N_{CS} \rceil)) \cdot N$ , where K is a fixed time-domain cyclic offset.

In an embodiment, that frequency-domain positions to which the PUCCH resource is mapped in at least two consecutive time units in the first duration are different includes:

In the at least two consecutive time units, if $\lfloor r_{PUCCH1}/8 \rfloor = 0$ and $\lfloor r_{PUCCH2}/8 \rfloor = 0$ , the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if

$\lfloor r_{PUCCH1}/8 \rfloor = 1$ and $\lfloor r_{PUCCH2}/8 \rfloor = 1$ , the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes.

Alternatively, in the at least two consecutive time units, if $\lfloor r_{PUCCH1}/8 \rfloor = 0$ and $\lfloor r_{PUCCH2}/8 \rfloor = 0$ , the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes;

or if $\lfloor r_{PUCCH1}/8 \rfloor = 1$ and $\lfloor r_{PUCCH2}/8 \rfloor = 1$ , the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes, where $r_{PUCCH1}$ is the index of the first PUCCH resource, and $r_{PUCCH2}$ is an index of the second PUCCH resource.

In an embodiment, that frequency-domain positions to which the PUCCH resource is mapped in at least two consecutive time units in the first duration are different includes:

In an Mth time unit in the at least two consecutive time units, if $\lfloor r_{PUCCH1}/8 \rfloor = 0$ , the start PRB index of the first PUCCH resource in the first mapping position is $(RB_{BWP}^{offset} + \lfloor r_{PUCCH1}/N_{CS} \rfloor + ((M - 1 + K) \mod \lceil 8/N_{CS} \rceil)) \cdot N$ , and the start PRB index of the first PUCCH resource in the second mapping position is $N_{BWP}^{size} - \left(RB_{BWP}^{offset} + \lfloor r_{PUCCH1}/N_{CS} \rfloor + 1 + ((M - 1 + K) \mod \lceil 8/N_{CS} \rceil)\right) \cdot N$ ; or if $\lfloor r_{PUCCH1}/8 \rfloor = 1$ , the start PRB index of the first PUCCH resource in the first mapping position is $N_{BWP}^{size} - (RB_{BWP}^{offset} + \lfloor (r_{PUCCH1} - 8)/N_{CS} \rfloor + 1 + ((M - $

$$1 + K) \bmod \lceil 8/N_{CS} \rceil)) \cdot N$$

, and the start PRB index of the first PUCCH resource in the second mapping position is $(RB_{BWP}^{offset} + \lfloor (r_{PUCCH1} - 8)/N_{CS} \rfloor + ((M - 1 + K) \bmod \lceil 8/N_{CS} \rceil)) \cdot N$ ; and

if $\lfloor r_{PUCCH2}/8 \rfloor = 0$, the start PRB index of the second PUCCH resource in the first mapping position is $\left( RB_{BWP}^{offset} + \lfloor r_{PUCCH2}/N_{CS} \rfloor + ((M - 1 + K) mod \left\lceil \frac{8}{N_{CS}} \right\rceil) \right) \cdot N$, and the start PRB index of the second PUCCH resource in the second mapping position is $N_{BWP}^{size} - (RB_{BWP}^{offset} +$

$7 - N_{CS} - \lfloor r_{PUCCH2}/N_{CS} \rfloor + ((M - 1 + K) \bmod \lceil 8/N_{CS} \rceil)) \cdot N$; or if $\lfloor r_{PUCCH2}/8 \rfloor = 1$, the start PRB index of the second PUCCH resource in the first mapping position is $N_{BWP}^{size} - (RB_{BWP}^{offset} +$

$\lfloor (r_{PUCCH2} - 8)/N_{CS} \rfloor + 1 + ((M - 1 + K) \bmod \lceil 8/N_{CS} \rceil)) \cdot N$, and the start PRB index of the second PUCCH resource in the second mapping position is $(RB_{BWP}^{offset} + 6 - N_{CS} -$

$\lfloor (r_{PUCCH2} - 8)/N_{CS} \rfloor + ((M - 1 + K) mod \lceil 8/N_{CS} \rceil)) \cdot N$, where K is a fixed time-domain cyclic offset, and M is an integer greater than or equal to 1.

In an embodiment, that frequency-domain positions to which the PUCCH resource is mapped in at least two consecutive time units in the first duration are different includes:

In the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if

$\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes.

Alternatively, in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB

indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, where $r_{PUCCH1}$ is the index of the first PUCCH resource, and $r_{PUCCH2}$ is an index of the second PUCCH resource.

In an embodiment, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

In an embodiment, the frequency-domain position to which the PUCCH resource is mapped includes a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different includes:

In the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

In an embodiment, the first offset is configured by the network device by using a dedicated radio resource control RRC layer.

In an embodiment, the second offset is configured by the network device by using a dedicated radio resource control RRC layer.

In an embodiment, the sending unit 1801 is configured to send second indication information to the terminal device, where the second indication information indicates that a start time unit of the at least two consecutive time units is a time unit in which the terminal device uses the PUCCH resource for the first time.

In an embodiment, the sending unit 1801 is configured to send second indication information to the terminal device, where the second indication information includes a time period offset, and the second indication information indicates that a start time unit of the at least two consecutive time units is a time unit obtained by adding the time period offset to a time unit in which the terminal device receives the second indication information.

In an embodiment, the sending unit 1801 is further configured to send second indication information to the terminal device, where the second indication information includes a time unit index value, and the second indication information indicates that a start time unit of the at least two consecutive time units is a time unit corresponding to the time unit index value.

For more detailed descriptions of the sending unit 1801 and the receiving unit 1802, directly refer to related descriptions of the network device in the method embodiment shown in FIG. 6. Details are not described herein again.

Based on the foregoing network architecture, FIG. 19 is a schematic diagram of a structure of still another communication apparatus according to an embodiment of this application. As shown in FIG. 19, the apparatus 1900 may include one or more processors 1901. The processor 1901 may also be referred to as a processing unit, and may implement a specific control function. The processor 1901 may be a general-purpose processor, a dedicated processor, or the like. For example, the processor 1901 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1901 may further store instructions and data 1903. The instructions and the data 1903 may run on the processor, so that the apparatus 1900 performs the method described in the foregoing method embodiments.

In another optional design, the processor 1901 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1900 may include a circuit. The circuit may implement sending, receiving, or communication functions in the foregoing method embodiments.

Optionally, the apparatus 1900 may include one or more memories 1902. The memory may store instructions 1904. The instructions may be run on the processor, to enable the apparatus 1900 to perform the method described in the foregoing method embodiments. Optionally, the memory may further store data. Optionally, the processor may also store instructions and data. The processor and the memory may be separately disposed, or may be integrated together. For example, the correspondence described in the foregoing method embodiments may be stored in the memory or stored in the processor.

Optionally, the apparatus 1900 may further include a transceiver 1905 and an antenna 1906. The processor 1901 may be referred to as a processing unit, and controls the apparatus 1900. The transceiver 1905 may be referred to as a transceiver unit, a transceiver machine, a transceiver circuit, a transceiver apparatus, a transceiver module, or the like, and is configured to implement sending and receiving functions.

Optionally, the apparatus 1900 in this embodiment of this application may be configured to perform the method described in FIG. 6 in embodiments of this application.

In an embodiment, the communication apparatus 1900 may be a terminal device, or may be a module (for example, a chip) in the terminal device. When computer program instructions stored in the memory 1902 are executed, the transceiver 1905 is configured to perform the operations performed by the receiving unit 1701 and the sending unit 1702 in the foregoing embodiment. The transceiver 1905 is further configured to send information to a communication apparatus other than the communication apparatus. The terminal device or the module in the terminal device may be further configured to perform various methods performed by the terminal device in the method embodiment in FIG. 6. Details are not described again.

In an embodiment, the communication apparatus 1900 may be a network device, or may be a module (for example, a chip) in the network device. When computer program instructions stored in the memory 1902 are executed, the transceiver 1905 is configured to perform the operations performed by the sending unit 1801 and the receiving unit 1802 in the foregoing embodiment. The transceiver 1905 is further configured to receive information from a communication apparatus other than the communication apparatus. The network device or the module in the network device may be further configured to perform various methods performed by the network device in the method embodiments in FIG. 6. Details are not described again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be the network device or the terminal. However, a scope of the apparatus described in this application is not limited thereto, and the structure of the apparatus may not be limited to FIG. 19. The apparatus may be an independent device, or may be a part of a larger device. For example, the apparatus may be:

(1) an independent integrated circuit IC, a chip, or a chip system or subsystem;
(2) a set of one or more ICs, where optionally, the IC set may also include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

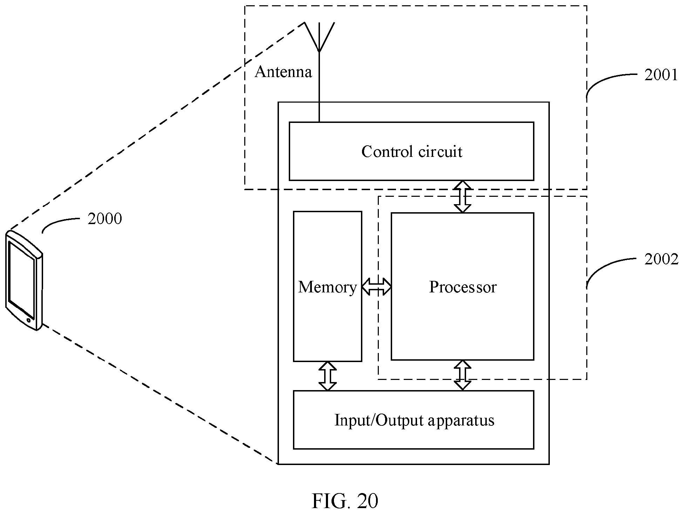

FIG. 20 is a schematic diagram of a structure of a terminal device according to an embodiment of this application. For ease of description, FIG. 20 shows only main components of the terminal device. As shown in FIG. 20, the terminal device 2000 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read a software program in a storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form by using the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 20 shows only one memory and one processor. In a real terminal, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal, execute the software program, and process the data of the software program. The processor in FIG. 20 integrates functions of the baseband processor and the central processing unit. Persons skilled in the art may understand that the baseband processor and the central processing unit may alternatively be separate processors, and are interconnected by using technologies such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 2001 of the terminal 2000, and the processor having a processing function may be considered as a processing unit 2002 of the terminal 2000. As shown in FIG. 20, the terminal 2000 includes the transceiver unit 2001 and the processing unit 2002. The transceiver unit may also be referred to as a transceiver, a transceiver machine, a transceiver apparatus, or the like. Optionally, a component that is in the transceiver unit 2001 and that is configured to implement a receiving function may be considered as a receiving unit, and a component that is in the transceiver unit 2001 and that is configured to implement a sending function may be considered as a sending unit. That is, the transceiver unit 2001 includes the receiving unit and the sending unit. For example, the receiving unit may also be referred to as a receiver, a receiver machine, or a receiving circuit, and the sending unit may also be referred to as a transmitter, a transmitter machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

In an embodiment, the transceiver unit 2001 is configured to perform the operations performed by the receiving unit 1701 and the sending unit 1702 in the foregoing embodiment. The terminal 2000 may be further configured to perform various methods performed by the terminal device in the method embodiment in FIG. 6. Details are not described again.

An embodiment of this application further provides a computer-readable storage medium. The computer-readable storage medium stores a computer program. When the program is executed by a processor, a procedure related to the terminal device in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When the foregoing modules in the device are implemented in a form of a software functional unit and sold or used as an independent product, the modules may be stored in the computer-readable storage medium.

An embodiment of this application further provides a chip system, including at least one processor and a communication interface. The communication interface and the at least one processor are interconnected by using a line, and the at least one processor is configured to run a computer program or instructions, to perform some or all steps of any method recorded in the foregoing method embodiment corresponding to FIG. 6. The chip system may include a chip, or may include a chip and another discrete component.

An embodiment of this application further discloses a communication system. The system includes a terminal and a network device. For specific descriptions, refer to the communication method shown in FIG. 6.

It may be understood that the memory in embodiments of this application may be a volatile memory or a nonvolatile memory, or may include a volatile memory and a nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Persons of ordinary skill in the art may be aware that, in combination with the examples described in embodiments provided in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A communication method, comprising:

   receiving first indication information from a network device, wherein the first indication information is used to determine a frequency-domain position to which a physical uplink control channel PUCCH resource is mapped; and
   sending information to the network device in first duration by using the PUCCH resource, wherein frequency-domain positions to which the PUCCH resource is mapped in at least two consecutive time units in the first duration are different.

2. A communication method, comprising:

   sending first indication information to a terminal device, wherein the first indication information is used to determine a frequency-domain position to which a physical uplink control channel PUCCH resource is mapped; and
   receiving information from the terminal device in first duration, wherein frequency-domain positions to which the PUCCH resource is mapped in at least two consecutive time units in the first duration are different.

3. The method according to claim 1 or 2, wherein if the network device does not configure, for the terminal device, a frequency-domain position to which a dedicated PUCCH resource is mapped, the frequency-domain position to which the PUCCH resource is mapped is determined based on a physical resource block PRB offset and a set of initial cyclic shift indexes.

4. The method according to claim 3, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

   if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, and the start PRB index of the PUCCH resource in the second mapping position is $N_{BWP}^{size} - (RB_{BWP}^{offset} + \lfloor r_{PUCCH}/N_{CS} \rfloor + 1) \cdot N$; or

   if $\lfloor r_{\text{PUCCH}}/8 \rfloor = 1$, the start PRB index of the PUCCH resource in the first mapping position is $N_{\text{BWP}}^{\text{size}} - (RB_{\text{BWP}}^{\text{offset}} + \lfloor (r_{\text{PUCCH}} - 8)/N_{\text{CS}} \rfloor + 1) \cdot N$, and the start PRB index of the PUCCH resource in the second mapping position is $(RB_{\text{BWP}}^{\text{offset}} + \lfloor (r_{\text{PUCCH}} - 8)/N_{\text{CS}} \rfloor) \cdot N$, wherein $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

5. The method according to claim 3, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

   if $\lfloor r_{\text{PUCCH}}/8 \rfloor = 0$, the start PRB index of the PUCCH resource in the first mapping position is $\left(RB_{BWP}^{offset} \cdot N\right) mod \, N_{BWP}^{size} + \lfloor r_{PUCCH}/N_{CS}\rfloor \cdot N$ , and the start PRB index of the PUCCH resource in the second mapping position is $N_{BWP}^{size} - \left(RB_{BWP}^{offset} \cdot N\right) mod \, N_{BWP}^{size} -$

$(\lfloor r_{PUCCH}/N_{CS}\rfloor + 1) \cdot N$ ; or

if $\lfloor r_{PUCCH}/8\rfloor = 1$ , the start PRB index of the PUCCH resource in the first mapping position is

$N_{BWP}^{size} - \left(RB_{BWP}^{offset} \cdot N\right) mod \, N_{BWP}^{size} - (\lfloor(r_{PUCCH} - 8)/N_{CS}\rfloor + 1) \cdot N$ , and the start PRB index of the PUCCH resource in the second mapping position is $\left(RB_{BWP}^{offset} \cdot N\right) mod \, N_{BWP}^{size} +$

$(\lfloor(r_{PUCCH} - 8)/N_{CS}\rfloor) \cdot N$ , wherein $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

6. The method according to claim 3, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{PUCCH}/8\rfloor = 0$ , the start PRB index of the PUCCH resource in the first mapping position is $\left(\left(RB_{BWP}^{offset} + \lfloor r_{PUCCH}/N_{CS}\rfloor\right) \cdot N\right) mod \, N_{BWP}^{size}$ , and the start PRB index of the PUCCH resource in the second mapping position is $N_{BWP}^{size} - \left(\left(RB_{BWP}^{offset} + \lfloor r_{PUCCH}/N_{CS}\rfloor + 1\right) \cdot N\right) mod \, N_{BWP}^{size}$ ; or

if $\lfloor r_{PUCCH}/8\rfloor = 1$ , the start PRB index of the PUCCH resource in the first mapping position is

$N_{BWP}^{size} - ((RB_{BWP}^{offset} + \lfloor(r_{PUCCH} - 8)/N_{CS}\rfloor + 1) \cdot N) \, mod \, N_{BWP}^{size}$ , and the start PRB index of the PUCCH resource in the second mapping position is $\left((RB_{BWP}^{offset} + \lfloor(r_{PUCCH} - 8)/N_{CS}\rfloor) \cdot\right.$

$\left. N\right) mod \, N_{BWP}^{size}$ , wherein $RB_{BWP}^{offset}$ is the PRB offset, $r_{PUCCH}$ is an index of the PUCCH resource, $N_{CS}$

is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

7. The method according to claim 3, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{PUCCH}/8\rfloor = 0$ , the start PRB index of the PUCCH resource in the first mapping position is $\left(\left(RB_{BWP}^{offset} + \lfloor r_{PUCCH}/N_{CS}\rfloor\right) \cdot N\right) mod \, N_{BWP}^{size}$ , and the start PRB index of the PUCCH resource in the second mapping position is $\left(N_{BWP}^{size} - \left(RB_{BWP}^{offset} + \lfloor r_{PUCCH}/N_{CS}\rfloor + 1\right) \cdot N\right) \bmod N_{BWP}^{size};$ ; or

if $\lfloor r_{\text{PUCCH}}/8 \rfloor = 1$ , the start PRB index of the PUCCH resource in the first mapping position is

$(N_{\text{BWP}}^{\text{size}} - (RB_{\text{BWP}}^{\text{offset}} + \lfloor(r_{\text{PUCCH}} - 8)/N_{\text{CS}}\rfloor + 1) \cdot N) \bmod N_{BWF}^{size}$ , and the start PRB index of the PUCCH resource in the second mapping position is $\left(\left(RB_{\text{BWP}}^{\text{offset}} + \lfloor(r_{\text{PUCCH}} - 8)/N_{\text{CS}}\rfloor\right)\right.$ .

$\left. N\right) \bmod N_{BWP}^{size}$ , wherein $RB_{BWP}^{offset}$ is the PRB offset, $r_{PUCCH}$ is an index of the PUCCH resource, $N_{CS}$

is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

8. The method according to claim 3, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{\text{PUCCH1}}/8 \rfloor = 0$ and $r_{\text{PUCCH1}} < \lceil 8/N_{CS} \rceil$ , a start PRB index of a first PUCCH resource in a first mapping position is $(RB_{BWP}^{offset} + \lfloor r_{PUCCH1}/N_{CS}\rfloor) \cdot N$ , and a start PRB index of the first PUCCH resource in a second mapping position is $N_{BWP}^{size} - (RB_{BWP}^{offset} + \lfloor r_{PUCCH1}/N_{CS}\rfloor + 1) \cdot N$ , wherein the first PUCCH resource is a PUCCH resource closest to edges on both sides of a bandwidth part BWP; or

if $\lfloor r_{\text{PUCCH1}}/8 \rfloor = 1$ and $r_{\text{PUCCH1}} - 8 < \lceil 8/N_{CS} \rceil$ , a start PRB index of a first PUCCH resource in a first mapping position is $N_{\text{BWP}}^{\text{size}} - (RB_{\text{BWP}}^{\text{offset}} + \lfloor(r_{\text{PUCCH1}} - 8)/N_{\text{CS}}\rfloor + 1) \cdot N$ , and a start PRB index of the first PUCCH resource in a second mapping position is $(RB_{\text{BWP}}^{\text{offset}} +$

$\lfloor(r_{\text{PUCCH1}} - 8)/N_{\text{CS}}\rfloor) \cdot N$ ; and

if $\lfloor r_{\text{PUCCH2}}/8 \rfloor = 0$ and $r_{\text{PUCCH2}} \geq \lceil 8/N_{CS} \rceil$ , a start PRB index of a second PUCCH resource in a first mapping position is $(RB_{BWP}^{offset} + \lfloor r_{PUCCH2}/N_{CS}\rfloor) \cdot N$ , and a start PRB index of the second PUCCH resource in a second mapping position is $N_{BWP}^{size} - (RB_{BWP}^{offset} + 7 - N_{CS} - \lfloor r_{PUCCH2}/N_{CS}\rfloor) \cdot N$ , wherein the second PUCCH resource is a PUCCH resource other than the first PUCCH resource in a PUCCH resource set, each PUCCH resource in the second PUCCH resource has a same frequency-domain frequency-hopping distance, and the PUCCH resource set comprises a plurality of PUCCH resources; or

if $\lfloor r_{\text{PUCCH2}}/8 \rfloor = 1$ and $r_{\text{PUCCH2}} - 8 \geq \lceil 8/N_{CS} \rceil$ , a start PRB index of a second PUCCH resource in a first mapping position is $N_{BWP}^{size} - (RB_{BWP}^{offset} + \lfloor(r_{PUCCH2} - 8)/N_{CS}\rfloor + 1) \cdot N$ , and a start PRB index of the second PUCCH resource in a second mapping position is $(RB_{BWP}^{offset} + 6 -$

$$N_{CS} - \lfloor (r_{PUCCH2} - 8)/N_{CS} \rfloor) \cdot N$$, wherein $RB_{BWP}^{offset}$ is the PRB offset, is an index of the first PUCCH resource, $N_{CS}$ is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than 1.

9. The method according to any one of claims 4 to 7, wherein that frequency-domain positions to which the PUCCH resource is mapped in at least two consecutive time units in the first duration are different comprises:

in the at least two consecutive time units, if $\lfloor r_{PUCCH}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{PUCCH}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or

in the at least two consecutive time units, if $\lfloor r_{PUCCH}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{PUCCH}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

10. The method according to any one of claims 4 to 7, wherein that frequency-domain positions to which the PUCCH resource is mapped in at least two consecutive time units in the first duration are different comprises:

in an M$^{th}$ time unit in the at least two consecutive time units, if $\lfloor r_{PUCCH}/8 \rfloor = 0$, the start PRB index of the PUCCH resource in the first mapping position is $(RB_{BWP}^{offset} + \lfloor r_{PUCCH}/N_{CS} \rfloor + ((M - 1 + K) \bmod \lceil 8/N_{CS} \rceil)) \cdot N$, and the start PRB index of the PUCCH resource in the second mapping position is $N_{BWP}^{size} - \left( RB_{BWP}^{offset} + \lfloor r_{PUCCH}/N_{CS} \rfloor + 1 + ((M - 1 + K) \bmod \lceil 8/N_{CS} \rceil) \right)$. N; or if $\lfloor r_{PUCCH}/8 \rfloor = 1$, the start PRB index of the PUCCH resource in the first mapping position is $N_{BWP}^{size} - (RB_{BWP}^{offset} + \lfloor (r_{PUCCH} - 8)/N_{CS} \rfloor + 1 + ((M - 1 + K) \bmod \lceil 8/N_{CS} \rceil)) \cdot N$, and the start PRB index of the PUCCH resource in the second mapping position is $(RB_{BWP}^{offset} + \lfloor (r_{PUCCH} - 8)/N_{CS} \rfloor + ((M - 1 + K) \bmod \lceil 8/N_{CS} \rceil)) \cdot N$, wherein K is a fixed time-domain cyclic offset, and M is an integer greater than or equal to 1.

11. The method according to claim 8, wherein that frequency-domain positions to which the PUCCH resource is mapped in at least two consecutive time units in the first duration are different comprises:

in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or

in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes, wherein $r_{\text{PUCCH1}}$ is the index of the first PUCCH resource, and $r_{\text{PUCCH2}}$ is an index of the second PUCCH resource.

12. The method according to claim 8, wherein that frequency-domain positions to which the PUCCH resource is mapped in at least two consecutive time units in the first duration are different comprises:

in an $M^{\text{th}}$ time unit in the at least two consecutive time units, if $\lfloor r_{\text{PUCCH1}}/8 \rfloor = 0$, the start PRB index of the first PUCCH resource in the first mapping position is $(RB_{BWP}^{offset} + \lfloor r_{PUCCH1}/N_{CS} \rfloor + ((M - 1 + K) \bmod \lceil 8/N_{CS} \rceil)) \cdot N$, and the start PRB index of the first PUCCH resource in the second mapping position is $N_{BWP}^{size} - \left( RB_{BWP}^{offset} + \lfloor r_{PUCCH1}/N_{CS} \rfloor + 1 + ((M - 1 + K) \bmod \lceil 8/N_{CS} \rceil) \right) \cdot N$; or if $\lfloor r_{\text{PUCCH1}}/8 \rfloor = 1$, the start PRB index of the first PUCCH resource in the first mapping position is $N_{BWP}^{size} - (RB_{BWP}^{offset} + \lfloor (r_{PUCCH1} - 8)/N_{CS} \rfloor + 1 + ((M - 1 + K) \bmod \lceil 8/N_{CS} \rceil)) \cdot N$, and the start PRB index of the first PUCCH resource in the second mapping position is $(RB_{BWP}^{offset} + \lfloor (r_{PUCCH1} - 8)/N_{CS} \rfloor + ((M - 1 + K) \bmod \lceil 8/N_{CS} \rceil)) \cdot N$; and if $\lfloor r_{\text{PUCCH2}}/8 \rfloor = 0$, the start PRB index of the second PUCCH resource in the first mapping position is $\left( RB_{BWP}^{offset} + \lfloor r_{PUCCH2}/N_{CS} \rfloor + ((M - 1 + K) \bmod \lceil \frac{8}{N_{CS}} \rceil) \right) \cdot N$, and the start PRB index of the second PUCCH resource in the second mapping position is $N_{BWP}^{size} - (RB_{BWP}^{offset} + 7 - N_{CS} - \lfloor r_{PUCCH2}/N_{CS} \rfloor + ((M - 1 + K) \bmod \lceil 8/N_{CS} \rceil)) \cdot N$; or if $\lfloor r_{PUCCH2}/8 \rfloor = 1$, the start PRB index of the second PUCCH resource in the first mapping position is $N_{BWP}^{size} - (RB_{BWP}^{offset} + \lfloor (r_{PUCCH2} - 8)/N_{CS} \rfloor + 1 + ((M - 1 + K) \bmod \lceil 8/N_{CS} \rceil)) \cdot N$, and the start PRB index of the second PUCCH resource in the second mapping position is $(RB_{BWP}^{offset} + 6 - N_{CS} - \lfloor (r_{PUCCH2} - 8)/N_{CS} \rfloor + ((M - 1 + K) \bmod \lceil 8/N_{CS} \rceil)) \cdot N$, wherein K is a fixed time-domain cyclic offset, and M is an integer greater than or equal to 1.

13. The method according to claim 8, wherein that frequency-domain positions to which the PUCCH resource is mapped in at least two consecutive time units in the first duration are different comprises:

in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or

in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, wherein $r_{PUCCH1}$ is the index of the first PUCCH resource, and $r_{PUCCH2}$ is an index of the second PUCCH resource.

14. The method according to any one of claims 4 to 13, wherein N corresponding to any index of the PUCCH resource sets 0 to 15 is less than or equal to 3.

15. The method according to claim 1 or 2, wherein the frequency-domain position to which the PUCCH resource is mapped comprises a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different comprises:
in the at least two consecutive time units, the start PRB index of the PUCCH resource in the first mapping position

and the start PRB index of the PUCCH resource in the second mapping position are cyclically shifted by a first offset on a physical resource block PRB of a bandwidth part BWP.

16. The method according to claim 1 or 2, wherein the frequency-domain position to which the PUCCH resource is mapped comprises a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different comprises:

in the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

17. The method according to claim 15 or 16, wherein the first offset is configured by the network device by using a dedicated radio resource control RRC layer.

18. The method according to claim 16, wherein the second offset is configured by the network device by using a dedicated radio resource control RRC layer.

19. The method according to any one of claim 1 and claims 3 to 18, wherein the method further comprises:
receiving second indication information from the network device, wherein the second indication information indicates that a start time unit of the at least two consecutive time units is a time unit in which the terminal device uses the PUCCH resource for the first time.

20. The method according to any one of claim 1 and claims 3 to 18, wherein the method further comprises:
receiving second indication information from the network device, wherein the second indication information comprises a time period offset, and the second indication information indicates that a start time unit of the at least two consecutive time units is a time unit obtained by adding the time period offset to a time unit in which the terminal device receives the second indication information.

21. The method according to any one of claim 1 and claims 3 to 18, wherein the method further comprises:
receiving second indication information from the network device, wherein the second indication information comprises a time unit index value, and the second indication information indicates that a start time unit of the at least two consecutive time units is a time unit corresponding to the time unit index value.

22. The method according to any one of claims 2 to 18, wherein the method further comprises:
sending second indication information to the terminal device, wherein the second indication information indicates that a start time unit of the at least two consecutive time units is a time unit in which the terminal device uses the PUCCH resource for the first time.

23. The method according to any one of claims 2 to 18, wherein the method further comprises:
sending second indication information to the terminal device, wherein the second indication information comprises a time period offset, and the second indication information indicates that a start time unit of the at least two consecutive time units is a time unit obtained by adding the time period offset to a time unit in which the terminal device receives the second indication information.

24. The method according to any one of claims 2 to 18, wherein the method further comprises:
sending second indication information to the terminal device, wherein the second indication information comprises a time unit index value, and the second indication information indicates that a start time unit of the at least two consecutive time units is a time unit corresponding to the time unit index value.

25. A communication apparatus, comprising:

a receiving unit, configured to receive first indication information from a network device, wherein the first indication information is used to determine a frequency-domain position to which a physical uplink control channel PUCCH resource is mapped; and
a sending unit, configured to send information to the network device in first duration by using the PUCCH resource, wherein frequency-domain positions to which the PUCCH resource is mapped in at least two consecutive time units in the first duration are different.

26. A communication apparatus, comprising:

a sending unit, configured to send first indication information to a terminal device, wherein the first indication information is used to determine a frequency-domain position to which a physical uplink control channel PUCCH resource is mapped; and
a receiving unit, configured to receive information from the terminal device in first duration, wherein frequency-domain positions to which the PUCCH resource is mapped in at least two consecutive time units in the first duration are different.

27. The apparatus according to claim 25 or 26, wherein if the network device does not configure, for the terminal device, a frequency-domain position to which a dedicated PUCCH resource is mapped, the frequency-domain position to which the PUCCH resource is mapped is determined based on a physical resource block PRB offset and a set of initial cyclic shift indexes.

28. The apparatus according to claim 27, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor) \cdot N$, and the start PRB index of the PUCCH resource in the second mapping position is $N_{BWP}^{size} - (RB_{BWP}^{offset} + \lfloor r_{PUCCH}/N_{CS} \rfloor + 1) \cdot N$; or

if $\lfloor r_{\text{PUCCH}}/8 \rfloor = 1$, the start PRB index of the PUCCH resource in the first mapping position is $N_{\text{BWP}}^{\text{size}} - (RB_{\text{BWP}}^{\text{offset}} + \lfloor (r_{\text{PUCCH}} - 8)/N_{\text{CS}} \rfloor + 1) \cdot N$, and the start PRB index of the PUCCH resource in the second mapping position is $(RB_{\text{BWP}}^{\text{offset}} + \lfloor (r_{\text{PUCCH}} - 8)/N_{\text{CS}} \rfloor) \cdot N$, wherein $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

29. The apparatus according to claim 27, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{\text{PUCCH}}/8 \rfloor = 0$, the start PRB index of the PUCCH resource in the first mapping position is $(RB_{BWP}^{offset} \cdot N) \bmod N_{BWP}^{size} + \lfloor r_{PUCCH}/N_{CS} \rfloor \cdot N$, and the start PRB index of the PUCCH resource in the second mapping position is $N_{BWP}^{size} - (RB_{BWP}^{offset} \cdot N) \bmod N_{BWP}^{size} - (\lfloor r_{PUCCH}/N_{CS} \rfloor + 1) \cdot N$; or

if $\lfloor r_{\text{PUCCH}}/8 \rfloor = 1$, the start PRB index of the PUCCH resource in the first mapping position is $N_{\text{BWP}}^{\text{size}} - (RB_{\text{BWP}}^{\text{offset}} \cdot N) \bmod N_{BWP}^{size} - (\lfloor (r_{\text{PUCCH}} - 8)/N_{\text{CS}} \rfloor + 1) \cdot N$, and the start PRB index of the PUCCH resource in the second mapping position is $\left(\text{RB}_{\text{BWP}}^{\text{offset}} \cdot \text{N}\right) \bmod N_{BWP}^{size} +$

$\left(\lfloor (r_{\text{PUCCH}} - 8)/\text{N}_{\text{CS}}\rfloor\right) \cdot \text{N}$ , wherein $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

30. The apparatus according to claim 27, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{\text{PUCCH}}/8\rfloor = 0$ , the start PRB index of the PUCCH resource in the first mapping position is $\left(\left(RB_{BWP}^{offset} + \lfloor r_{PUCCH}/N_{CS}\rfloor\right) \cdot N\right) \bmod N_{BWP}^{size}$ , and the start PRB index of the PUCCH resource in the second mapping position is $N_{BWP}^{size} - \left(\left(RB_{BWP}^{offset} + \lfloor r_{PUCCH}/N_{CS}\rfloor + 1\right) \cdot N\right) \bmod N_{BWP}^{size}$ ; or

if $\lfloor r_{\text{PUCCH}}/8\rfloor = 1$ , the start PRB index of the PUCCH resource in the first mapping position is

$\text{N}_{\text{BWP}}^{\text{size}} - ((\text{RB}_{\text{BWP}}^{\text{offset}} + \lfloor (r_{\text{PUCCH}} - 8)/\text{N}_{\text{CS}}\rfloor + 1) \cdot \text{N}) \bmod N_{BWP}^{size}$ and the start PRB index of the PUCCH resource in the second mapping position is $\left(\left(\text{RB}_{\text{BWP}}^{\text{offset}} + \lfloor (r_{\text{PUCCH}} - 8)/\text{N}_{\text{CS}}\rfloor\right) \cdot \right.$

$\left. \text{N}\right) \bmod N_{BWP}^{size}$ , wherein $RB_{BWP}^{offset}$ is the PRB offset, $r_{PUCCH}$ is an index of the PUCCH resource, $N_{CS}$ is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

31. The apparatus according to claim 27, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{\text{PUCCH}}/8\rfloor = 0$ , the start PRB index of the PUCCH resource in the first mapping position is $\left(\left(RB_{BWP}^{offset} + \lfloor r_{PUCCH}/N_{CS}\rfloor\right) \cdot N\right) \bmod N_{BWP}^{size}$ , and the start PRB index of the PUCCH resource in the second mapping position is $\left(N_{BWP}^{size} - \left(RB_{BWP}^{offset} + \lfloor r_{PUCCH}/N_{CS}\rfloor + 1\right) \cdot N\right) \bmod N_{BWP}^{size}$ ; or

if $\lfloor r_{\text{PUCCH}}/8\rfloor = 1$ , the start PRB index of the PUCCH resource in the first mapping position is

$(\text{N}_{\text{BWP}}^{\text{size}} - (\text{RB}_{\text{BWP}}^{\text{offset}} + \lfloor (r_{\text{PUCCH}} - 8)/\text{N}_{\text{CS}}\rfloor + 1) \cdot \text{N}) \bmod N_{BWP}^{size}$ , and the start PRB index of the PUCCH resource in the second mapping position is $\left(\left(\text{RB}_{\text{BWP}}^{\text{offset}} + \lfloor (r_{\text{PUCCH}} - 8)/\text{N}_{\text{CS}}\rfloor\right)\right.$ .

$$\left. N \right) \, mod \, N_{BWP}^{size}$$ , wherein $RB_{BWP}^{offset}$ is the PRB offset, $r_{PUCCH}$ is an index of the PUCCH resource, $N_{CS}$

is a total quantity of initial cyclic shift indexes in the set of initial cyclic shift indexes, $N_{BWP}^{size}$ is a quantity of PRBs occupied by a bandwidth part BWP, N is a quantity of PRBs occupied by the PUCCH resource, and N is a positive integer greater than 1.

32. The apparatus according to claim 27, wherein the frequency-domain position to which the PUCCH resource is mapped comprises a start PRB index of the PUCCH resource in a first mapping position and a start PRB index of the PUCCH resource in a second mapping position; and that the frequency-domain position to which the PUCCH resource is mapped is determined based on a PRB offset and a set of initial cyclic shift indexes comprises:

if $\lfloor r_{\text{PUCCH1}}/8 \rfloor = 0$ and $r_{\text{PUCCH1}} < \lceil 8/N_{CS} \rceil$ , a start PRB index of a first PUCCH resource in a first mapping position is $(RB_{BWP}^{offset} + \lfloor r_{PUCCH1}/N_{CS} \rfloor) \cdot N$ , a start PRB index of the first PUCCH resource in a second mapping position is $N_{BWP}^{size} - (RB_{BWP}^{offset} + \lfloor r_{PUCCH1}/N_{CS} \rfloor + 1) \cdot N$ , and the first PUCCH resource is a PUCCH resource closest to edges on both sides of a bandwidth part BWP; or

if $\lfloor r_{\text{PUCCH1}}/8 \rfloor = 1$ and $r_{\text{PUCCH1}} - 8 < \lceil 8/N_{CS} \rceil$ , a start PRB index of a first PUCCH resource in a first mapping position is $N_{\text{BWP}}^{\text{size}} - (RB_{\text{BWP}}^{\text{offset}} + \lfloor (r_{\text{PUCCH1}} - 8)/N_{\text{CS}} \rfloor + 1) \cdot N$ , and a start PRB index of the first PUCCH resource in a second mapping position is $(RB_{\text{BWP}}^{\text{offset}} + $

$\lfloor (r_{\text{PUCCH1}} - 8)/N_{\text{CS}} \rfloor) \cdot N$ ; and

if $\lfloor r_{\text{PUCCH2}}/8 \rfloor = 0$ and $r_{\text{PUCCH2}} \geq \lceil 8/N_{CS} \rceil$ , a start PRB index of a second PUCCH resource in a first mapping position is $(RB_{BWP}^{offset} + \lfloor r_{PUCCH2}/N_{CS} \rfloor) \cdot N$ , and a start PRB index of the second PUCCH resource in a second mapping position is $N_{BWP}^{size} - (RB_{BWP}^{offset} + 7 - N_{CS} - \lfloor r_{PUCCH2}/N_{CS} \rfloor) \cdot N$ , wherein the second PUCCH resource is a PUCCH resource other than the first PUCCH resource in a PUCCH resource set, each PUCCH resource in the second PUCCH resource has a same frequency-domain frequency-hopping distance, and the PUCCH resource set comprises a plurality of PUCCH resources; or

if $\lfloor r_{\text{PUCCH2}}/8 \rfloor = 1$ and $r_{\text{PUCCH2}} - 8 \geq \lceil 8/N_{CS} \rceil$ , a start PRB index of a second PUCCH resource in a first mapping position is $N_{BWP}^{size} - (RB_{BWP}^{offset} + \lfloor (r_{PUCCH2} - 8)/N_{CS} \rfloor + 1) \cdot N$ , and a start PRB index of the second PUCCH resource in a second mapping position is $(RB_{BWP}^{offset} + 6 - $

$N_{CS} - \lfloor (r_{PUCCH2} - 8)/N_{CS} \rfloor) \cdot N$ , wherein $RB_{BWP}^{offset}$ is the PRB offset, $r_{PUCCH1}$ is an index of the first PUCCH resource, $N_{CS}$ is a total quantity of initial cyclic shift indexes in the set of initial cyclic shift indexes, $N_{BWP}^{size}$ is a quantity of PRBs occupied by the bandwidth part BWP, N is a quantity of PRBs occupied by the PUCCH resource, and N is a positive integer greater than 1.

33. The apparatus according to any one of claims 28 to 31, wherein that frequency-domain positions to which the PUCCH resource is mapped in at least two consecutive time units in the first duration are different comprises:

in the at least two consecutive time units, if $\lfloor r_{\text{PUCCH}}/8 \rfloor = 0$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes; or if $\lfloor r_{\text{PUCCH}}/8 \rfloor = 1$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or

in the at least two consecutive time units, if $\lfloor r_{\text{PUCCH}}/8 \rfloor = 0$, the start PRB index of the PUCCH resource in the first mapping position is cyclically shifted by N PRBs in descending order of PRB indexes, and the start PRB index of the PUCCH resource in the second mapping position is cyclically shifted by N PRBs in ascending order of the PRB indexes; or if $\lfloor r_{\text{PUCCH}}/8 \rfloor = 1$, the start PRB index of the PUCCH resource in the first mapping position is cyclically shifted by N PRBs in ascending order of PRB indexes, and the start PRB index of the PUCCH resource in the second mapping position is cyclically shifted by N PRBs in descending order of the PRB indexes.

34. The apparatus according to any one of claims 28 to 31, wherein that frequency-domain positions to which the PUCCH resource is mapped in at least two consecutive time units in the first duration are different comprises:

in an M$^{\text{th}}$ time unit in the at least two consecutive time units, if $\lfloor r_{\text{PUCCH}}/8 \rfloor = 0$, the start PRB index of the PUCCH resource in the first mapping position is $(RB_{BWP}^{offset} + \lfloor r_{PUCCH}/N_{CS} \rfloor + ((M - 1 + K) \bmod \lceil 8/N_{CS} \rceil)) \cdot N$, and the start PRB index of the PUCCH resource in the second mapping position is $N_{BWP}^{size} - \left(RB_{BWP}^{offset} + \lfloor r_{PUCCH}/N_{CS} \rfloor + 1 + ((M - 1 + K) \bmod \lceil 8/N_{CS} \rceil)\right) \cdot$ N; or if $\lfloor r_{\text{PUCCH}}/8 \rfloor = 1$, the start PRB index of the PUCCH resource in the first mapping position is $N_{BWP}^{size} - (RB_{BWP}^{offset} + \lfloor (r_{PUCCH} - 8)/N_{CS} \rfloor + 1 + ((M - 1 + K) \bmod \lceil 8/N_{CS} \rceil)) \cdot N$, and the start PRB index of the PUCCH resource in the second mapping position is $(RB_{BWP}^{offset} + \lfloor (r_{PUCCH} - 8)/N_{CS} \rfloor + ((M - 1 + K) \bmod \lceil 8/N_{CS} \rceil)) \cdot N$, wherein K is a fixed time-domain cyclic offset, and M is an integer greater than or equal to 1.

35. The apparatus according to claim 32, wherein that frequency-domain positions to which the PUCCH resource is mapped in at least two consecutive time units in the first duration are different comprises:

in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or

in the at least two consecutive time units, if $\lfloor r_{\text{PUCCH1}}/8 \rfloor = 0$ and $\lfloor r_{\text{PUCCH2}}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{\text{PUCCH1}}/8 \rfloor = 1$ and $\lfloor r_{\text{PUCCH2}}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in descending order of the PRB indexes, wherein $r_{PUCCH1}$ is the index of the first PUCCH resource, and $r_{\text{PUCCH2}}$ is an index of the second PUCCH resource.

36. The apparatus according to claim 32, wherein that frequency-domain positions to which the PUCCH resource is mapped in at least two consecutive time units in the first duration are different comprises:

in an M$^{\text{th}}$ time unit in the at least two consecutive time units, if $\lfloor r_{\text{PUCCH1}}/8 \rfloor = 0$, the start PRB index of the first PUCCH resource in the first mapping position is $((M - 1 + K) \bmod \lceil 8/N_{CS} \rceil)) \cdot N$, and the start PRB index of the first PUCCH resource in the second mapping position is

$$N_{BWP}^{size} - \left(RB_{BWP}^{offset} + \lfloor r_{PUCCH1}/N_{CS} \rfloor + 1 + ((M - 1 + K) \bmod \lceil 8/N_{CS} \rceil)\right) \cdot N \text{; or if}$$

$\lfloor r_{\text{PUCCH1}}/8 \rfloor = 1$, the start PRB index of the first PUCCH resource in the first mapping position is

$$N_{\text{BWP}}^{\text{size}} - (RB_{\text{BWP}}^{\text{offset}} + \lfloor (r_{\text{PUCCH1}} - 8)/N_{\text{CS}} \rfloor + 1 + ((M - 1 + K) \bmod \lceil 8/N_{\text{CS}} \rceil)) \cdot N,$$

and the start PRB index of the first PUCCH resource in the second mapping position is

$$(RB_{\text{BWP}}^{\text{offset}} + \lfloor (r_{\text{PUCCH1}} - 8)/N_{\text{CS}} \rfloor + ((M - 1 + K) \bmod \lceil 8/N_{\text{CS}} \rceil)) \cdot N \text{; and}$$

if $\lfloor r_{PUCCH2}/8 \rfloor = 0$, the start PRB index of the second PUCCH resource in the first mapping position is

$$\left(RB_{BWP}^{offset} + \lfloor r_{PUCCH2}/N_{\text{CS}} \rfloor + ((M - 1 + K) \bmod \left\lceil \frac{8}{N_{CS}} \right\rceil)\right) \cdot N \text{, and the start PRB index of the}$$

second PUCCH resource in the second mapping position is $N_{\text{BWP}}^{\text{size}} - (RB_{\text{BWP}}^{\text{offset}} + 7 -$

$$N_{CS} - \lfloor r_{\text{PUCCH2}}/N_{\text{CS}} \rfloor + ((M - 1 + K) \bmod \lceil 8/N_{\text{CS}} \rceil)) \cdot N \text{; or if } \lfloor r_{PUCCH2}/8 \rfloor = 1 \text{, the start}$$

PRB index of the second PUCCH resource in the first mapping position is $N_{\text{BWP}}^{\text{size}} - (RB_{\text{BWP}}^{\text{offset}} +$

$$\lfloor (r_{\text{PUCCH2}} - 8)/N_{\text{CS}} \rfloor + 1 + ((M - 1 + K) \bmod \lceil 8/N_{\text{CS}} \rceil)) \cdot N \text{, and the start PRB index of the}$$

second PUCCH resource in the second mapping position is $(RB_{BWP}^{offset} + 6 - N_{CS} -$

$$\lfloor (r_{\text{PUCCH2}} - 8)/N_{\text{CS}} \rfloor + ((M - 1 + K) \bmod \lceil 8/N_{CS} \rceil)) \cdot N \text{, wherein K is a fixed time-domain cyclic offset, and M is an integer greater than or equal to 1.}$$

37. The apparatus according to claim 32, wherein that frequency-domain positions to which the PUCCH resource is mapped in at least two consecutive time units in the first duration are different comprises:

in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or

in the at least two consecutive time units, if $\lfloor r_{PUCCH1}/8 \rfloor = 0$ and $\lfloor r_{PUCCH2}/8 \rfloor = 0$, the start PRB index of the first PUCCH resource in the first mapping position and the start PRB index of the second PUCCH resource in the first mapping position are cyclically shifted by N PRBs in descending order of PRB indexes, and the start PRB index of the first PUCCH resource in the second mapping position and the start PRB index of the second PUCCH resource in the second mapping position are cyclically shifted by N PRBs in descending order of the PRB indexes; or if $\lfloor r_{PUCCH1}/8 \rfloor = 1$ and $\lfloor r_{PUCCH2}/8 \rfloor = 1$, the start PRB index of the first PUCCH resource in the first mapping position and the start PRB index of the second PUCCH resource in the first mapping position are cyclically shifted by N PRBs in ascending order of PRB indexes, and the start PRB index of the first PUCCH resource in the second mapping position and the start PRB index of the second PUCCH resource in the second mapping position are cyclically shifted by N PRBs in ascending order of the PRB indexes, wherein $r_{PUCCH1}$ is the index of the first PUCCH resource, and $r_{PUCCH2}$ is an index of the second PUCCH resource.

38. The apparatus according to any one of claims 28 to 37, wherein N corresponding to any index in 0 to 15 in the PUCCH resource set is less than or equal to 3.

39. The apparatus according to claim 25 or 26, wherein the frequency-domain position to which the PUCCH resource is mapped comprises a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain position to which the PUCCH resource is mapped in at least two consecutive time units in the first duration are different comprises:
in the at least two consecutive time units, the start PRB index of the PUCCH resource in the first mapping position and the start PRB index of the PUCCH resource in the second mapping position are cyclically shifted by a first offset on a physical resource block PRB of a bandwidth part BWP.

40. The apparatus according to claim 25 or 26, wherein the frequency-domain position to which the PUCCH resource is mapped comprises a start PRB index of the PUCCH resource in a first mapping position and a start PRB index of the PUCCH resource in a second mapping position; and if the network device configures, for the terminal device, a frequency-domain position to which a dedicated PUCCH resource is mapped, that frequency-domain positions to which the PUCCH resource is mapped in at least two consecutive time units in the first duration are different comprises:
in the at least two consecutive time units, the start PRB index of the PUCCH resource in the first mapping position and the start PRB index of the PUCCH resource in the second mapping position are respectively cyclically shifted by a first offset and a second offset on a physical resource block PRB of a bandwidth part BWP.

41. The apparatus according to claim 39 or 40, wherein the first offset is configured by the network device by using a dedicated radio resource control RRC layer.

42. The apparatus according to claim 40, wherein the second offset is configured by the network device by using a dedicated radio resource control RRC layer.

43. The apparatus according to any one of claim 25 and claims 27 to 42, wherein the receiving unit is further configured to: receive second indication information from the network device, wherein the second indication information indicates that a start time unit of the at least two consecutive time units is a time unit in which the terminal device uses the PUCCH resource for the first time.

44. The apparatus according to any one of claim 25 and claims 27 to 42, wherein the receiving unit is further configured to: receive second indication information from the network device, wherein the second indication information comprises a time period offset, and the second indication information indicates that a start time unit of the at least two consecutive time units is a time unit obtained by adding the time period offset to a time unit in which the terminal device receives the second indication information.

45. The apparatus according to any one of claim 25 and claims 27 to 42, wherein the receiving unit is further configured to: receive second indication information from the network device, wherein the second indication information comprises a time unit index value, and the second indication information indicates that a start time unit of the at least two consecutive time units is a time unit corresponding to the time unit index value.

46. The apparatus according to any one of claims 26 to 42, wherein the sending unit is further configured to: send second indication information to the terminal device, wherein the second indication information indicates that a start time unit of the at least two consecutive time units is a time unit in which the terminal device uses the PUCCH resource for the first time.

47. The apparatus according to any one of claims 26 to 42, wherein the sending unit is further configured to: send second indication information to the terminal device, wherein the second indication information comprises a time period offset, and the second indication information indicates that a start time unit of the at least two consecutive time units is a time unit obtained by adding the time period offset to a time unit in which the terminal device receives the second indication information.

48. The apparatus according to any one of claims 26 to 42, wherein the sending unit is further configured to: send second indication information to the terminal device, wherein the second indication information comprises a time unit index value, and the second indication information indicates that a start time unit of the at least two consecutive time units is a time unit corresponding to the time unit index value.

49. A communication apparatus, comprising a processor, a memory, an input interface, and an output interface, wherein the input interface is configured to receive information from a communication apparatus other than the communication apparatus, the output interface is configured to output information to the communication apparatus other than the communication apparatus, and when a computer program stored in the memory is invoked by the processor, the method according to any one of claims 1 to 24 is implemented.

50. A computer-readable storage medium, wherein the computer-readable storage medium stores a computer program or computer instructions, and when the computer program or the computer instructions is/are executed by a processor, the method according to any one of claims 1 to 24 is implemented.

51. A computer program product comprising executable instructions, wherein the computer program product comprises a computer program or computer instructions, and when the computer program or the computer instructions is/are executed by a processor, the method according to any one of claims 1 to 24 is implemented.

52. A chip system, comprising at least one processor, a memory, and an interface circuit, wherein the memory, the interface circuit, and the at least one processor are interconnected through a line, the at least one memory stores instructions, and when the instructions are executed by the processor, the method according to any one of claims 1 to 24 is implemented.

FIG. 1

FIG. 2

First mapping position  Second mapping position

| | | | | First | Second | |
|---|---|---|---|---|---|---|
| r = 8, 9, 10 | PRB $N_{BWP}^{size} - 1 \longrightarrow$ | | | CS0, CS4, CS8 | CS0, CS4, CS8 | r = 0, 1, 2 |
| r = 11, 12, 13 | PRB $N_{BWP}^{size} - 2 \longrightarrow$ | | | CS0, CS4, CS8 | CS0, CS4, CS8 | r = 3, 4, 5 |
| r = 14, 15 | PRB $N_{BWP}^{size} - 3 \longrightarrow$ | | | CS0, CS4 | CS0, CS4 | r = 6, 7 |
| | | | | ... | ... | |
| | | | | | | |
| | | | | | | |
| | | | | | | |
| | ... | | | ... | ... | |
| | | | | | | |
| | | | | | | |
| | | | | | | |
| | | | | | | |
| | | | | ... | ... | |
| r = 6, 7 | PRB 2 $\longrightarrow$ | | | CS0, CS4 | CS0, CS4 | r = 14, 15 |
| r = 3, 4, 5 | PRB 1 $\longrightarrow$ | | | CS0, CS4, CS8 | CS0, CS4, CS8 | r = 11, 12, 13 |
| r = 0, 1, 2 | PRB 0 $\longrightarrow$ | | | CS0, CS4, CS8 | CS0, CS4, CS8 | r = 8, 9, 10 |

Symbol 12       Symbol 13

FIG. 3

EP 4 336 765 A1

First mapping position  Second mapping position

r = 8, 9, 10   PRB $N_{BWP}^{size} - 1$ —>
               PRB $N_{BWP}^{size} - 2$ —>

r = 11, 12, 13 PRB $N_{BWP}^{size} - 3$ —>
               PRB $N_{BWP}^{size} - 4$ —>

               PRB $N_{BWP}^{size} - 5$ —>
r = 14, 15     PRB $N_{BWP}^{size} - 6$ —>

CS0, CS4, CS8 | CS0, CS4    r = 6, 7
CS0, CS4, CS8 | CS0, CS4, CS8    r = 3, 4, 5
CS0, CS4 | CS0, CS4, CS8    r = 0, 1, 2

...

              PRB 5 —>
r = 6, 7      PRB 4 —>
              PRB 3 —>
r = 3, 4, 5   PRB 2 —>
              PRB 1 —>
r = 0, 1, 2   PRB 0 —>

CS0, CS4 | CS0, CS4, CS8    r = 8, 9, 10
CS0, CS4, CS8 | CS0, CS4, CS8    r = 11, 12, 13
CS0, CS4, CS8 | CS0, CS4    r = 14, 15

Symbol 12        Symbol 13

FIG. 4

89

FIG. 5

Network device

S601: First indication information used to determine a frequency-domain position to which a PUCCH resource is mapped

S602: Send information in first duration by using the PUCCH resource, where frequency-domain positions to which the PUCCH resource is mapped in at least two consecutive time units in the first duration are different

Terminal device

FIG. 6

First mapping position  Second mapping position

| | | First mapping | Second mapping | |
|---|---|---|---|---|
| r = 8, 9, 10 | N PRBs —> $N_{BWP}^{size} - N$ to $N_{BWP}^{size} - 1$ | CS0, CS4, CS8 | CS0, CS4, CS8 | r = 0, 1, 2 |
| r = 11, 12, 13 | N PRBs —> $N_{BWP}^{size} - 2N$ to $N_{BWP}^{size} - N - 1$ | CS0, CS4, CS8 | CS0, CS4, CS8 | r = 3, 4, 5 |
| r = 14, 15 | N PRBs —> $N_{BWP}^{size} - 3N$ to $N_{BWP}^{size} - 2N - 1$ | CS0, CS4 | CS0, CS4 | r = 6, 7 |
| | ... | ... | ... | |
| r = 6, 7 | N PRBs —> 2N to 3N–1 | CS0, CS4 | CS0, CS4 | r = 14, 15 |
| r = 3, 4, 5 | N PRBs —> N to 2N–1 | CS0, CS4, CS8 | CS0, CS4, CS8 | r = 11, 12, 13 |
| r = 0, 1, 2 | N PRBs —> 0 to N–1 | CS0, CS4, CS8 | CS0, CS4, CS8 | r = 8, 9, 10 |

Symbol 12        Symbol 13

FIG. 7

First mapping position   Second mapping position

FIG. 8

First mapping position  Second mapping position

N PRBs $\longrightarrow$

$N_{BWP}^{size} - \text{N}$ to $N_{BWP}^{size} - 1$

N PRBs $\longrightarrow$

$N_{BWP}^{size} - 2\text{N}$ to $N_{BWP}^{size} - \text{N} - 1$

N PRBs $\longrightarrow$

$N_{BWP}^{size} - 3\text{N}$ to $N_{BWP}^{size} - 2\text{N} - 1$

...

N PRBs $\longrightarrow$
2N to 3N–1

N PRBs $\longrightarrow$
N to 2N–1

N PRBs $\longrightarrow$
0 to N–1

secondHopPRB

firstHopPRB

FIG. 9

First mapping position  Second mapping position

| r = 8, 9, 10 | N PRBs —> $N_{BWP}^{size}$ –N to $N_{BWP}^{size}$ –1 | CS0, CS4, CS8 | —CS0, CS4, CS8— | r = 0, 1, 2 |
| r = 11, 12, 13 | N PRBs —> $N_{BWP}^{size}$ –2N to $N_{BWP}^{size}$ –N–1 | CS0, CS4, CS8 | CS0, CS4, CS8 | r = 3, 4, 5 |
| r = 14, 15 | N PRBs —> $N_{BWP}^{size}$ –3N to $N_{BWP}^{size}$ –2N–1 | CS0, CS4 | CS0, CS4 | r = 14, 15 |
| | | ... | ... | |
| r = 6, 7 | N PRBs —> 2N to 3N–1 | CS0, CS4 | CS0, CS4 | r = 6, 7 |
| r = 3, 4, 5 | N PRBs —> N to 2N–1 | CS0, CS4, CS8 | CS0, CS4, CS8 | r = 3, 4, 5 |
| r = 0, 1, 2 | N PRBs —> 0 to N–1 | —CS0, CS4, CS8— | CS0, CS4, CS8 | r = 0, 1, 2 |

Start time unit (first time unit)

FIG. 10A

First mapping position  Second mapping position

r = 14, 15    N PRBs —>  $N_{BWP}^{size}$ –N to $N_{BWP}^{size}$ –1    CS0, CS4 | CS0, CS4    r = 6, 7

r = 8, 9, 10    N PRBs —>  $N_{BWP}^{size}$ –2N to $N_{BWP}^{size}$ –N–1    CS0, CS4, CS8 | —CS0, CS4, CS8—    r = 0, 1, 2

r = 11, 12, 13    N PRBs —>  $N_{BWP}^{size}$ –3N to $N_{BWP}^{size}$ –2N–1    CS0, CS4, CS8 | CS0, CS4, CS8    r = 3, 4, 5

...    ...    ...

r = 3, 4, 5    N PRBs —>  2N to 3N–1    CS0, CS4, CS8 | CS0, CS4, CS8    r = 11, 12, 13

r = 0, 1, 2    N PRBs —>  N to 2N–1    —CS0, CS4, CS8— | CS0, CS4, CS8    r = 8, 9, 10

r = 6, 7    N PRBs —>  0 to N–1    CS0, CS4 | CS0, CS4    r = 14, 15

Second time unit

FIG. 10B

First mapping position  Second mapping position

$r = 11, 12, 13$  N PRBs $\longrightarrow$ $N_{BWP}^{size}$ −N to $N_{BWP}^{size}$ −1 | CS0, CS4, CS8 | CS0, CS4, CS8 | $r = 3, 4, 5$

$r = 14, 15$  N PRBs $\longrightarrow$ $N_{BWP}^{size}$ −2N to $N_{BWP}^{size}$ −N−1 | CS0, CS4 | CS0, CS4 | $r = 6, 7$

$r = 8, 9, 10$  N PRBs $\longrightarrow$ $N_{BWP}^{size}$ −3N to $N_{BWP}^{size}$ −2N−1 | CS0, CS4, CS8 | CS0, CS4, CS8 | $r = 0, 1, 2$

...  ...  ...

$r = 0, 1, 2$  N PRBs $\longrightarrow$ 2N to 3N−1 | CS0, CS4, CS8 | CS0, CS4, CS8 | $r = 8, 9, 10$

$r = 6, 7$  N PRBs $\longrightarrow$ N to 2N−1 | CS0, CS4 | CS0, CS4 | $r = 14, 15$

$r = 3, 4, 5$  N PRBs $\longrightarrow$ 0 to N−1 | CS0, CS4, CS8 | CS0, CS4, CS8 | $r = 11, 12, 13$

Third time unit

FIG. 10C

First mapping position  Second mapping position

$r = 8, 9, 10$  N PRBs —>
$N_{BWP}^{size} -N$ to $N_{BWP}^{size} -1$

| CS0, CS4, CS8 | —CS0, CS4, CS8— | $r = 0, 1, 2$ |

$r = 11, 12, 13$  N PRBs —>
$N_{BWP}^{size} -2N$ to $N_{BWP}^{size} -N-1$

| CS0, CS4, CS8 | CS0, CS4, CS8 | $r = 3, 4, 5$ |

$r = 14, 15$  N PRBs —>
$N_{BWP}^{size} -3N$ to $N_{BWP}^{size} -2N-1$

| CS0, CS4 | CS0, CS4 | $r = 14, 15$ |

| ... | ... | ... |

$r = 6, 7$  N PRBs —>
2N to 3N-1

| CS0, CS4 | CS0, CS4 | $r = 6, 7$ |

$r = 3, 4, 5$  N PRBs —>
N to 2N-1

| CS0, CS4, CS8 | CS0, CS4, CS8 | $r = 3, 4, 5$ |

$r = 0, 1, 2$  N PRBs —>
0 to N-1

| —CS0, CS4, CS8— | CS0, CS4, CS8 | $r = 0, 1, 2$ |

Start time unit (first time unit)

FIG. 11A

First mapping position  Second mapping position

r = 11, 12, 13  N PRBs —> $N_{BWP}^{size}$ –N to $N_{BWP}^{size}$ –1  | CS0, CS4, CS8 | CS0, CS4, CS8 | r = 3, 4, 5

r = 14, 15  N PRBs —> $N_{BWP}^{size}$ –2N to $N_{BWP}^{size}$ –N–1  | CS0, CS4 | CS0, CS4 | r = 6, 7

r = 8, 9, 10  N PRBs —> $N_{BWP}^{size}$ –3N to $N_{BWP}^{size}$ –2N–1  | CS0, CS4, CS8 | —CS0, CS4, CS8— | r = 0, 1, 2

...  ...  ...

r = 0, 1, 2  N PRBs —> 2N to 3N–1  | —CS0, CS4, CS8— | CS0, CS4, CS8 | r = 8, 9, 10

r = 6, 7  N PRBs —> N to 2N–1  | CS0, CS4 | CS0, CS4 | r = 14, 15

r = 3, 4, 5  N PRBs —> 0 to N–1  | CS0, CS4, CS8 | CS0, CS4, CS8 | r = 11, 12, 13

Second time unit

FIG. 11B

First mapping position   Second mapping position

r = 14, 15    N PRBs —>
$N_{BWP}^{size}$ –N to $N_{BWP}^{size}$ –1    | CS0, CS4 | CS0, CS4 |    r = 6, 7

r = 8, 9, 10    N PRBs —>
$N_{BWP}^{size}$ –2N to $N_{BWP}^{size}$ –N–1    | CS0, CS4, CS8 | —CS0, CS4, CS8— |    r = 0, 1, 2

r = 11, 12, 13    N PRBs —>
$N_{BWP}^{size}$ –3N to $N_{BWP}^{size}$ –2N–1    | CS0, CS4, CS8 | CS0, CS4, CS8 |    r = 3, 4, 5

...    | ... | ... |

r = 3, 4, 5    N PRBs —>
2N to 3N–1    | CS0, CS4, CS8 | CS0, CS4, CS8 |    r = 11, 12, 13

r = 0, 1, 2    N PRBs —>
N to 2N–1    | —CS0, CS4, CS8— | CS0, CS4, CS8 |    r = 8, 9, 10

r = 6, 7    N PRBs —>
0 to N–1    | CS0, CS4 | CS0, CS4 |    r = 14, 15

Third time unit

FIG. 11C

First mapping position   Second mapping position

| | | |
|---|---|---|
| r = 8, 9, 10<br>N PRBs —><br>$N_{BWP}^{size}$ –N to $N_{BWP}^{size}$ –1 | CS0, CS4, CS8 | —CS0, CS4, CS8— r = 0, 1, 2 |
| r = 11, 12, 13<br>N PRBs —><br>$N_{BWP}^{size}$ –2N to $N_{BWP}^{size}$ –N–1 | CS0, CS4, CS8 | CS0, CS4 r = 6, 7 |
| r = 14, 15<br>N PRBs —><br>$N_{BWP}^{size}$ –3N to $N_{BWP}^{size}$ –2N–1 | CS0, CS4 | CS0, CS4, CS8 r = 3, 4, 5 |
| ... | ... | ... |
| r = 6, 7<br>N PRBs —><br>2N to 3N–1 | CS0, CS4 | CS0, CS4, CS8 r = 11, 12, 13 |
| r = 3, 4, 5<br>N PRBs —><br>N to 2N–1 | CS0, CS4, CS8 | CS0, CS4 r = 14, 15 |
| r = 0, 1, 2<br>N PRBs —><br>0 to N–1 | —CS0, CS4, CS8— | CS0, CS4, CS8 r = 8, 9, 10 |

Start time unit (first time unit)

FIG. 12A

First mapping position  Second mapping position

$r = 14, 15$  N PRBs —>
$N_{BWP}^{size} - N$ to $N_{BWP}^{size} - 1$

CS0, CS4    CS0, CS4, CS8   $r = 3, 4, 5$

$r = 8, 9, 10$  N PRBs —>
$N_{BWP}^{size} - 2N$ to $N_{BWP}^{size} - N - 1$

CS0, CS4, CS8   —CS0, CS4, CS8—   $r = 0, 1, 2$

$r = 11, 12, 13$  N PRBs —>
$N_{BWP}^{size} - 3N$ to $N_{BWP}^{size} - 2N - 1$

CS0, CS4, CS8    CS0, CS4   $r = 6, 7$

...    ...    ...

$r = 3, 4, 5$  N PRBs —>
2N to 3N–1

CS0, CS4, CS8    CS0, CS4   $r = 14, 15$

$r = 0, 1, 2$  N PRBs —>
N to 2N–1

—CS0, CS4, CS8—   CS0, CS4, CS8   $r = 8, 9, 10$

$r = 6, 7$  N PRBs —>
0 to N–1

CS0, CS4    CS0, CS4, CS8   $r = 11, 12, 13$

Second time unit

FIG. 12B

First mapping position  Second mapping position

| $r = 11, 12, 13$ | N PRBs $\longrightarrow$ $N_{BWP}^{size} -N$ to $N_{BWP}^{size} -1$ | CS0, CS4, CS8 | CS0, CS4 | $r = 6, 7$ |
| $r = 14, 15$ | N PRBs $\longrightarrow$ $N_{BWP}^{size} -2N$ to $N_{BWP}^{size} -N-1$ | CS0, CS4 | CS0, CS4, CS8 | $r = 3, 4, 5$ |
| $r = 8, 9, 10$ | N PRBs $\longrightarrow$ $N_{BWP}^{size} -3N$ to $N_{BWP}^{size} -2N-1$ | CS0, CS4, CS8 | CS0, CS4, CS8 | $r = 0, 1, 2$ |
| | ... | ... | ... | |
| $r = 0, 1, 2$ | N PRBs $\longrightarrow$ 2N to 3N–1 | CS0, CS4, CS8 | CS0, CS4, CS8 | $r = 8, 9, 10$ |
| $r = 6, 7$ | N PRBs $\longrightarrow$ N to 2N–1 | CS0, CS4 | CS0, CS4, CS8 | $r = 11, 12, 13$ |
| $r = 3, 4, 5$ | N PRBs $\longrightarrow$ 0 to N–1 | CS0, CS4, CS8 | CS0, CS4 | $r = 14, 15$ |

Third time unit

FIG. 12C

First mapping position  Second mapping position

| | First mapping position | Second mapping position | |
|---|---|---|---|
| r = 8, 9, 10   N PRBs —>   $N_{BWP}^{size} -N$ to $N_{BWP}^{size} -1$ | CS0, CS4, CS8 | —CS0, CS4, CS8— | r = 0, 1, 2 |
| r = 11, 12, 13   N PRBs —>   $N_{BWP}^{size} -2N$ to $N_{BWP}^{size} -N-1$ | CS0, CS4, CS8 | CS0, CS4 | r = 6, 7 |
| r = 14, 15   N PRBs —>   $N_{BWP}^{size} -3N$ to $N_{BWP}^{size} -2N-1$ | CS0, CS4 | CS0, CS4, CS8 | r = 3, 4, 5 |
| | ... | ... | |
| r = 6, 7   N PRBs —>   2N to 3N–1 | CS0, CS4 | CS0, CS4, CS8 | r = 11, 12, 13 |
| r = 3, 4, 5   N PRBs —>   N to 2N–1 | CS0, CS4, CS8 | CS0, CS4 | r = 14, 15 |
| r = 0, 1, 2   N PRBs —>   0 to N–1 | —CS0, CS4, CS8— | CS0, CS4, CS8 | r = 8, 9, 10 |

Start time unit (first time unit)

FIG. 13A

First mapping position  Second mapping position

$r = 11, 12, 13$  $N_{BWP}^{size}$–N to $N_{BWP}^{size}$ –1  N PRBs —>

CS0, CS4, CS8  CS0, CS4  $r = 6, 7$

$r = 14, 15$  $N_{BWP}^{size}$ –2N to $N_{BWP}^{size}$ –N–1  N PRBs —>

CS0, CS4  CS0, CS4, CS8  $r = 3, 4, 5$

$r = 8, 9, 10$  $N_{BWP}^{size}$ –3N to $N_{BWP}^{size}$ –2N–1  N PRBs —>

CS0, CS4, CS8  —CS0, CS4, CS8—  $r = 0, 1, 2$

...  ...  ...

$r = 0, 1, 2$  N PRBs —> 2N to 3N–1

—CS0, CS4, CS8—  CS0, CS4, CS8  $r = 8, 9, 10$

$r = 6, 7$  N PRBs —> N to 2N–1

CS0, CS4  CS0, CS4, CS8  $r = 11, 12, 13$

$r = 3, 4, 5$  N PRBs —> 0 to N–1

CS0, CS4, CS8  CS0, CS4  $r = 14, 15$

Second time unit

FIG. 13B

First mapping position  Second mapping position

r = 14, 15  $N\,PRBs \longrightarrow$ $N_{BWP}^{size}$ –N to $N_{BWP}^{size}$ –1   | CS0, CS4 | CS0, CS4, CS8 | r = 3, 4, 5

r = 8, 9, 10  $N\,PRBs \longrightarrow$ $N_{BWP}^{size}$ –2N to $N_{BWP}^{size}$ –N–1   | CS0, CS4, CS8 | —CS0, CS4, CS8— | r = 0, 1, 2

r = 11, 12, 13  $N\,PRBs \longrightarrow$ $N_{BWP}^{size}$ –3N to $N_{BWP}^{size}$ –2N–1   | CS0, CS4, CS8 | CS0, CS4 | r = 6, 7

...   ...   ...

r = 3, 4, 5  $N\,PRBs \longrightarrow$ 2N to 3N–1   | CS0, CS4, CS8 | CS0, CS4 | r = 14, 15

r = 0, 1, 2  $N\,PRBs \longrightarrow$ N to 2N–1   | —CS0, CS4, CS8— | CS0, CS4, CS8 | r = 8, 9, 10

r = 6, 7  $N\,PRBs \longrightarrow$ 0 to N–1   | CS0, CS4 | CS0, CS4, CS8 | r = 11, 12, 13

Third time unit

FIG. 13C

First mapping position   Second mapping position

| | | First mapping position | Second mapping position | |
|---|---|---|---|---|
| r = 8, 9, 10 | N PRBs —> $N_{BWP}^{size}$ –N to $N_{BWP}^{size}$ –1 | CS0, CS4, CS8 | —CS0, CS4, CS8— | r = 0, 1, 2 |
| r = 11, 12, 13 | N PRBs —> $N_{BWP}^{size}$ –2N to $N_{BWP}^{size}$ –N–1 | CS0, CS4, CS8 | CS0, CS4 | r = 6, 7 |
| r = 14, 15 | N PRBs —> $N_{BWP}^{size}$ –3N to $N_{BWP}^{size}$ –2N–1 | CS0, CS4 | CS0, CS4, CS8 | r = 3, 4, 5 |
| | ... | ... | ... | |
| r = 6, 7 | N PRBs —> 2N to 3N–1 | CS0, CS4 | CS0, CS4, CS8 | r = 11, 12, 13 |
| r = 3, 4, 5 | N PRBs —> N to 2N–1 | CS0, CS4, CS8 | CS0, CS4 | r = 14, 15 |
| r = 0, 1, 2 | N PRBs —> 0 to N–1 | —CS0, CS4, CS8— | CS0, CS4, CS8 | r = 8, 9, 10 |

Start time unit (first time unit)

FIG. 14A

First mapping position  Second mapping position

r = 14, 15   N PRBs —>
$N_{BWP}^{size}$ –N to $N_{BWP}^{size}$ –1

CS0, CS4 | CS0, CS4   r = 6, 7

r = 8, 9, 10   N PRBs —>
$N_{BWP}^{size}$ –2N to $N_{BWP}^{size}$ –N–1

CS0, CS4, CS8 | CS0, CS4, CS8   r = 3, 4, 5

r = 11, 12, 13   N PRBs —>
$N_{BWP}^{size}$ –3N to $N_{BWP}^{size}$ –2N–1

CS0, CS4, CS8 | —CS0, CS4, CS8—   r = 0, 1, 2

...   ...   ...

r = 3, 4, 5   N PRBs —>
2N to 3N–1

CS0, CS4, CS8 | CS0, CS4, CS8   r = 8, 9, 10

r = 0, 1, 2   N PRBs —>
N to 2N–1

—CS0, CS4, CS8— | CS0, CS4, CS8   r = 11, 12, 13

r = 6, 7   N PRBs —>
0 to N–1

CS0, CS4 | CS0, CS4   r = 14, 15

Second time unit

FIG. 14B

First mapping position   Second mapping position

$r = 11, 12, 13$    N PRBs —>
$N_{BWP}^{size}$ –N to $N_{BWP}^{size}$ –1

CS0, CS4, CS8 | CS0, CS4, CS8 | $r = 3, 4, 5$

$r = 14, 15$    N PRBs —>
$N_{BWP}^{size}$ –2N to $N_{BWP}^{size}$ –N–1

CS0, CS4 | —CS0, CS4, CS8— | $r = 0, 1, 2$

$r = 8, 9, 10$    N PRBs —>
$N_{BWP}^{size}$ –3N to $N_{BWP}^{size}$ –2N–1

CS0, CS4, CS8 | CS0, CS4 | $r = 6, 7$

...  |  ...  |  ...

$r = 0, 1, 2$    N PRBs —>
2N to 3N–1

—CS0, CS4, CS8— | CS0, CS4 | $r = 14, 15$

$r = 6, 7$    N PRBs —>
N to 2N–1

CS0, CS4 | CS0, CS4, CS8 | $r = 8, 9, 10$

$r = 3, 4, 5$    N PRBs —>
0 to N–1

CS0, CS4, CS8 | CS0, CS4, CS8 | $r = 11, 12, 13$

Third time unit

FIG. 14C

First mapping position  Second mapping position

r = 8, 9, 10    N PRBs —>
$N_{BWP}^{size}$ –N to $N_{BWP}^{size}$ –1    CS0, CS4, CS8    —CS0, CS4, CS8—    r = 0, 1, 2

r = 11, 12, 13    N PRBs —>
$N_{BWP}^{size}$ –2N to $N_{BWP}^{size}$ –N–1    CS0, CS4, CS8    CS0, CS4    r = 6, 7

r = 14, 15    N PRBs —>
$N_{BWP}^{size}$ –3N to $N_{BWP}^{size}$ –2N–1    CS0, CS4    CS0, CS4, CS8    r = 3, 4, 5

...    ...    ...

r = 6, 7    N PRBs —>
2N to 3N–1    CS0, CS4    CS0, CS4, CS8    r = 11, 12, 13

r = 3, 4, 5    N PRBs —>
N to 2N–1    CS0, CS4, CS8    CS0, CS4    r = 14, 15

r = 0, 1, 2    N PRBs —>
0 to N–1    —CS0, CS4, CS8—    CS0, CS4, CS8    r = 8, 9, 10

Start time unit (first time unit)

FIG. 15A

First mapping position  Second mapping position

r = 11, 12, 13

N PRBs —>

$N_{BWP}^{size}$ −N to $N_{BWP}^{size}$ −1

| CS0, CS4, CS8 | CS0, CS4, CS8 | r = 3, 4, 5 |

r = 14, 15

N PRBs —>

$N_{BWP}^{size}$ −2N to $N_{BWP}^{size}$ −N−1

| CS0, CS4 | —CS0, CS4, CS8— | r = 0, 1, 2 |

r = 8, 9, 10

N PRBs —>

$N_{BWP}^{size}$ −3N to $N_{BWP}^{size}$ −2N−1

| CS0, CS4, CS8 | CS0, CS4 | r = 6, 7 |

| ... | ... | ... |

r = 0, 1, 2

N PRBs —>
2N to 3N−1

| —CS0, CS4, CS8— | CS0, CS4 | r = 14, 15 |

r = 6, 7

N PRBs —>
N to 2N−1

| CS0, CS4 | CS0, CS4, CS8 | r = 8, 9, 10 |

r = 3, 4, 5

N PRBs —>
0 to N−1

| CS0, CS4, CS8 | CS0, CS4, CS8 | r = 11, 12, 13 |

Second time unit

FIG. 15B

First mapping position  Second mapping position

$r = 14, 15$ — N PRBs —> $N_{BWP}^{size} -N$ to $N_{BWP}^{size} -1$ | CS0, CS4 | CS0, CS4 | $r = 6, 7$

$r = 8, 9, 10$ — N PRBs —> $N_{BWP}^{size} -2N$ to $N_{BWP}^{size} -N-1$ | CS0, CS4, CS8 | CS0, CS4, CS8 | $r = 3, 4, 5$

$r = 11, 12, 13$ — N PRBs —> $N_{BWP}^{size} -3N$ to $N_{BWP}^{size} -2N-1$ | CS0, CS4, CS8 | CS0, CS4, CS8 | $r = 0, 1, 2$

... | ... | ...

$r = 3, 4, 5$ — N PRBs —> 2N to 3N–1 | CS0, CS4, CS8 | CS0, CS4, CS8 | $r = 8, 9, 10$

$r = 0, 1, 2$ — N PRBs —> N to 2N–1 | CS0, CS4, CS8 | CS0, CS4, CS8 | $r = 11, 12, 13$

$r = 6, 7$ — N PRBs —> 0 to N–1 | CS0, CS4 | CS0, CS4 | $r = 14, 15$

Third time unit

FIG. 15C

First mapping position  Second mapping position

N PRBs —>
$N_{BWP}^{size} - N$ to $N_{BWP}^{size} - 1$

N PRBs —>
$N_{BWP}^{size} - 2N$ to $N_{BWP}^{size} - N-1$

N PRBs —>
$N_{BWP}^{size} - 3N$ to $N_{BWP}^{size} - 2N-1$

| | |
|---|---|
| | |
| | |
| | secondHopPRB |
| | |
| ... | ... |
| | |
| | |
| firstHopPRB | |
| | |

...

N PRBs —>
2N to 3N–1

N PRBs —>
N to 2N–1

N PRBs —>
0 to N–1

Start time unit (time unit 1)

FIG. 16A

First mapping position   Second mapping position

N PRBs —>
$N^{size}_{BWP}$ –N to $N^{size}_{BWP}$ –1

N PRBs —>
$N^{size}_{BWP}$ –2N to $N^{size}_{BWP}$ –N–1

secondHopPRB

N PRBs —>
$N^{size}_{BWP}$ –3N to $N^{size}_{BWP}$ –2N–1

...   ...   ...

N PRBs —>
2N to 3N–1

firstHopPRB

N PRBs —>
N to 2N–1

N PRBs —>
0 to N–1

Time unit 2

FIG. 16B

First mapping position  Second mapping position

N PRBs —>
$N_{BWP}^{size}$ −N to $N_{BWP}^{size}$ −1

N PRBs —>
$N_{BWP}^{size}$ −2N to $N_{BWP}^{size}$ −N−1

N PRBs —>
$N_{BWP}^{size}$ −3N to $N_{BWP}^{size}$ −2N−1

...

N PRBs —>
3N to 4N−1

N PRBs —>
2N to 3N−1

N PRBs —>
N to 2N−1

N PRBs —>
0 to N−1

| | secondHopPRB |
| | |
| | |
| | |
| ... | ... |
| firstHopPRB | |
| | |
| | |
| | |

Time unit 3

FIG. 16C

Communication apparatus 1700

Receiving unit — 1701

Sending unit — 1702

FIG. 17

Communication apparatus 1800

Sending unit  — 1801

Receiving unit — 1802

FIG. 18

1900

Processor — 1901

Instructions — 1903

Memory — 1902

Instructions — 1904

Transceiver — 1905

Antenna — 1906

FIG. 19

Antenna

Control circuit

2001

Memory ⇔ Processor

2002

2000

Input/Output apparatus

FIG. 20

## INTERNATIONAL SEARCH REPORT

| International application No. |
| --- |
| **PCT/CN2022/099639** |

| A. | CLASSIFICATION OF SUBJECT MATTER |
| --- | --- |
| | H04L 5/00(2006.01)i;  H04W 72/04(2009.01)n |

According to International Patent Classification (IPC) or to both national classification and IPC

| B. | FIELDS SEARCHED |
| --- | --- |

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, JPTXT, 3GPP, IEEE, IETF, EPONPL: 上行控制信道, 频域, 时长, 位置, 物理资源块, 循环移位, 偏移, 索引, 跳频, 距离, 部分带宽, PUCCH, frequency, time, position, PRB, cyclic shift, offset, index, frequency hopping, distance, BWP

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111869289 A (LG ELECTRONICS INC.) 30 October 2020 (2020-10-30)<br>see description, paragraphs [0009]-[0023] and [0120]-[0311], and figures 11-13 | 1-3, 15-18, 25-27, 39-42, 49-52 |
| A | CN 111869289 A (LG ELECTRONICS INC.) 30 October 2020 (2020-10-30)<br>see description, paragraphs [0009]-[0023] and [0120]-[0311], and figures 11-13 | 4-14, 19-24, 28-38, 43-48 |
| X | ModeratorEricsson. ""FL Summary 2 for [105-e-NR-52-71GHz-02] Email discussion/approval""<br>*3GPP TSG-RAN WG1 Meeting #105-e, R1-2106288*, 28 May 2021 (2021-05-28),<br>see section 5 | 1-3, 15-18, 25-27, 39-42, 49-52 |
| A | ModeratorEricsson. ""FL Summary 2 for [105-e-NR-52-71GHz-02] Email discussion/approval""<br>*3GPP TSG-RAN WG1 Meeting #105-e, R1-2106288*, 28 May 2021 (2021-05-28),<br>see section 5 | 4-14, 19-24, 28-38, 43-48 |
| PX | ModeratorEricsson. ""FL Summary for [106bis-e-NR-52-71GHz-03] Email discussion/approval on enhancements for PUCCH formats 0/1/4""<br>*3GPP TSG-RAN WG1 Meeting #106bis-e, R1-2109436*, 13 October 2021 (2021-10-13),<br>see section 2 | 1-4, 15-18, 25-28, 39-42, 49-52 |

| ☑ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 August 2022** | **31 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/099639** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110034903 A (TELECOMMUNICATIONS TECHNOLOGY RESEARCH INSTITUTE CO., LTD.) 19 July 2019 (2019-07-19)<br>see entire document | 1-52 |
| A | US 2021029731 A1 (INTEL CORP.) 28 January 2021 (2021-01-28)<br>see entire document | 1-52 |

Form PCT/ISA/210 (second sheet) (January 2015)

INTERNATIONAL SEARCH REPORT

Information on patent family members

International application No.

**PCT/CN2022/099639**

| Patent document cited in search report | | | Publication date (day/month/year) | Patent family member(s) | | | Publication date (day/month/year) |
|---|---|---|---|---|---|---|---|
| CN | 111869289 | A | 30 October 2020 | KR | 20200042025 | A | 22 April 2020 |
| | | | | JP | 2020507224 | A | 05 March 2020 |
| | | | | EP | 3537818 | A1 | 11 September 2019 |
| | | | | US | 2019261356 | A1 | 22 August 2019 |
| | | | | KR | 20190086664 | A | 23 July 2019 |
| | | | | US | 2020236672 | A1 | 23 July 2020 |
| | | | | WO | 2019139436 | A1 | 18 July 2019 |
| CN | 110034903 | A | 19 July 2019 | None | | | |
| US | 2021029731 | A1 | 28 January 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110745712
- CN 202111296615X